# EUROPEAN PATENT APPLICATION

(11) **EP 4 804 710 A1**
(43) Date of publication of application: **09.09.2026**
(21) Application number: 24922768.7
(22) Date of filing: 05.02.2024
(51) Int. Cl.: H04W 74/0833

(54) **RANDOM ACCESS CHANNEL TRANSMISSION METHOD AND APPARATUS, DEVICE, MEDIUM, AND PROGRAM PRODUCT**

(71) Applicant: GUANGDONG OPPO MOBILE TELECOMMUNICATIONS CORP., LTD., Dongguan, Guangdong 523860 (CN)
(72) Inventor: ZHANG, Yi, Dongguan, Guangdong 523860 (CN); LIN, Yanan, Dongguan, Guangdong 523860 (CN)
(74) Representative: RGTH
(86) International application number: PCT/CN2024/076176
(87) International publication number: WO 2025/166522

(57) **Abstract**

The present application relates to the field of communications, and discloses a random access channel transmission method and apparatus, a device, a medium, and a program product. The method comprises: on the basis of a correlation parameter when a random access channel is transmitted in a first-type time domain resource and/or a correlation parameter when the random access channel is transmitted in a second-type time domain resource, transmitting the random access channel. According to the method provided in the present application, for different types of time domain resources, a terminal device can determine correlation parameters for the random access channel transmission for different time domain resource types, thereby achieving differentiated design for the different time domain resource types.

## Description

### TECHNICAL FILED

The present disclosure relates to the field of communications, and in particular, to a transmission method and apparatus for a random access channel, a device, a medium, and a program product.

### BACKGROUND

Random access is a necessary process for establishing a wireless link between a terminal device and a network device. The terminal device needs to determine related parameters for transmitting a random access channel.

However, as a duplex mode in a new radio (NR) system is undergoing continuous design optimization, how to design a random access channel transmission method to implement transmission for the random access channel based on different duplex modes is an urgent problem that needs to be solved currently.

### SUMMARY

Embodiments of the present disclosure provide a transmission method and apparatus for a random access channel, a device, a medium, and a program product. The technical solutions are as follows.

According to an aspect of the present disclosure, a transmission method for a random access channel is provided, the method is performed by a terminal device, and the method includes:
transmitting the random access channel according to a related parameter for the random access channel upon the random access channel being transmitted in a first-type time domain resource and/or a related parameter for the random access channel upon the random access channel being transmitted in a second-type time domain resource.

According to an aspect of the present disclosure, a transmission method for a random access channel is provided, the method is performed by a network device, and the method includes:
receiving the random access channel, where the random access channel is transmitted by a terminal device according to a related parameter for the random access channel upon the random access channel being transmitted in a first-type time domain resource and/or a related parameter for the random access channel upon the random access channel being transmitted in a second-type time domain resource.

According to an aspect of the present disclosure, a transmission method for a random access channel is provided, the method is performed by a terminal device, and the method includes:
receiving at least one of a first configuration, a second configuration, and a third configuration, where the first configuration, the second configuration, and the third configuration are used to configure related parameters for transmitting the random access channel, the first configuration corresponds to a first-type time domain resource, the second configuration corresponds to a second-type time domain resource, and the third configuration corresponds to the first-type time domain resource and the second-type time domain resource.

According to an aspect of the present disclosure, a transmission method for a random access channel is provided, the method is performed by a terminal device, and the method includes:
transmitting a random access channel on a valid random access channel transmission occasion;
where a random access channel transmission occasion is valid in the following situations: the random access channel transmission occasion is within an uplink symbol; or the random access channel transmission occasion is within the first-type time domain resource, and the random access channel transmission occasion is located within a first frequency domain bandwidth.

According to an aspect of the present disclosure, a transmission apparatus for a random access channel is provided, the apparatus includes:
a first transmitting module, configured to transmit the random access channel according to a related parameter for the random access channel upon the random access channel being transmitted in a first-type time domain resource and/or a related parameter for the random access channel upon the random access channel being transmitted in a second-type time domain resource.

According to an aspect of the present disclosure, a transmission apparatus for a random access channel is provided, the apparatus includes:
a second receiving module, configured to receive the random access channel, where the random access channel is transmitted by a terminal device according to a related parameter for the random access channel upon the random access channel being transmitted in a first-type time domain resource and/or a related parameter for the random access channel upon the random access channel being transmitted in a second-type time domain resource.

According to an aspect of the present disclosure, a transmission apparatus for a random access channel is provided, the apparatus includes:
a third receiving module, configured to receive at least one of a first configuration, a second configuration, and a third configuration, where the first configuration, the second configuration, and the third configuration are used to configure related parameters for transmitting the random access channel, the first configuration corresponds to a first-type time domain resource, the second configuration corresponds to a second-type time domain resource, and the third configuration corresponds to the first-type time domain resource and the second-type time domain resource.

According to an aspect of the present disclosure, a transmission apparatus for a random access channel is provided, the apparatus includes:
a transmission module, configured to transmit a random access channel on a valid random access channel transmission occasion;
where a random access channel transmission occasion is valid in the following situations: the random access channel transmission occasion is within an uplink symbol; or the random access channel transmission occasion is within the first-type time domain resource, and the random access channel transmission occasion is located within a first frequency domain bandwidth.

According to an aspect of the present disclosure, a terminal device is provided, and the terminal device includes:
a processor; a transceiver connected to the processor; a memory configured to store executable instructions for the processor;
where the processor is configured to load and execute the executable instructions to implement the transmission method for the random access channel as described above.

According to an aspect of the present disclosure, a network device is provided, and the network device includes:
a processor; a transceiver connected to the processor; a memory configured to store executable instructions for the processor;
where the processor is configured to load and execute the executable instructions to implement the transmission method for the random access channel as described above.

According to an aspect of the present disclosure, a computer-readable storage medium is provided, the computer-readable storage medium stores at least one piece of program, the at least one piece of program is loaded and executed by a processor to implement the transmission method for the random access channel as described above.

According to an aspect of the present disclosure, a chip is provided, the chip includes a programmable logic circuit and/or program instructions, and in response to that the chip runs on a terminal device or a network device, the chip is configured to implement the transmission method for the random access channel as described above.

According to an aspect of the present disclosure, a computer program product is provided, the computer program product includes computer instructions, and the computer instructions are stored in a computer-readable storage medium, and a processor acquires the computer instructions from the computer-readable storage medium, and the processor executes the computer instructions to implement the transmission method for the random access channel as described above.

The technical solutions provided in the embodiments of the present disclosure at least includes the following beneficial effects:
the terminal device transmits the random access channel according to the related parameter for the random access channel upon the random access channel being transmitted in the first-type time domain resource and/or the related parameter for the random access channel upon the random access channel being transmitted in the second-type time domain resource. That is, the terminal device may determine, for different types of time domain resources, the related parameters used for transmission under respective types of time domain resources, and transmit the random access channel according to a corresponding related parameter. Since number, positions, sizes, frequency domain bandwidths, etc., of available uplink resources in different types of time domain resources are different, interference suffered by the terminal device upon performing transmission using time domain resources among different types of time domain resources may be different, and therefore link qualities corresponding to different types of time domain resources are also different. The terminal device determines different related parameters used for transmission for different types of time domain resources, thus improving the success rate of transmission.

### BRIEF DESCRIPTION OF THE DRAWINGS

In order to illustrate technical solutions in the embodiments of the present disclosure more clearly, the accompanying drawings needed to be used in descriptions for the embodiments will be introduced briefly. Obviously, the accompanying drawings in the description below are merely a portion of accompanying drawings of some embodiments of the present disclosure, and for a person of ordinary skill in the art may obtain other accompanying drawings according to these accompanying drawings without paying any creative effort.
FIG. 1 shows a schematic diagram of a subband non-overlapping full-duplex provided in relevant arts.
FIG. 2 shows a schematic diagram of a frequency domain resource configuration for a physical random access channel (PRACH) provided in relevant arts.
FIG. 3 shows a schematic diagram of PRACH power control provided in relevant arts.
FIG. 4 shows a schematic diagram of a mobile communication system provided in an exemplary embodiment of the present disclosure.
FIG. 5 shows a flowchart of a transmission method for a random access channel provided in an exemplary embodiment of the present disclosure.
FIG. 6 shows a schematic diagram of a transmission method for a random access channel provided in an exemplary embodiment of the present disclosure.
FIG. 7 shows a schematic diagram of a transmission method for a random access channel provided in an exemplary embodiment of the present disclosure.
FIG. 8 shows a schematic diagram of a transmission method for a random access channel provided in an exemplary embodiment of the present disclosure.
FIG. 9 shows a schematic diagram of a transmission method for a random access channel provided in an exemplary embodiment of the present disclosure.
FIG. 10 shows a schematic diagram of a transmission method for a random access channel provided in an exemplary embodiment of the present disclosure.
FIG. 11 shows a schematic diagram of a transmission method for a random access channel provided in an exemplary embodiment of the present disclosure.
FIG. 12 shows a schematic diagram of a transmission method for a random access channel provided in an exemplary embodiment of the present disclosure.
FIG. 13 shows a schematic diagram of a transmission method for a random access channel provided in an exemplary embodiment of the present disclosure.
FIG. 14 shows a schematic diagram of a transmission method for a random access channel provided in an exemplary embodiment of the present disclosure.
FIG. 15 shows a schematic diagram of a transmission method for a random access channel provided in an exemplary embodiment of the present disclosure.
FIG. 16 shows a schematic diagram of a transmission method for a random access channel provided in an exemplary embodiment of the present disclosure.
FIG. 17 shows a flowchart of a transmission method for a random access channel provided in an exemplary embodiment of the present disclosure.
FIG. 18 shows a flowchart of a transmission method for a random access channel provided in an exemplary embodiment of the present disclosure.
FIG. 19 shows a flowchart of a transmission method for a random access channel provided in an exemplary embodiment of the present disclosure.
FIG. 20 shows a structural block diagram of a transmission apparatus for a random access channel provided in an exemplary embodiment of the present disclosure.
FIG. 21 shows a structural block diagram of a transmission apparatus for a random access channel provided in an exemplary embodiment of the present disclosure.
FIG. 22 shows a structural block diagram of a transmission apparatus for a random access channel provided in an exemplary embodiment of the present disclosure.
FIG. 23 shows a structural block diagram of a transmission apparatus for a random access channel provided in an exemplary embodiment of the present disclosure.
FIG. 24 shows a structural schematic diagram of a terminal device provided in an exemplary embodiment of the present disclosure.
FIG. 25 shows a structural schematic diagram of a network device provided in an exemplary embodiment of the present disclosure.

### DETAILED DESCRIPTION

In order to make the purpose, technical solutions, and advantages of the present disclosure clearer, the implementations of the present disclosure will be further described in detail below with reference to the accompanying drawings. Exemplary embodiments will be described in detail here, and examples thereof are shown in the accompanying drawings. When the following description refers to the accompanying drawings, unless otherwise indicated, same numerals in different accompanying drawings represent the same or similar elements. The implementations described in the following exemplary embodiments do not represent all implementations consistent with the present disclosure. Rather, they are merely examples of apparatus and methods consistent with some aspects of the present disclosure as described in detail in the appended claims.

The terms used in the present disclosure are only for the purpose of describing specific embodiments and are not intended to limit the present disclosure. As used in the present disclosure and the appended claims, the singular forms "a", "an", and "the" are intended to include plural forms as well, unless the context clearly indicates otherwise. It should also be understood that the term "and/or" used herein refers to and includes any and all possible combinations of one or more of the associated listed items.

It should be understood that, although the terms "first", "second", "third", etc., may be used in the present disclosure to describe various information, such information should not be limited to these terms. These terms are only used to distinguish one type of information from another. For example, without departing from the scope of the present disclosure, first information may also be referred to as second information, and similarly, second information may also be referred to as first information. Depending on the context, the term "if" as used herein may be interpreted as "when" or "upon" or "in response to determining...".

The technical solutions described in some embodiments of the present disclosure may be applicable to various communication systems, for example: a global system for mobile communications (GSM) system, a code division multiple access (CDMA) system, a wideband code division multiple access (WCDMA) system, a general packet radio service (GPRS), a long term evolution (LTE) system, an advanced long term evolution (LTE-A) system, a new radio (NR) system, an evolution system of the NR system, an LTE-based access to unlicensed spectrum (LTE-U) system, an NR-based access to unlicensed spectrum (NR-U) system, a non-terrestrial networks (NTN) system, a universal mobile telecommunication system (UMTS), a wireless local area networks (WLAN), a wireless fidelity (WiFi), a 5th-generation (5G) system, a cellular Internet of Things system, a cellular passive Internet of Things system, and may also be applicable to subsequent evolution systems of the 5G NR system, and may also be applicable to 6G and subsequent evolution systems.

It should be understood that, in some embodiments of the present disclosure, "5G" may also be referred to as "5G NR" or "NR".

It should be understood that, in the description of the embodiments of the present disclosure, the term "corresponding" may mean that there is a direct correspondence or indirect correspondence between two objects, may also mean that there is an association relationship between the two objects, or may mean relationships such as "indicating" and "being indicated", "configuring" and "being configured", etc.

In the embodiments of the present disclosure, "predefinition/predefined" may be implemented by pre-storing corresponding codes, tables, or other methods that is capable of being used to indicate related information in a device (for example, including a terminal device and a network device), and the present disclosure does not limit a specific implementation method thereof. For example, the "predefinition/predefined" may refer to what is defined in a protocol.

In the embodiments of the present disclosure, a "protocol" may refer to a standard protocol in the communication field, for example, the standard protocol may include an LTE protocol, an NR protocol, and related protocols used in future communication systems, which is not limited in the present disclosure.

**Next, a subband non-overlapping full-duplex (SBFD) is introduced**.

In order to overcome problems (such as weak uplink coverage, large uplink latency, and insufficient uplink capacity, etc.) caused by less uplink (UL) resource allocation in time division duplexing (TDD) technology, the SBFD technology is proposed. The SBFD technology refers to a technology in which data is capable of transmitted and received simultaneously on different subbands of the same subframe or the same slot or the same symbol. The SBFD technology is mainly used on a network device side, while a terminal device (user equipment (UE)) side still maintains a current state, i.e., only transmitting data or only receiving data in the same subframe/time slot/symbol. The SBFD technology may also be referred to as cross division duplex (XDD) technology.

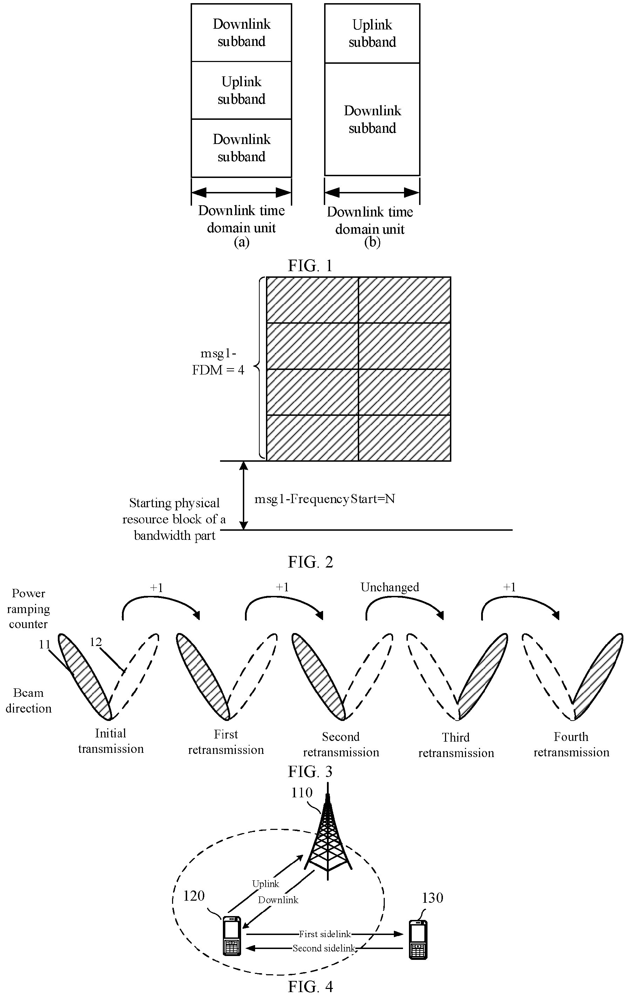

Exemplarily, the SBFD technology is as shown in FIG. 1, where a part of frequency domain resources corresponding to a downlink (DL) time domain unit is configured as an uplink subband. As shown in section (a) in FIG. 1, an intermediate subband of a frequency domain resource corresponding to a downlink time domain unit is configured as an uplink subband, or as shown in section (b) in FIG. 1, an upper subband of a frequency domain resource corresponding to a downlink time domain unit is configured as an uplink subband.

In general, an SBFD operation satisfies the following points:
- SBFD is operated within a TDD carrier.
- An SBFD scheme is designed within a single uplink and downlink BWP (bandwidth part) pair having an aligned central frequency point.
- Within a TDD carrier, there is at most one uplink subband on one SBFD symbol (including a legacy uplink symbol). This one uplink subband may be located in the middle of the TDD carrier or on both sides of the TDD carrier. In addition, the protocol stipulates that uplink transmission may only be limited to a UL subband, and downlink reception may only be limited to a DL subband.

**Next, a physical random access channel (PRACH) is introduced**.

A PRACH related parameteris configured through random access general configuration (RACH-ConfigGeneric), and parameters in RACH-ConfigGeneric are described next from three aspects: time domain resource configuration, frequency domain resource configuration, and power control.

### PRACH time domain resource configuration:

In 5G NR, a time domain resource corresponding to a random access channel is determined according to a PRACH configuration table, where there are three PRACH configuration tables, and the three tables respectively correspond to different frequency bands and frequency band standards: a PRACH configuration table 1 is a PRACH configuration for an FDD (frequency division duplexing) band on FR1 (frequency range 1), a PRACH configuration table 2 is a PRACH configuration for a TDD band on FR1, and a PRACH configuration table 3 is a PRACH configuration for FR2. A terminal device determines, according to a frequency band and a frequency band standard of a cell where it stays, which PRACH configuration table should be used when receiving a PRACH configuration.

Upon configuring a time domain resource corresponding to a cell random access channel for a terminal device, a serial number in a corresponding PRACH configuration table is indicated through a related parameter called random access channel-configuration index (prach-ConfigurationIndex). The terminal obtains PRACH time domain resource configuration information of the cell according to the corresponding PRACH configuration table, where the time domain resource configuration information includes:
1. Format of a PRACH sequence: all long and short sequence formats are configured on FR1, and only short sequence formats are configured on FR2.
2. Configured period and a system frame number: a repetition period of a PRACH transmission occasion and a system frame number where it is located; period configurations of 10ms, 20ms, 40ms, 80ms, and 160ms are supported in NR.
3. Subframe/slot serial number: a serial number of a subframe or a slot index where a PRACH transmission occasion appears in a system frame; on FR1, what is indicated is a subframe number, which is also a serial number of a 15 kHz slot; on FR2, the indication is based on a 60 kHz slot serial number.
4. For a short sequence, how many PRACH slots are in one subframe or one 60 KHz slot are configured; when a random access sequence is configured with a larger subcarrier spacing, there are two PRACH slots in one subframe or one 60 KHz slot, and when an indicated value is 2, both PRACH slots may be used; when one PRACH slot is indicated, a later PRACH slot is used by default.
5. Starting symbol and consecutive times: a starting position and consecutive times of PRACH transmission occasions within a PRACH slot, the consecutive times refer to times of consecutive occurrences. Even with a configuration of the same sequence format, same period, and same slot number, different configurations of starting positions and consecutive frequencies may be provided, enabling more diverse PRACH density configurations.

### PRACH frequency domain resource configuration:

In the frequency domain dimension, configurations of 1, 2, 4 or 8 FDM (frequency division multiplexing) PRACH resources are supported in NR, a PRACH capacity is expanded through a configuration of a related parameter of message 1-frequency division multiplexing (i.e., msg1-FDM) (i.e., a number of PRACH transmission occasions in the frequency domain dimension is determined (i.e., a number of PRACH resources in the frequency domain dimension is determined)). When more than one PRACH resource is configured in the frequency domain dimension, these PRACH resources are continuously distributed in the frequency domain dimension. A network device notifies a terminal device, through the related parameter of message 1-frequency starting (i.e., msg1-FrequencyStart), of an offset of a starting PRB (physical resource block) of a first PRACH transmission occasion in the frequency domain dimension with respect to a starting PRB of a BWP. For example, as shown in FIG. 2, a PRACH transmission occasion in the frequency domain dimension is selected to be obtained through msg1-FDM and msg1-FrequencyStart.

### PRACH power control:

The power control of PRACH adopts an open-loop power control mechanism, and a UE determines the PRACH transmission power based on factors such as a desired received power configured by a network device and a path loss measured from a downlink reference signal:

The terminal determines a PRACH transmitting power through the following formula: ${P}_{PRACH , b , f , c} \left(i\right) = min \left\{{P}_{CMAX , f , c}\left(i\right) , {P}_{PRACH , target , f , c}+{PL}_{b , f , c}\right\} \left[dBm\right]$ where f is a carrier; c is a serving cell; b is a BWP; i is a PRACH transmission occasion; P_{CMAX, f, c} (i) is a maximum output power configured for the UE; P_{PRACH, target, f, c} is a preamble target power; PL_{b, f, c} is a path loss.

A calculation formula for the preamble target power PREAMBLE_RECEIVED_TARGET_POWER is as follows: $\begin{matrix}PREAMBLE_RECEIVED_TARGET_POWER = preambleReceivedTargetPower + DELTA_PRE \\ AMBLE + \left(PREAMBLE_POWER_RAMPING_COUNTER-1\right) \times \\ PREAMBLE_POWER_RAMPING_STEP ;\end{matrix}$ where the preamble received target power (preambleReceivedTargetPower) is configured through signaling, also referred to as a target power level; the preamble delta (DELTA_PREAMBLE) is determined based on at least one of a random access preamble format, a used subcarrier spacing, and a fixed value agreed in a protocol; a retransmission number (PREAMBLE_POWER_RAMPING_COUNTER), also referred to as a preamble power ramping count, is determined according to a power ramping counter and is initialized to 1 at the start of each random access procedure; a power ramping step (PREAMBLE_POWER_RAMPING_STEP), also referred to as a preamble power ramping step, is used for indicating a step size for power ramping.

In a random access procedure, if a UE sends a PRACH but does not receive a RAR (random access response) response from network or does not successfully receive a contention resolution message, then the UE needs to retransmit the PRACH. When multiple transmitting beams are supported for an NR UE, during a retransmission, if a transmitting beam remains unchanged, a PRACH transmission power for the retransmission is ramped based on a PRACH transmission power of a previous transmission, which may be understood as incrementing the retransmission count by 1, or incrementing the power ramping counter by 1, until the random access procedure is successfully completed. However, when a UE switches a transmitting beam, considering interference control during beam switching and random access latency, it is agreed in the protocol that the counter for power ramping remains unchanged. As shown in FIG. 3, a ellipse 11 with slanted lines represents a transmitting beam used for a current transmission, and a ellipse 12 with dotted lines represents a transmitting beam not used for the current transmission. In an initial transmission, a first retransmission, and a second retransmission, the same transmitting beam is used, therefore, during the retransmission, the power ramping counter is incremented by 1; whereas in the third retransmission, the used transmitting beam changes compared to the transmitting beam used in the previous transmission, therefore, in the third retransmission, the power ramping counter remains unchanged; in the fourth retransmission, the used transmitting beam does not change, and the power ramping counter is incremented by 1.

FIG. 4 shows a schematic diagram of a mobile communication system provided in an exemplary embodiment of the present disclosure. The mobile communication system includes a network device 110 and a terminal device 120, and may or may not include a terminal device 130, which is not limited in the present disclosure.

The network device 110 in the present disclosure provides a wireless communication function, and the network device 110 includes, but is not limited to: an evolved Node B (eNB), a radio network controller (RNC), a Node B (NB), a base station controller (BSC), a base transceiver station (BTS), a home base station (e.g., home evolved Node B, or home Node B (HNB)), a baseband unit (BBU), an access point (AP) in a wireless fidelity (Wi-Fi) system, a wireless relay node, a wireless backhaul node, a transmission point (TP) or a transmission and reception Point (TRP), etc., and may also be a Next Generation Node B (gNB) or a transmission point (TRP or TP) in a 5th Generation (5G) mobile communication system, or one or a group of antenna panels (including multiple antenna panels) of a base station in a 5G system, or a network node constituting a gNB or a transmission point, such as a baseband unit (BBU) or a distributed unit (DU), or a base station in a beyond fifth generation (B5G) mobile communication system, a 6th Generation (6G) mobile communication system, etc., or a core network (CN), a fronthaul, a backhaul, a radio access network (RAN), a network slice, etc., or a serving cell , a primary cell (PCell), a primary secondary cell (PSCell), a special cell (SpCell), a secondary cell (SCell), a neighboring cell of a terminal device, etc.

The terminal device 120 in the present disclosure is also referred to as a user equipment (UE), an access terminal, a subscriber unit, a subscriber station, a mobile radio station, a mobile station, a remote station, a remote terminal, a mobile device, a user terminal, a terminal, a wireless communication device, a user agent, or a user apparatus. The terminal includes, but is not limited to: a handheld device, a wearable device, a vehicle-mounted device, and an Internet of Things device, for example: a mobile phone, a tablet computer, an e-book reader, a laptop computer, a desktop computer, a television, a game console, a mobile internet device (MID), an augmented reality (AR) terminal, a virtual reality (VR) terminal, a mixed reality (MR) terminal, an extended reality (XR) terminal, a baffle reality (BR) terminal, a cinematic reality (CR) terminal, a deceive reality (DR) terminal, a wearable device, a handle, an electronic tag, a controller, a wireless terminal in industrial control, a wireless terminal in self driving, a wireless terminal in remote medical, a wireless terminal in smart grid, a wireless terminal in transportation safety, a wireless terminal in smart city, a wireless terminal in smart home, a wireless terminal in remote medical surgery, a cellular phone, a cordless phone, a session initiation protocol (SIP) phone, a wireless local loop (WLL) station, a personal digital assistant (PDA), a set top box (STB), and customer premise equipment (CPE).

In some embodiments, the network device 110 and the terminal device 120 communicate with each other via a certain air interface technology, such as a Uu interface.

Exemplarily, there are two communication scenarios between the network device 110 and the terminal device 120: an uplink communication scenario and a downlink communication scenario. Herein, an uplink communication, or referred to as an uplink transmission, refers to transmitting a signal or data to the network device 110; a downlink communication, or referred to as a downlink transmission, refers to transmitting a signal or data to the terminal device 120.

In some embodiments, the terminal device 120 and the terminal device 130 communicate with each other via a certain air interface technology, such as a PC5 interface.

Exemplarily, there are two communication scenarios between the terminal device 120 and the terminal device 130: a first sidelink communication scenario and a second sidelink communication scenario. Herein, the first sidelink communication refers to the terminal device 120 transmitting a signal to the terminal device 130; the second sidelink communication refers to the terminal device 130 transmitting a signal to the terminal device 120.

In some embodiments, both the terminal device 120 and the terminal device 130 are within a network coverage range and are located in the same cell, or both the terminal device 120 and the terminal device 130 are within the network coverage range but are located in different cells, or the terminal device 120 is within network coverage range but the terminal device 130 is outside the network coverage range.

In some embodiments of the present disclosure, "NR" may also be referred to as a 5G NR system or a 5G system. Herein, a 5G mobile communication system may include non-standalone (NSA) and/or standalone (SA).

The technical solutions provided in the embodiments of the present disclosure may also be applied to machine type communication (MTC) , long term evolution-machine (LTE-M) , a device to device (D2D) network, a machine to machine (M2M) network, an Internet of Things (IoT) network, or other networks. Herein, the IoT network may include, for example, the Vehicle to Everything. Here, communication methods in the Vehicle to Everything system are collectively referred to as Vehicle to X (V2X, where X may represent everything), for example, the V2X may include: vehicle to vehicle (V2V) communication, vehicle to infrastructure (V2I) communication, vehicle to pedestrian (V2P) communication, or vehicle to network (V2N) communication.

The mobile communication system provided in the embodiments of the present disclosure may be applied to, but is not limited to, at least one of the following communication scenarios: an uplink communication scenario, a downlink communication scenario, and a sidelink communication scenario.

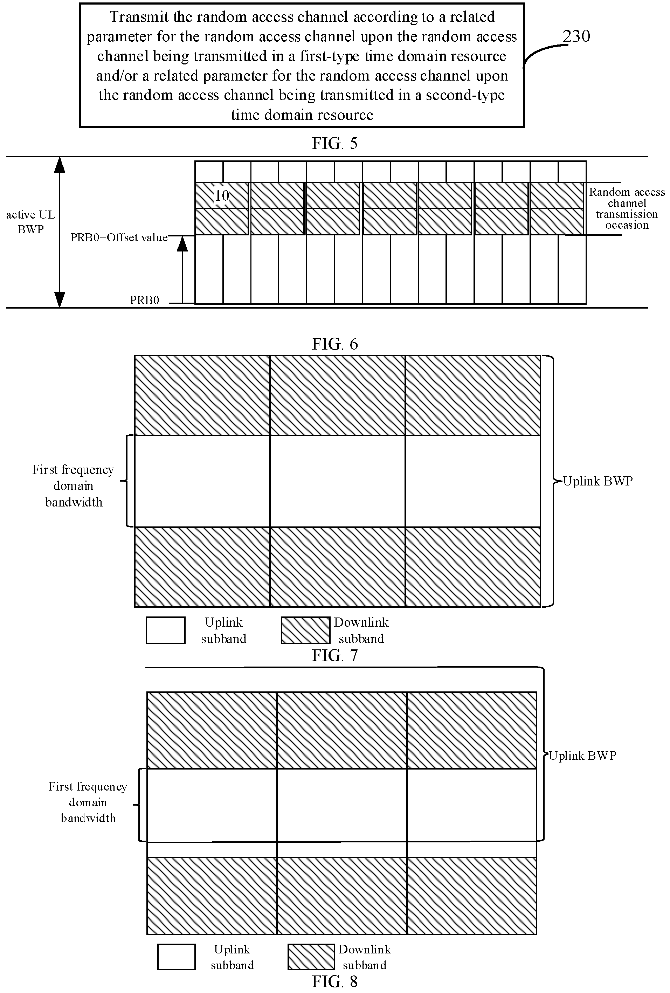

FIG. 5 shows a flowchart of a transmission method for a random access channel provided in an exemplary embodiment of the present disclosure. The method is performed by the above-mentioned terminal device, and the method includes the following step.

**In step 230**, the random access channel is transmitted according to a related parameter for the random access channel upon the random access channel being transmitted in a first-type time domain resource and/or a related parameter for the random access channel upon the random access channel being transmitted in a second-type time domain resource.

In some embodiments, a time domain resource includes at least one of: a symbol, a symbol group, a slot, a sub slot, a frame, and a subframe. In the embodiments of the present disclosure, a specific type of a time domain resource is not limited.

In some embodiments, the first-type time domain resource and the second-type time domain resource may be understood as two different duplex modes, slots, or symbols, etc. Number, positions, sizes, and frequency domain bandwidths of available uplink resources in the first-type time domain resource and the second-type time domain resource are different; or the number, positions, sizes, and frequency domain bandwidths of random access channels in the first-type time domain resource and the second-type time domain resource are different. For example, the first-type time domain resource is an SBFD symbol, and the second-type time domain resource is a non-SBFD symbol. Herein, the SBFD symbol is a symbol including at least one of an uplink subband, a downlink subband, and a guard band, and the non-SBFD symbol is a symbol not including the above subbands.

In some embodiments, a related parameter includes at least one of: a transmitting power; a target power level; a value of a power ramping counter; a value of a random access preamble transmission counter; a maximum number of transmissions for a random access preamble; a power ramping step for the random access channel; a first parameter, where the first parameter is used to indicate a number of random access channel transmission occasions that are frequency division multiplexed in a time unit, for example, a time unit is a time instance; a second parameter, where the second parameter is used to indicate an offset value between a lowest random access channel transmission occasion in frequency domain and a reference point, and the reference point is PRB0 of an uplink BWP, i.e., a starting PRB of the uplink BWP. Herein, the transmitting power is used to indicate how much energy the terminal device may use to transmit the random access channel; the target power level is used to indicate a target power of the random access channel expected by a receiver of the network device; the value of the power ramping counter is used to indicate a number of power ramping times, generally, each time a random access failure occurs, the value of the power ramping counter may be incremented by 1. The random access preamble transmission counter is used to indicate a number of preamble transmissions in a random access procedure, i.e., a number of transmissions of the random access channel; the maximum number of transmissions for a random access preamble is used to indicate a maximum number of transmissions for a preamble in the entire random access procedure, i.e., a maximum number of transmissions for the random access channel; the power ramping step for the random access channel is used to indicate an amount of power increase at each power ramping.

Exemplarily, as shown in FIG. 6, a square 10 with slanted lines represents a random access channel transmission occasion, the first parameter is 2 and is used to indicate that a number of random access channel transmission occasions that are frequency division multiplexed in a time unit is 2; if the reference point is PRB0 of an active UL BWP (active uplink BWP), i.e., a starting PRB of the active UL BWP, then in FIG. 6, the offset value between the lowest random access channel transmission occasion in a frequency domain dimension and PRB0 is the second parameter.

In some embodiments, a related parameter for the random access channel upon the random access channel being transmitted includes a power related parameter and/or a frequency domain related parameter.

In some embodiments, a random access channel transmission occasion is valid in the following situations: the random access channel transmission occasion is within an uplink symbol; or the random access channel transmission occasion is within the first-type time domain resource and the random access channel transmission occasion is located within a first frequency domain bandwidth, for example, the random access channel transmission occasion is within the first-type time domain resource and the random access channel transmission occasion is located within an intersection of an uplink subband and an uplink BWP. Herein, the first-type time domain resource is an SBFD symbol; a random access channel transmission occasion being within an uplink symbol indicates that symbols where the random access channel transmission occasions is located are all uplink symbols; a random access channel transmission occasion being within the first-type time domain resource indicates that symbols where the random access channel transmission occasion is located are all SBFD symbols; that is to say, if symbols where a a random access channel transmission occasion is located include both an uplink symbols and an SBFD symbols, then the random access channel transmission occasion is invalid.

In some embodiments, the first frequency domain bandwidth is a subset of an available uplink bandwidth configured by a network device for a terminal device; the first frequency domain bandwidth is an actual available uplink bandwidth determined in an uplink BWP of the terminal device based on a first duplex mode or the first-type time domain resource. The first duplex mode or the first-type time domain resource may be SBFD.

In some embodiments, an uplink BWP is an uplink BWP activated for an uplink transmission of a terminal device. The first frequency domain bandwidth is a full bandwidth or a part of the bandwidth of an uplink BWP. Since available uplink subbands within different duplex modes or different types of time domain resources are different, even for the same terminal device, the first frequency domain bandwidth may dynamically change.

In some embodiments, the first frequency domain bandwidth may be understood as an available subband, an available uplink subband, an actual available subband or an actual available uplink subband in an uplink BWP.

In summary, in the method provided in the embodiments of the present disclosure, the terminal device transmits the random access channel according to the related parameter for the random access channel upon the random access channel being transmitted in the first-type time domain resource and/or the related parameter for the random access channel upon the random access channel being transmitted in the second-type time domain resource. That is, the terminal device may determine, for different types of time domain resources, the related parameters used for transmission under respective types of time domain resources, and transmit the random access channel according to a corresponding related parameter.

### 1. First Frequency Domain Bandwidth

In an optional embodiment, the first frequency domain bandwidth is an available part of subbands within an uplink BWP. The first frequency domain bandwidth is an actual available uplink bandwidth for the terminal device. The first frequency domain bandwidth includes at least one of:
- an uplink subband;
- an uplink BWP;
- an actual subband;
- an intersection of an uplink subband and an uplink BWP;
- an actual uplink subband, where the actual uplink subband is an intersection of an uplink subband (also referred to as a nominal subband) and an uplink BWP;
- an actual uplink BWP, where the actual uplink BWP is an intersection of an uplink subband and an uplink BWP;
- an uplink subband part within an uplink BWP;
- an available uplink subband part within an uplink BWP;
- an uplink subband part in an uplink BWP within the first-type time domain resource;
- an available uplink subband part in an uplink BWP within the first-type time domain resource.

In some embodiments, the first frequency domain bandwidth is an intersection of a second frequency domain bandwidth and a third frequency domain bandwidth. The second frequency domain bandwidth is an active uplink bandwidth configured for the terminal device by a network device or a communication protocol; the third frequency domain bandwidth is an uplink subband in a currently used duplex mode or a currently used type of time domain resource, and is usually determined by a related configuration of a cellular communication system. An intersection of the second frequency domain bandwidth and the third frequency domain bandwidth is an actual available uplink bandwidth for the terminal device, that is, the first frequency domain bandwidth.

Herein, the second frequency domain bandwidth may be referred to as any one of equivalent terms such as an uplink BWP, an uplink bandwidth, an active uplink BWP, an active BWP, and an active uplink bandwidth. The third frequency domain bandwidth may be referred to as any one of equivalent terms such as a subband, an uplink subband, a nominal uplink subband, an uplink subband within a frame structure, and an uplink subband within the first-type time domain resource. The first-type time domain resource is a type of time domain resource including an uplink subband and/or a downlink subband. For example, the first-type time domain resource is at least one of an SBFD symbol, an SBFD slot, and an SBFD subframe.

The second frequency domain bandwidth being an uplink BWP, the third frequency domain bandwidth being an uplink subband, and the first frequency domain bandwidth being an intersection of the uplink subband and the uplink BWP are taken as an example. Since positions of an uplink BWP and an uplink subband may have multiple possibilities, an exemplary representation is as follows:

As shown in FIG. 7, in some examples, the uplink subband completely falls within the uplink BWP, and the first frequency domain bandwidth is a frequency domain bandwidth corresponding to the uplink subband.

As shown in FIG. 8, in some embodiments, the uplink subband does not completely fall within the uplink BWP, and the first frequency domain bandwidth is an intersection of the uplink subband and the uplink BWP.

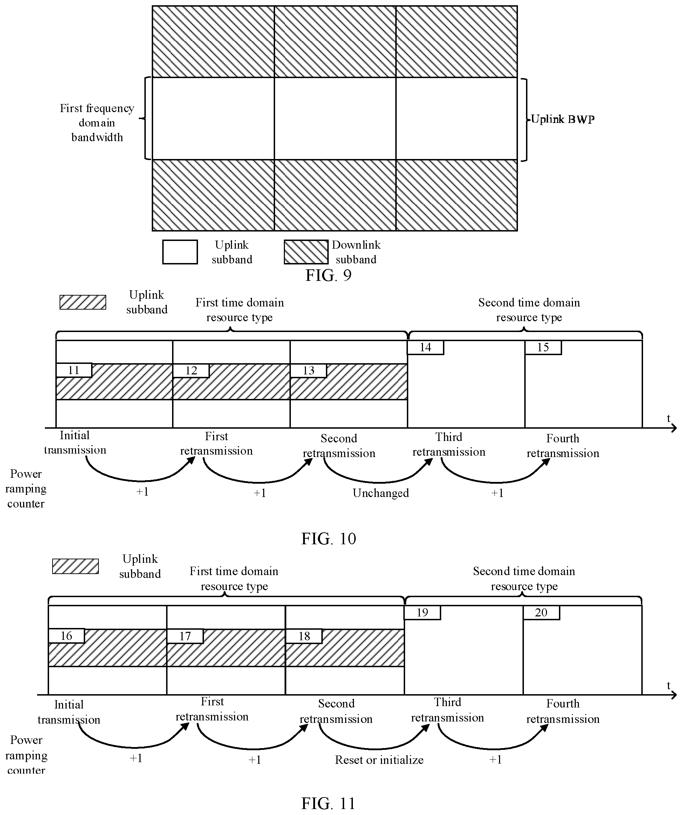

As shown in FIG. 9, in some embodiments, the uplink subband and the uplink BWP are completely the same, and the first frequency domain bandwidth is a frequency domain bandwidth corresponding to the uplink subband or the uplink BWP.

In some embodiments, a related parameter for the random access channel upon the random access channel being transmitted includes a power related parameter and/or a frequency domain related parameter. Next, the power related parameter and the frequency domain related parameter are specifically introduced respectively.

### 2.1 Power Related Parameter

The power related parameter includes at least one of the following parameters: a transmitting power; a target power level; a value of a power ramping counter; a value of a random access preamble transmission counter; a maximum number of transmissions for a random access preamble; a power ramping step for a random access channel.

First, two calculation manners for the transmitting power are shown below.

### Calculation manner 1 for the transmitting power:

In some embodiments, the target power level includes a first target power level and a second target power level, the first-type time domain resource corresponds to the first target power level, and the second-type time domain resource corresponds to the second target power level; in a case where a random access channel transmission occasion corresponds to the first-type time domain resource, the random access channel is transmitted, and a first transmitting power for the random access channel is determined based on the first target power level; and/or in a case where a random access channel transmission occasion corresponds to the second-type time domain resource, the random access channel is transmitted, and a second transmitting power for the random access channel is determined based on the second target power level. That is, in a case where a random access channel transmission occasion used in the current transmission corresponds to the first-type time domain resource, the random access channel is transmitted, and the first transmitting power for the random access channel is determined based on the first target power level; and/or in a case where the random access channel transmission occasion used in the current transmission corresponds to the second-type time domain resource, the random access channel is transmitted, and the second transmitting power for the random access channel is determined based on the second target power level.

In some embodiments, the first transmitting power is determined based on at least one of the first target power level, the power ramping step, the power ramping counter, and a preamble delta; the second transmitting power is determined based on at least one of the second target power level, the power ramping step, the power ramping counter, and the preamble delta; where the preamble delta is determined based on at least one of a random access preamble format and a subcarrier spacing.

In some embodiments, the first transmitting power is a sum of the first target power level, a power ramping amount, and the preamble delta; the second transmitting power is a sum of the second target power level, the power ramping amount, and the preamble delta; the power ramping amount is determined according to the power ramping counter and the power ramping step.

Exemplarily, the target power level includes a first target power level and a second target power level, the first-type time domain resource corresponds to the first target power level, and the second-type time domain resource corresponds to the second target power level; the maximum number of transmissions for the random access preamble transmissions, the power ramping step for the random access channel, and the preamble delta are configured additionally by the network device or agreed upon by a communication protocol, that is, related parameters {the maximum number of transmissions for the random access preamble, the power ramping step for the random access channel, the preamble delta} for the first-type time domain resource and the second-type time domain resource are the same, the first-type time domain resource is an SBFD symbol, the second-type time domain resource is a non-SBFD symbol, the first target power level is denoted as preambleReceivedTargetPowerSBFD, the second target power level is denoted as preambleReceivedTargetPower-nonSBFD, the power ramping step corresponding to the first-type time domain resource and the second-type time domain resource is denoted as PREAMBLE_POWER_RAMPING_STEP, and the preamble delta corresponding to the first-type time domain resource and the second-type time domain resource is denoted as DELTA_PREAMBLE. Then calculation formulas of the first transmitting power and the second transmitting power are as follows. $\begin{matrix}First transmitting power = \\ preambleReceivedTargetPowerSBFD + DELTA_PREAMBLE + \\ \left(PREAMBLE_POWER_RAMPING_COUNTER-1\right) \\ \times PREAMBLE_POWER_RAMPING_STEP .\end{matrix}$ $\begin{matrix}Second transmitting power = preambleReceivedTargetPower - \\ nonSBFD + DELTA_PREAMBLE + \left(PREAMBLE_POWER_RAMPING_COUNTER-1\right) \\ \times PREAMBLE_POWER_RAMPING_STEP .\end{matrix}$

In some embodiments, the first target power level and the second target power level are the same or different.

In summary, the method provided in the embodiments of the present disclosure illustrates a calculation manner for the first transmitting power upon the random access channel being transmitted on the first-type time domain resource and a calculation manner for the second transmitting power upon the random access channel being transmitted on the second-type time domain resource in a case where the first-type time domain resource corresponds to the first target power level and the second-type time domain resource corresponds to the second target power level. These manners may determine different transmitting powers for the random access channel upon the random access channel being transmitted on different types of time domain resources through different related parameters. Moreover, since interference experienced by the terminal device during transmission on symbols of the first-type time domain resource and symbols of the second-type time domain resource are different, link qualities in symbols of different types of resources are also different. Using different transmitting powers may handle different interference situations, so that a channel may be correctly received when it reaches a receiver of the network device.

### Calculation manner 2 for the transmitting power:

In some embodiments, the first-type time domain resource corresponds to at least one of a first power ramping counter, a first random access preamble transmission counter, and a first power ramping step; the second-type time domain resource corresponds to at least one of a second power ramping counter, a second random access preamble transmission counter, and a second power ramping step. That is, the terminal device maintains at least one of the power ramping counter and the random access preamble transmission counter for the first-type time domain resource and the second-type time domain resource, respectively.

In some embodiments, in response to that a random access channel transmission occasion corresponds to the first-type time domain resource, the random access channel is transmitted, where the first transmitting power for the random access channel is determined based on at least one of the first target power level and a value of the first power ramping counter; and/or in response to that the random access channel transmission occasion corresponds to the second-type time domain resource, the random access channel is transmitted, where the second transmitting power for the random access channel is determined based on at least one of the second target power level and a value of the second power ramping counter. That is, in a case where the random access channel transmission occasion used for a current transmission corresponds to the first-type time domain resource, the random access channel is transmitted, and the first transmitting power for the random access channel is determined based on at least one of the first target power level and the value of the first power ramping counter; and/or in a case where the random access channel transmission occasion used for the current transmission corresponds to the second-type time domain resource, the random access channel is transmitted, and the second transmitting power for the random access channel is determined based on at least one of the second target power level and the value of the second power ramping counter. Exemplarily, the random access channel transmission occasion corresponding to the first-type time domain resource may be understood as that the time domain resource where the random access channel transmission occasion is located belongs to the first-type time domain resource; and the random access channel transmission occasion corresponding to the second-type time domain resource may be understood as that the time domain resource where the random access channel transmission occasion is located belongs to the second-type time domain resource. For example, the first-type time domain resource corresponds to the first power ramping counter, the second-type time domain resource corresponds to the second power ramping counter, but the first-type time domain resource and the second-type time domain resource share the same target power level; and for another example, the first-type time domain resource corresponds to the first target power level, the second-type time domain resource corresponds to the second target power level, but the first-type time domain resource and the second-type time domain resource share the same power ramping counter. For yet another example, the first-type time domain resource corresponds to the first target power level and the first power ramping counter, and the second-type time domain resource corresponds to the second target power level and the second power ramping counter.

In some embodiments, in a case where a random access channel transmission occasion corresponds to the first-type time domain resource, the random access channel is transmitted, and the first transmitting power for the random access channel is determined based on a value of the first power ramping counter; and in a case where the random access channel transmission occasion corresponds to the second-type time domain resource, the random access channel is transmitted, and the second transmitting power for the random access channel is determined based on a value of the second power ramping counter. Alternatively, in a case where a random access channel transmission occasion corresponds to the first-type time domain resource, the random access channel is transmitted, and the first transmitting power for the random access channel is determined based on the first target power level and the first power ramping step; and in a case where the random access channel transmission occasion corresponds to the second-type time domain resource, the random access channel is transmitted, and the second transmitting power for the random access channel is determined based on the second target power level and the second power ramping step. Alternatively, in a case where a random access channel transmission occasion corresponds to the first-type time domain resource, the random access channel is transmitted, and the first transmitting power for the random access channel is determined based on the first target power level, a value of the first power ramping counter, and the first power ramping step; and in a case where the random access channel transmission occasion corresponds to the second-type time domain resource, the random access channel is transmitted, and the second transmitting power for the random access channel is determined based on the second target power level, a value of a second power ramping counter, and the second power ramping step.

In some embodiments, the first transmitting power is determined based on at least one of the first target power level, the first power ramping step, a value of the first power ramping counter, and a preamble delta; and the second transmitting power is determined based on at least one of the second target power level, the second power ramping step, a value of the second power ramping counter, and the preamble delta; where the preamble delta is determined based on at least one of a random access preamble format and a subcarrier spacing.

In some embodiments, the first transmitting power is a sum of the first target power level, a first power ramping amount, and the preamble delta, where the first power ramping amount is determined based on a value of the first power ramping counter and the first power ramping step; and the second transmitting power is a sum of the second target power level, a second power ramping amount, and the preamble delta, where the second power ramping amount is determined based on a value of the second power ramping counter and the second power ramping step.

Exemplarily, the target power level includes the first target power level and the second target power level; the power ramping step includes the first power ramping step and the second power ramping step; and the power ramping counter includes the first power ramping counter and the second power ramping counter. The preamble delta is additionally configured by the network device or agreed upon by a communication protocol. The first-type time domain resource is an SBFD symbol, and the second-type time domain resource is a non-SBFD symbol. The first target power level is denoted as preambleReceivedTargetPowerSBFD, the second target power level is denoted as preambleReceivedTargetPower-nonSBFD, the first power ramping counter is denoted as PREAMBLE_POWER_RAMPING_COUNTER_SBFD, the second power ramping counter is denoted as PREAMBLE_POWER_RAMPING_COUNTER_nonSBFD, the first power ramping step is denoted as PREAMBLE_POWER_RAMPING_STEP_SBFD, the second power ramping step is denoted as PREAMBLE_POWER_RAMPING_STEP_nonSBFD, and the preamble delta corresponding to the first-type time domain resource and the second-type time domain resource is denoted as DELTA_PREAMBLE. Then calculation formulas of the first transmitting power and the second transmitting power are as follows. $\begin{matrix}First transmitting power = \\ preambleReceivedTargetPowerSBFD + DELTA_PREAMBLE + \\ \left(PREAMBLE_POWER_RAMPING_COUNTER_SBFD-1\right) \\ \times PREAMBLE_POWER_RAMPING_STEP_SBFD .\end{matrix}$ $\begin{matrix}Second transmitting power = preambleReceivedTargetPower - \\ nonSBFD + DELTA_PREAMBLE + \\ \left(PREAMBLE_POWER_RAMPING_COUNTER_nonSBFD-1\right) \\ \times PREAMBLE_POWER_RAMPING_STEP_nonSBFD .\end{matrix}$

In some embodiments, the first target power level and the second target power level are the same or different; and the first power transmission counter and the second power transmission counter are the same or different.

In summary, the method provided in the embodiments of the present disclosure illustrates a calculation manner for the first transmitting power upon the random access channel being transmitted on the first-type time domain resource and a calculation manner for the second transmitting power upon the random access channel being transmitted on the second-type time domain resource in a case where the first-type time domain resource corresponds to at least one of the first target power level, the first power ramping counter, and the first power ramping step, and the second-type time domain resource corresponds to at least one of the second target power level, the second power ramping counter, and the second power ramping step. These manners may determine different transmitting powers for the random access channel upon the random access channel being transmitted on different types of time domain resources through different related parameters. Moreover, since interference experienced by the terminal device during transmission on symbols of the first-type time domain resource and symbols of the second-type time domain resource are different, link qualities in symbols of different types of resources are also different. Using different transmitting powers may handle different interference situations, so that a channel may be correctly received when it reaches a receiver of the network device.

In some embodiments, since a type of time domain resource used by the terminal device in the transmission for the random access channel is uncertain, in the random access procedure, the type of the time domain resource used in a current transmission is the same as or different from a type of time domain resource used in a previous transmission. Therefore, different ramping schemes of the power ramping counter for cases where the type of the time domain resource used in the current transmission is the same as or different from the type of the time domain resource used in the previous transmission are shown below.

In some embodiments, the type of the time domain resource used in the current transmission being different from the type of the time domain resource used in the previous transmission may be represented as: the type of the time domain resource used in the current transmission being the first-type time domain resource, and the type of the time domain resource used in the previous transmission being the second-type time domain resource; and/or the type of the time domain resource used in the current transmission being the second-type time domain resource, and the type of the time domain resource used in the previous transmission being the first-type time domain resource. For example, for a case where the first-type time domain resource is an SBFD symbol and the second-type time domain resource is a non-SBFD symbol, since the interference on the SBFD link is more severe, when the first-type time domain resource and the second-type time domain resource share the same power ramping counter, in a case from the non-SBFD symbol to the SBFD symbol, i.e., in a case where the type of the time domain resource used in the current transmission is the SBFD symbol and the type of the time domain resource used in the previous transmission is the non-SBFD symbol, the power ramping counter is kept unchanged or reset or initialized; in a case from the SBFD symbol to the non-SBFD symbol, i.e., in a case where the type of the time domain resource used in the current transmission is the non-SBFD symbol and the type of the time domain resource used in the previous transmission is the SBFD symbol, the power ramping counter is incremented by 1. Optionally, in a case where the type of the time domain resource used in the current transmission is the same as the type of the time domain resource used in the previous transmission, the power ramping counter is incremented by 1.

In some embodiments, the type of the time domain resource used in the current transmission being different from the type of the time domain resource used in the previous transmission may only include: the type of the time domain resource used in the current transmission being the first-type time domain resource, and the type of the time domain resource used in the previous transmission being the second-type time domain resource; in some embodiments, the type of the time domain resource used in the current transmission being different from the type of the time domain resource used in the previous transmission may only include: the type of the time domain resource used in the current transmission being the second-type time domain resource, and the type of the time domain resource used in the previous transmission being the first-type time domain resource.

### Ramping scheme 1: remaining a power ramping counter unchanged.

During a transmission procedure for the random access channel, the terminal device uses only one power ramping counter for the first-type time domain resource and the second-type time domain resource. For a transmission for the random access channel, if a corresponding type of a time domain resource changes compared to a type of a time domain resource for previous transmission, the power ramping counter remains unchanged; or in a case where a type of a time domain resource used in a current transmission for the random access channel changes compared to a type of a time domain resource used in a previous transmission, the power ramping counter remains unchanged. It should be noted that "in a case where a type of a time domain resource used in a current transmission for the random access channel changes compared to a type of a time domain resource used in a previous transmission, the power ramping counter remains unchanged" is a different expression with the same meaning as "in a case where a type of a time domain resource used in a current transmission for the random access channel changes compared to a type of a time domain resource used in a previous transmission, the power ramping counter remains unchanged", that is, "in a case where a type of a time domain resource used in a current transmission for the random access channel changes compared to a type of a time domain resource used in a previous transmission, the power ramping counter remains unchanged" is equivalent to "in a case where a type of a time domain resource used in a current transmission for the random access channel changes compared to a type of a time domain resource used in a previous transmission, the power ramping counter remains unchanged". For example, there are n times of random access transmissions, if a type of a time domain resource corresponding to a random access channel transmission occasion used in the i-th transmission is different from a type of a time domain resource corresponding to a random access channel transmission occasion used in the (i-1)-th transmission, then the power ramping counter of the random access channel used in the i-th transmission remains unchanged compared to the power ramping counter of the random access channel used in the (i-1)-th transmission.

In some embodiments, for a random access channel transmission, if the a corresponding type of a time domain resource changes compared to a type of a time domain resource for an initial transmission, the power ramping counter remains unchanged; or in a case where a type of a time domain resource used in the current transmission for the random access channel changes compared to a type of a time domain resource used in the initial transmission, the power ramping counter remains unchanged. For example, there are n times of random access transmissions, if a type of a time domain resource corresponding to a random access channel transmission occasion used in the i-th transmission is different from a type of a time domain resource corresponding to a random access channel transmission occasion used in the initial transmission, then the power ramping counter of the random access channel used in the i-th transmission remains unchanged compared to the power ramping counter of the random access channel used in the (i-1)-th transmission. That is, for a random access channel retransmission, if a corresponding type of a time domain resource changes compared to a type of a time domain resource for a previous transmission or the initial transmission, the power ramping counter remains unchanged.

Exemplarily, as shown in FIG. 11, when performing the initial transmission, the first retransmission, and the second retransmission, a type of a time domain resource used is the first-type time domain resource. At this time, the power ramping counter is incremented by 1 each time a retransmission occurs. Optionally, when performing the initial transmission, the power ramping counter is initialized, and an initial value of the power ramping counter is 1. That is, when performing the initial transmission, the power ramping counter is 1. When performing a first retransmission, since a type of a time domain resource corresponding to a random access channel transmission occasion 12 used in the first retransmission and a type of a time domain resource corresponding to a random access channel transmission occasion 11 used in a previous transmission (i.e., the initial transmission) are both the first-type time domain resource, the power ramping counter is incremented by 1, and at this time, the power ramping counter is 2; when performing a second retransmission, since a type of a time domain resource corresponding to a random access channel transmission occasion 13 used in the second retransmission and the type of the time domain resource corresponding to the random access channel transmission occasion 12 used in a previous transmission (i.e., the first retransmission) are both the first-type time domain resource, the power ramping counter is incremented by 1, and at this time, the power ramping counter is 3. And when performing the third retransmission, since a type of a time domain resource corresponding to a random access channel transmission occasion 14 used in the third retransmission is the second-type time domain resource, which is different from the type of the time domain resource corresponding to the random access channel transmission occasion 13 used in a previous transmission (i.e., the second retransmission, at this time), the power ramping counter remains unchanged, that is, the power ramping counter is still 3 during the third retransmission. During the fourth retransmission, since a type of a time domain resource corresponding to a random access channel transmission occasion 15 used in the fourth retransmission is the same as the type of the time domain resource corresponding to the random access channel transmission occasion 14 used in the previous transmission (i.e., the third retransmission), which both are the second-type time domain resource, the power ramping counter is incremented by 1, and at this time, the power ramping counter is 4.

In summary, in the method provided in the embodiments of the present disclosure, when a type of a time domain resource used for a random access channel transmission is different from a type of a time domain resource used in a previous transmission, the power ramping counter remains unchanged. This calculation manner for the transmitting power takes into account both the interference level and the delay of the random access.

### Ramping scheme 2: resetting or initializing a power ramping counter.

During the transmission for the random access channel, the terminal device uses only one power ramping counter for the first-type time domain resource and the second-type time domain resource. For a random access channel transmission, if a corresponding type of a time domain resource changes compared to a type of a time domain resource for a previous transmission, the power ramping counter is reset or initialized; or in a case where a type of a time domain resource used for a current transmission for the random access channel changes compared to a type of a time domain resource used for the previous transmission, the power ramping counter is reset or initialized. It should be noted that "in a case where a type of a time domain resource used for a current transmission for the random access channel changes compared to a type of a time domain resource used for the previous transmission, the power ramping counter is reset or initialized" is a different expression with the same meaning as "in a case where a type of a time domain resource used for a current transmission for the random access channel changes compared to a type of a time domain resource used for the previous transmission, the power ramping counter is reset or initialized", that is, "in a case where a type of a time domain resource used for a current transmission for the random access channel changes compared to a type of a time domain resource used for the previous transmission, the power ramping counter is reset or initialized" is equivalent to "in a case where a type of a time domain resource used for a current transmission for the random access channel changes compared to a type of a time domain resource used for the previous transmission, the power ramping counter is reset or initialized". For example, there are n times of random access transmissions, if a type of a time domain resource corresponding to a random access channel transmission occasion used for the i-th transmission is different from a type of a time domain resource corresponding to a random access channel transmission occasion used for the (i-1)-th transmission, then the power ramping counter of the random access channel used for the i-th transmission is reset or initialized.

In some embodiments, for a random access channel transmission, if a corresponding type of a time domain resource changes compared with a type of a time domain resource for an initial transmission, the power ramping counter is reset or initialized; or in a case that a type of a time domain resource used for a current transmission for the random access channel changes compared with a type of a time domain resource used for the initial transmission, the power ramping counter is reset or initialized. For example, there are n times of random access transmissions, if a type of a time domain resource corresponding to a random access channel transmission occasion used for the i-th transmission is different from a type of a time domain resource corresponding to a random access channel transmission occasion used for the initial transmission, then the power ramping counter of the random access channel used for the i-th transmission is reset or initialized. That is, for a random access channel retransmission, if a corresponding type of a time domain resource changes compared with a type of a time domain resource for a previous transmission or an initial transmission, the power ramping counter is reset or initialized.

Exemplarily, as shown in FIG. 11, when performing the initial transmission, the first retransmission, and the second retransmission, a type of a time domain resource used is the first-type time domain resource. At this time, the power ramping counter is incremented by 1 each time a retransmission occurs. Optionally, when performing the initial transmission, the power ramping counter is initialized, and an initial value of the power ramping counter is 1. That is, when performing the initial transmission, the power ramping counter is 1. When performing a first retransmission, since a type of a time domain resource corresponding to a random access channel transmission occasion 17 used in the first retransmission and a type of a time domain resource corresponding to a random access channel transmission occasion 16 used in a previous transmission (i.e., the initial transmission) are both the first-type time domain resource, the power ramping counter is incremented by 1, and at this time, the power ramping counter is 2; when performing a second retransmission, since a type of a time domain resource corresponding to a random access channel transmission occasion 18 used in the second retransmission and the type of the time domain resource corresponding to the random access channel transmission occasion 17 used in a previous transmission (i.e., the first retransmission) are both the first-type time domain resource, the power ramping counter is incremented by 1, and at this time, the power ramping counter is 3. And when performing the third retransmission, since a type of a time domain resource corresponding to a random access channel transmission occasion 19 used for the third retransmission is the second-type time domain resource, which is different from the type of the time domain resource corresponding to the random access channel transmission occasion 18 used for a previous transmission (i.e., the second retransmission), the power ramping counter is reset or initialized at this time, for example, the power ramping counter is reset to 1, i.e., the power ramping counter is reset to 1 during the third retransmission. During the fourth retransmission, since a type of a time domain resource corresponding to a random access channel transmission occasion 20 used in the fourth retransmission is the same as the type of the time domain resource corresponding to the random access channel transmission occasion 19 used in the previous transmission (i.e., the third retransmission), which both are the second-type time domain resource, the power ramping counter is incremented by 1, and at this time, the power ramping counter is 2.

In summary, in the method provided in the embodiments of the present disclosure, when the type of the time domain resource used in a random access channel transmission is different from the type of the time domain resource used in a previous transmission, the power ramping counter is reset or initialized. This calculation manner for transmitting power may minimize interference to other links caused by a random access procedure performed after the change of the type of the time domain resource. However, resetting or initializing the power ramping counter may cause a UE to perform multiple retransmissions, i.e., power ramping, to reach the transmitting power for successfully completing the random access, which may lead to an increase in random access latency.

**Power ramping mode 3: power ramping counters corresponding to the first-type time domain resource and the second-type time domain resource being different.**

During a random access channel transmission, the terminal device uses power ramping counters respectively for the first-type time domain resource and the second-type time domain resource, i.e., uses a first power ramping counter for the first-type time domain resource and a second power ramping counter for the second-type time domain resource. When performing a transmission, a corresponding power ramping counter is selected according to a type of a time domain resource used for the transmission.

In some embodiments, the terminal device uses random access preamble transmission counters respectively for the first-type time domain resource and the second-type time domain resource, i.e., uses a first random access preamble transmission counter for the first-type time domain resource and a second random access preamble transmission counter for the second-type time domain resource. When performing a transmission, a corresponding power ramping counter is selected according to a type of a time domain resource used for the transmission.

That is, the first-type time domain resource corresponds to at least one of the first power ramping counter and the first random access preamble transmission counter; the second-type time domain resource corresponds to at least one of the second power ramping counter and the second random access preamble transmission counter.

In some embodiments, upon initiating a random access procedure, at least one of the first power ramping counter, the first random access preamble transmission counter, the second power ramping counter and the second random access preamble transmission counter is initialized; in a case that a random access channel transmission fails and the random access channel corresponds to the first-type time domain resource, the first random access preamble transmission counter is increased by 1; in a case that the random access channel transmission fails and the random access channel corresponds to the second-type time domain resource, the second random access preamble transmission counter is increased by 1; in a case where the random access channel corresponds to the first-type time domain resource and a value of the first random access preamble transmission counter is greater than a first initial value, the first power ramping counter is increased by 1; in a case where the random access channel corresponds to the second-type time domain resource and a value of the second random access preamble transmission counter is greater than a second initial value, the second power ramping counter is increased by 1. Herein, random access channel transmission failing indicates that: if a RAR window expires, but a random access response containing a first random access preamble identifier is not received or contention resolution is not successful, then the random access channel transmission is considered to have failed. The first random access preamble identifier matches a random access channel preamble index (e.g., a PRACH preamble index) transmitted from the terminal.

In some embodiments, the first power ramping counter and/or the second power ramping counter is updated before a random access channel transmission; the first random access preamble transmission counter and/or the second random access preamble transmission counter is updated after the random access channel transmission.

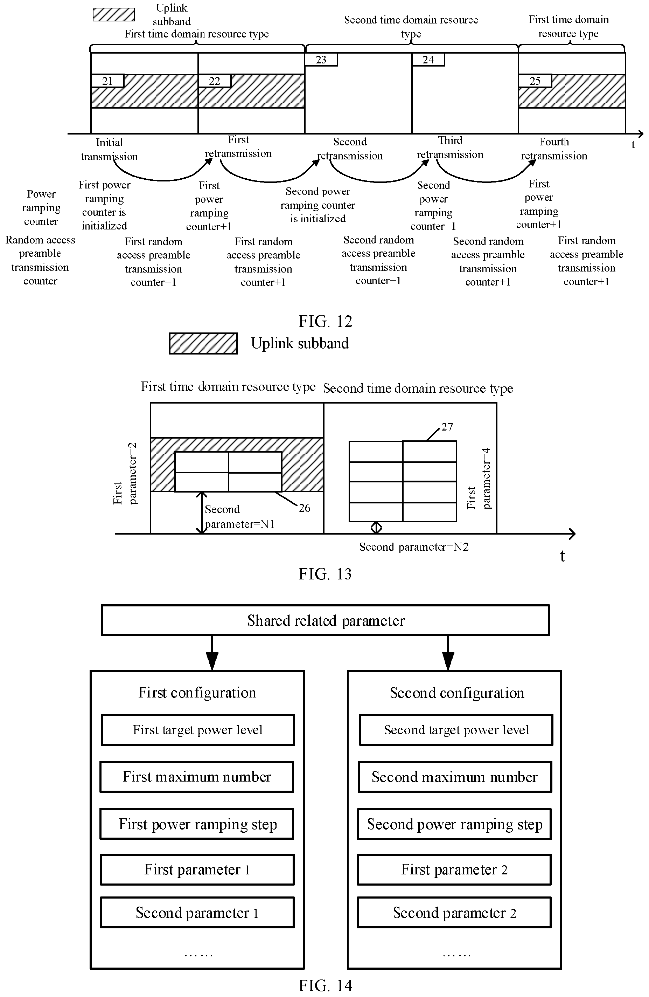

Exemplarily, as shown in FIG. 12, upon initiating a random access procedure, the first power ramping counter, the first random access preamble transmission counter, the second power ramping counter, and the second random access preamble transmission counter are all initialized to 1; when an initial transmission is performed, since a type of a time domain resource corresponding to a random access channel transmission occasion 21 used for the initial transmission is the first-type time domain resource, but the first random access preamble transmission counter is 1 (i.e., the first initial value), therefore the first power ramping counter remains unchanged, or in other words, since the first-type time domain resource is used for the first time, the first power ramping counter is initialized, at this time the first power ramping counter is 1, after the initial transmission ends, since the initial transmission fails and the type of the time domain resource corresponding to the random access channel transmission occasion 21 used for the initial transmission is the first-type time domain resource, the first random access preamble transmission counter is incremented by 1, at this time the first random access preamble counter is 2; when a first retransmission is performed, since a type of a time domain resource corresponding to a random access channel transmission occasion 22 used for a first retransmission is the first-type time domain resource, and the first random access preamble transmission counter is greater than the first initial value, the first power ramping counter is incremented by 1, at this time the first power ramping counter is 2, after the first retransmission ends, since the first retransmission fails and a type of the time domain resource corresponding to the random access channel transmission occasion 22 used for the first retransmission is a first resource type, the first random access preamble transmission counter is incremented by 1, at this time the first random access preamble transmission counter is 3; when a second retransmission is performed, since a type of a time domain resource corresponding to a random access channel transmission occasion 23 used for the second retransmission is the second-type time domain resource, but the second random access preamble transmission counter is 1 (i.e., a second initial value), therefore the second power ramping counter remains unchanged, or in other words, since the second-type time domain resource is used for the first time, the second power ramping counter is initialized, at this time the second power ramping counter is 1, after the second retransmission ends, since the second retransmission fails and the type of the time domain resource corresponding to the random access channel transmission occasion 23 used for the second retransmission is the second-type time domain resource, the second random access preamble transmission counter is incremented by 1, at this time the second random access preamble transmission counter is 2; when a third retransmission is performed, since a type of a time domain resource corresponding to a random access channel transmission occasion 24 used for the third retransmission is the second-type time domain resource, and the second random access preamble transmission counter is greater than the second initial value, the second power ramping counter is incremented by 1, at this time the second power ramping counter is 2, after the second retransmission ends, since the second retransmission fails and a type of the time domain resource corresponding to the random access channel transmission occasion 24 used for the second retransmission is a second resource type, the second random access preamble transmission counter is incremented by 1, at this time the second random access preamble transmission counter is 3; when a fourth retransmission is performed, since a type of a time domain resource corresponding to a random access channel transmission occasion 25 used for the fourth retransmission is the first-type time domain resource, and the value of the first random access preamble transmission counter is greater than the first initial value, the first power ramping counter is incremented by 1, at this time the first power ramping counter is 3, after the fourth retransmission ends, since the fourth retransmission fails and the type of the time domain resource corresponding to the random access channel transmission occasion 25 used for the fourth retransmission is the first-type time domain resource, the first random access preamble counter is incremented by 1, at this time the first random access preamble transmission counter is 4.

In summary, in the method provided in the embodiments of the present disclosure, different power ramping counters are configured for the first-type time domain resource and the second-type time domain resource, which may shorten the random access latency to a certain extent, but since the terminal device needs to maintain two sets of power ramping counters, it is likely to impose a burden on the terminal device, resulting in higher complexity of the random access procedure corresponding to the terminal device.

**Ramping scheme 4: not expecting a change in a type of a time domain resource corresponding to a random access channel.**

In some embodiments, an initial transmission and a retransmission for the random access channel correspond to a same type of a time domain resource; or the terminal device does not expect that a type of a time domain resource corresponding to a retransmission for the random access channel changes with respect to an initial transmission or with respect to a previous transmission; or the terminal device does not expect that a type of a time domain resource corresponding to a retransmission for the random access channel is different from a time domain resource type corresponding to an initial transmission for the random access channel or a previous transmission for the random access channel. That is, when the terminal device selects a random access channel transmission occasion, the terminal device may use the same type of the time domain resource as that for the initial transmission.

In summary, in the method provided in the embodiments of the present disclosure, during the random access procedure, the same type of the time domain resource is always used, which may also complete the random access procedure in a case where two types of time domain resources exist, avoiding the problem of being unable to judge interference caused by switching symbol types. Since for this manner, a random access resource in the desired time domain resource type needs to be waited, the random access latency is relatively high.

In an optional embodiment, the above-mentioned calculation manner for transmitting power and ramping scheme may be implemented as independent embodiments or a combined embodiment. For example, the calculation manner 1 for transmitting power may be implemented independently, when the type of the time domain resource corresponding to the random access channel changes, the power ramping counter is incremented by 1; the calculation manner 1 for transmitting power is implemented in combination with ramping scheme 1, for the first-type time domain resource and the second-type time domain resource, a same power ramping counter is set, and when the type of the time domain resource corresponding to the random access channel changes, the power ramping counter remains unchanged; or the calculation manner 1 for transmitting power is implemented in combination with ramping scheme 2, for the first-type time domain resource and the second-type time domain resource, a same power ramping counter is set, and when the type of the time domain resource corresponding to the random access channel changes, the power ramping counter is reset or initialized; or the calculation manner 1 for transmitting power is implemented in combination with ramping scheme 4, for the first-type time domain resource and the second-type time domain resource, a same power ramping counter is set, and a random access channel corresponding to a same time domain resource type is used for each transmission; or the calculation manner 1 for transmitting power is implemented in combination with ramping scheme 3, for the first-type time domain resource and the second-type time domain resource, one power ramping counter and one random access preamble transmission counter are maintained separately; or the calculation manner 2 for transmitting power is implemented in combination with ramping scheme 3, for the first-type time domain resource and the second-type time domain resource, one power ramping counter and one random access preamble transmission counter are maintained separately; or the calculation manner 1 for transmitting power is implemented in combination with transmitting power calculation manner 2, the first-type time domain resource corresponds to a first target power level, and corresponds to at least one of the first power ramping counter, the first random access preamble transmission counter, and the first power ramping step for the first-type time domain resource; the second-type time domain resource corresponds to the second target power level, and corresponds to at least one of the second power ramping counter, the second random access preamble transmission counter, and the second power ramping step for the second-type time domain resource; or the calculation manner 1 for transmitting power may be implemented in combination with ramping scheme 4, the terminal device expects that the type of the time domain resource corresponding to each random access channel transmission is the same, after each random access channel transmission fails, the power ramping counter is incremented by 1, and the transmitting power is calculated using the calculation manner 1 for transmitting power; or the calculation manner 2 for transmitting power may be implemented in combination with ramping scheme 4.

### 2.2 Frequency Domain Related Parameter

The frequency domain related parameter includes at least one of the following parameters: a first parameter and a second parameter; the first parameter is used to indicate a number of random access channel transmission occasions that are frequency division multiplexed in a time unit, for example, a time unit is a time instance; the second parameter is used to indicate an offset value between a lowest random access channel transmission occasion in frequency domain and a reference point, where the reference point is a PRB0 of an uplink BWP (i.e., a starting PRB0 of an uplink BWP); the first parameter may be represented as msg1-FDM, and the second parameter may be represented as msg1-FrequencyStart.

In some embodiments, the first parameter corresponding to the first-type time domain resource and the first parameter corresponding to the second-type time domain resource are the same or different; and/or the second parameter corresponding to the first-type time domain resource and the second parameter corresponding to the second-type time domain resource are the same or different.

Exemplarily, as shown in FIG. 13, the first parameter corresponding to the first-type time domain resource may be denoted as msg1-FDMSBFD, the second parameter corresponding to the first-type time domain resource may be denoted as msg1-FrequencyStartSBFD, the first parameter corresponding to the second-type time domain resource may be denoted as msg1-FDMNonSBFD, and the second parameter corresponding to the second-type time domain resource may be denoted as msg1-FrequencyStartNonSBFD. In FIG. 13, based on parameters configured by a first configuration: msg1-FDMSBFD=2, msg1-FrequencyStartSBFD=N1, a group of random access channel transmission occasions 26 located within an uplink subband are obtained by selecting, where the group of random access channel transmission occasions 26 includes 4 random access channel transmission occasions; also, based on parameters configured by a second configuration: msg1-FDMNonSBFD=4, msg1-FrequencyStartNonSBFD=N2, a group of random access channel transmission occasions 27 are obtained by selecting, where the group of random access channel transmission occasions 27 includes 8 random access channel transmission occasions.

In summary, the method provided in the embodiments of the present disclosure, configurations on the frequency domain are performed for the first-type time domain resource and the second-type time domain resource respectively, this manner is flexible, which may not only ensure that all random access channel transmission occasions are valid, but also ensure that the random access channel transmission occasions are at both ends of the uplink BWP or the uplink subband, thereby avoiding resource fragmentation.

In some embodiments, the network device provides differentiated configurations for the terminal device for the first-type time domain resource resources and/or the second-type time domain resources. There are two configuration schemes, and these two configuration schemes are introduced separately below.

### 3.1 Configuration scheme 1

In optional embodiments based on FIG. 5, the method further includes the following step.

**In step 210**, a first configuration and a second configuration are received, where the first configuration and the second configuration are used for configuring related parameters during a random access channel transmission, the first configuration corresponds to a first-type time domain resource, and the second configuration corresponds to a second-type time domain resource.

In some embodiments, a time domain resource includes at least one of: a symbol, a symbol group, a slot, a sub slot, a frame, and a subframe. A specific type of a time domain resource is not limited in the embodiments of the present disclosure, and an example of the first configuration corresponding to a first-type symbol, and the second configuration corresponding to a second-type symbol is generally given for illustration. For example, the first configuration corresponds to an SBFD symbol, and the second configuration corresponds to a non-SBFD symbol. Herein, the SBFD symbol is a symbol including at least one of an uplink subband, a downlink subband, and a guard band, and the non-SBFD symbol is a symbol not including the above subbands.

In some embodiments, a configuration for the random access channel includes at least one of a power configuration and a frequency domain configuration, the power configuration is used to configure a power related parameter for random access channel transmission, and the frequency domain configuration is used to configure a frequency domain related parameter for random access channel transmission. The first configuration includes at least one of a first power configuration and a first frequency domain configuration; the second configuration includes at least one of a second power configuration and a second frequency domain configuration. Configuration items included in the first configuration and the second configuration are the same, i.e., when the first configuration includes the first power configuration, the second configuration should also include the second power configuration; when the first configuration includes the first frequency domain configuration, the second configuration should also include the second frequency domain configuration; when the first configuration includes the first power configuration and the first frequency domain configuration, the second configuration should also include the second power configuration and the second frequency domain configuration.

In some embodiments, the power configuration includes at least one of the following related parameters: a target power level; a maximum number of transmissions for a random access preamble; a power ramping step for a random access channel; i.e., any one of the first configuration and the second configuration includes at least one of the following related parameters: a target power level; a maximum number of transmissions for a random access preamble; a power ramping step for a random access channel.

In some embodiments, the power related parameter includes at least one of the following parameters: a transmitting power; a target power level; a value of a power ramping counter; a value of a random access preamble transmission counter; a maximum number of transmissions for a random access preamble; a power ramping step for a random access channel. Herein, a first part of related parameters are additionally configured by the network device or are agreed upon by a protocol, and a second part of parameters are selected, calculated, or determined by the terminal device based on the first part of parameters. Exemplarily, configuration for the power related parameter is performed through the configuration scheme 1, any one of the first configuration and the second configuration includes at least one of the following parameters: a target power level, a maximum number of transmissions for a random access preamble, a power ramping step for a random access channel.

In some embodiments, the first configuration includes a first target power level, and the second configuration includes a second target power level.

In some embodiments, the first configuration further includes a first power ramping step, and the second configuration further includes a second power ramping step. Herein, the first power ramping step and the second power ramping step are the same or different.

In some embodiments, the first configuration further includes a first maximum number, where the first maximum number is a maximum number of transmissions for a random access preamble corresponding to the first-type time domain resource; the second configuration further includes a second maximum number, where the second maximum number is a maximum number of transmissions for a random access preamble corresponding to the second-type time domain resource. Herein, the first maximum number and the second maximum number are the same or different.

In some embodiments, the first configuration and the second configuration only include parameters with different values, where parameters with the same value in the first configuration and the second configuration may be additionally configured by the network device or agreed upon by a communication protocol; for example, the first configuration includes the first target power level, the second configuration includes the second target power level, and the maximum number of transmissions for a random access preamble and a power ramping step for a random access channel are additionally configured by the network device or agreed upon by the communication protocol; or the first configuration includes the first target power level and the first power ramping step, the second configuration includes the second target power level and the second power ramping step, and the maximum number of transmissions for a random access preamble is additionally configured by the network device or agreed upon by the communication protocol; or the first configuration includes the first target power level and the first maximum number, the second configuration includes the second target power level and the second maximum number, and a power ramping step for a random access channel is additionally configured by the network device or agreed upon by the communication protocol; or the first configuration includes the first target power level, the first maximum number, and the first power ramping step, the second configuration includes the second target power level, the second maximum number, and the second power ramping step.

In some embodiments, the first configuration and the second configuration include all parameters. That is, the first configuration includes the first target power level, the first maximum number, and the first power ramping step, and the second configuration includes the second target power level, the second maximum number, and the second power ramping step. The first maximum number and the second maximum number are the same or different, and the first power ramping step and the second power ramping step are the same or different.

In some embodiments, the frequency domain configuration includes at least one of the following related parameters: a first parameter, where the first parameter is used to indicate a number of random access channel transmission occasions that are frequency division multiplexed in a time unit; a second parameter, where the second parameter is used to indicate an offset value between a lowest random access channel transmission occasion in the frequency domain and a reference point, the reference point is PRB0 of an uplink BWP, i.e., the starting PRB of the uplink BWP; i.e., any one of the first configuration and the second configuration includes at least one of the following related parameters: the first parameter, where the first parameter is used to indicate a number of random access channel transmission occasions that are frequency division multiplexed in a time unit; the second parameter, where the second parameter is used to indicate an offset value between a lowest random access channel transmission occasion in the frequency domain and a reference point, the reference point is PRB0 of an uplink BWP.

In some embodiments, the first configuration and the second configuration share a part of related parameters. Exemplarily, as shown in FIG. 14, the terminal device uses one set of a power ramping counter and a preamble transmission counter for the first configuration and the second configuration, where the shared related parameters corresponding to the first configuration and the second configuration are the power ramping counter and the preamble transmission counter. The first configuration includes at least one of: a first target power level, a first maximum number, a first power ramping step, a first parameter 1, a second parameter 1. The second configuration includes at least one of: a second target power level, a second maximum number, a second power ramping step, a first parameter 2, a second parameter 2. Herein, the first target power level and the second target power level are usually different. The first maximum number and the second maximum number may be the same or different, the first power ramping step and the second power ramping step may be the same or different, the first parameter 1 and the first parameter 2 may be the same or different, and the second parameter 1 and the second parameter 2 may be the same or different.

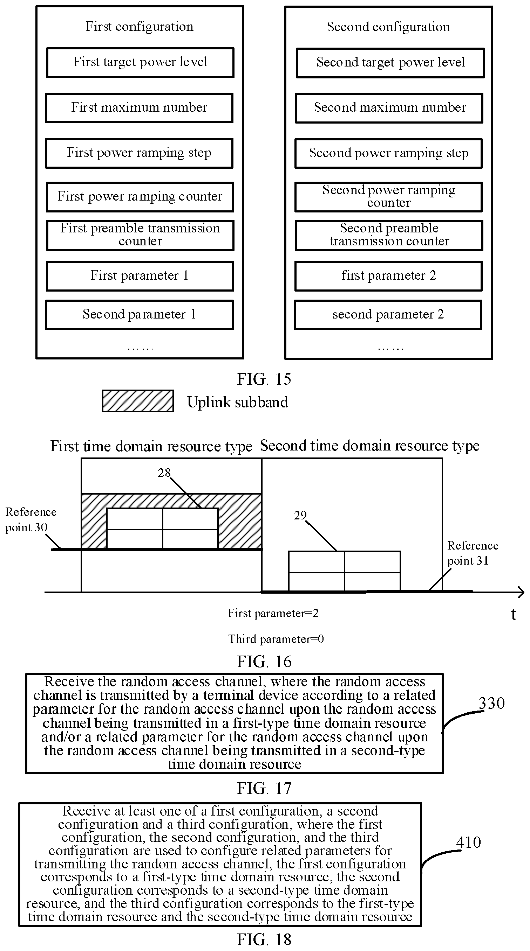

In some embodiments, the first configuration and the second configuration do not share related parameters. Exemplarily, as shown in FIG. 15. The terminal device respectively uses two sets of a power ramping counter and a preamble transmission counter for the first configuration and the second configuration. The first configuration includes at least one of: a first target power level, a first maximum number, a first power ramping step, a first power ramping counter, a first preamble transmission counter, a first parameter 1, a second parameter 1. The second configuration includes at least one of: a second target power level, a second maximum number, a second power ramping step, a second power ramping counter, a second preamble transmission counter, a first parameter 2, a second parameter 2. Herein, the first target power level and the second target power level are usually different. The first maximum number and the second maximum number may be the same or different, the first power ramping step and the second power ramping step may be the same or different, the first power ramping counter and the second power ramping counter are usually different, the first preamble transmission counter and the second preamble transmission counter are usually different, the first parameter 1 and the first parameter 2 may be the same or different, and the second parameter 1 and the second parameter 2 may be the same or different.

In some embodiments, a first configuration parameter is received and a second configuration parameter is received, where the first configuration parameter corresponds to the first configuration, and the second configuration parameter corresponds to the second configuration; or the first configuration parameter and an offset value are received, where the first configuration parameter corresponds to the first configuration, and a configuration parameter obtained by offsetting the first configuration parameter based on the offset value corresponds to the second configuration; or the second configuration parameter and an offset value are received, where the second configuration parameter corresponds to the second configuration, and a configuration parameter obtained by offsetting the second configuration parameter based on the offset value corresponds to the first configuration; or the first configuration parameter is received, where the first configuration parameter corresponds to the first configuration; or a second configuration parameter is received, where the second configuration parameter corresponds to the second configuration. Exemplarily, the first configuration parameter includes the first target power level, and the second configuration parameter includes the second target power level; or the first configuration includes the first target power level, and the offset value includes a target power level offset, then the second target power level corresponding to the second configuration is a sum of the first target power level and the target power level offset; or the first configuration includes the first target power level and the first power ramping step, and the offset value includes a target power level offset and a power ramping step offset, then the second target power level corresponding to the second configuration is a sum of the first target power level and the target power level offset, and the second power ramping step corresponding to the second configuration is a sum of the first power ramping step and the power ramping step offset.

In some embodiments, a part of related parameters among the related parameters are configured by the first configuration parameter and the second configuration parameter; another part of the related parameters among the related parameters are configured by the first configuration parameter and the offset value; or a first part of parameters among the related parameters are configured by the first configuration parameter and the second configuration parameter, a second part of parameters among the related parameters are configured by the first configuration parameter and the offset value, and a third part of parameters among the related parameters are additionally configured by the network device or agreed upon by a protocol. For example, the related parameters include a target power level, a maximum number of transmissions for a random access preamble, and a power ramping step for a random access channel; for the target power level, it is configured by using the first configuration parameter (i.e., the first target power level) and the second configuration parameter (i.e., the second target power level); or additionally configured based on the network device or agreed upon by a protocol; or configured by using the first configuration parameter (i.e., the first target power level) and an offset value (i.e., the target power level offset); for the maximum number of transmissions for a random access preamble, it is configured by using the first configuration parameter (i.e., the first maximum number) and the second configuration parameter (i.e., the second maximum number); or additionally configured based on the network device or agreed upon by a protocol; or configured by using the first configuration parameter (i.e., the first maximum number) and an offset value (i.e., a maximum number offset); for the power ramping step for a random access channel, it is configured by using the first configuration parameter (i.e., the first power ramping step) and the second configuration parameter (i.e., the second power ramping step); or additionally configured based on the network device or agreed upon by a protocol; or configured by using the first configuration parameter (i.e., the first power ramping step) and an offset value (i.e., the power ramping step offset).

Exemplarily, the first configuration parameter includes the first target power level, and the second configuration parameter includes the second target power level; or the first configuration includes the first target power level, and the offset value includes a target power level offset, then the second target power level corresponding to the second configuration is a sum of the first target power level and the target power level offset; or the first configuration includes the first target power level and the first power ramping step, and the offset value includes a target power level offset and a power ramping step offset, then the second target power level corresponding to the second configuration is a sum of the first target power level and the target power level offset, and the second power ramping step corresponding to the second configuration is a sum of the first power ramping step and the power ramping step offset.

For example, the second configuration parameter is the second target power level, which is denoted as preambleReceivedTargetPower, and the offset value is a target power level offset, which is denoted as delta_SBFD, then the first target power level corresponding to the first configuration is preambleReceivedTargetPower+delta_SBFD. At this time, calculation formulas for the first transmitting power and the second transmitting power are as follows.$\begin{matrix}First transmitting power = \\ preambleReceivedTargetPower + delta_SBFD + DELTA_PREAMBLE + \\ \left(PREAMBLE_POWER_RAMPING_COUNTER-1\right) \\ \times PREAMBLE_POWER_RAMPING_STEP .\end{matrix}$ $\begin{matrix}Second transmitting power = preambleReceivedTargetPower + DELTA_PREAMBLE + \\ \left(PREAMBLE_POWER_RAMPING_COUNTER-1\right) \\ \times PREAMBLE_POWER_RAMPING_STEP .\end{matrix}$

In an optional embodiment, a power configuration for the random access channel may also adopt the following manners: in a case where a type of a time domain resource used in a current transmission is different from a type of a time domain resource used in a previous transmission, the power ramping counter is increased by 1; offset times are set and denoted as counter_SBFD, when a type of a time domain resource used for an initial transmission is the first-type time domain resource, the offset times are initialized to 1; when the type of the time domain resource used for the initial transmission is the second-type time domain resource, the offset times are initialized to 0; when a type of a time domain resource used for retransmission is the first-type time domain resource, the offset times are increased by 1, i.e., counter_SBFD+1. At this time, calculation formulas for the first transmitting power and the second transmitting power are as follows. $\begin{matrix}First transmitting power = preambleReceivedTargetPower + DELTA_PREAMBLE + \\ \left(PREAMBLE_POWER_RAMPING_COUNTER-1\right) \\ \times PREAMBLE_POWER_RAMPING_STEP + counter_SBFD \times delta_SBFD .\end{matrix}$ $\begin{matrix}Second transmitting power = preambleReceivedTargetPower + DELTA_PREAMBLE + \\ \left(PREAMBLE_POWER_RAMPING_COUNTER-1\right) \\ \times PREAMBLE_POWER_RAMPING_STEP .\end{matrix}$

In summary, the method provided in the embodiments of the present disclosure provides the terminal device with the first configuration and the second configuration for the random access channel, so that the terminal device may use the first configuration or the second configuration to perform random access, since the first configuration corresponds to the first-type time domain resource and the second configuration corresponds to the second-type time domain resource, the terminal device is capable of selecting different configurations for different types of time domain resources during the random access procedure.

### 3.2 Configuration scheme 2

In optional embodiments based on FIG. 5, the method includes the following step.

**In step 220**, a third configuration is received, where the third configuration is used to configure a related parameter upon transmitting the random access channel, and the third configuration corresponds to the first-type time domain resource and the first-type time domain resource.

In some embodiments, upon configuring a frequency domain related parameter for a random access channel, a set of configuration (i.e., the third configuration) may be commonly used for the first-type time domain resource and the second-type time domain resource.

In some embodiments, the third configuration includes a second parameter; the second parameter is used to indicate an offset value between a lowest random access channel transmission occasion in the frequency domain dimension and a reference point. Herein, for the first-type time domain resource, the reference point is a lowest PRB of a first frequency domain bandwidth in the frequency domain, and for the second-type time domain resource, the reference point is PRB0 of an uplink BWP.

In some embodiments, the third configuration further includes a first parameter, the first parameter is used to indicate a number of random access channel transmission occasions that are frequency division multiplexed in a time unit, for example, a time unit is a time instance.

Exemplarily, as shown in FIG. 16, the third configuration includes a first parameter and a second parameter, where the first parameter may be denoted as msg1-FDM, and the second parameter may be denoted as msg1-FrequencyStart. In FIG. 16, based on parameters msg1-FDM=2 and msg1-FrequencyStart=0 configured by the third configuration, a set of random access channel transmission occasions 28 for the first-type time domain resource and a set of random access channel transmission occasions 29 for the second-type time domain resource are obtained by selection, where the set of random access channel transmission occasions 28 includes 4 random access channel transmission occasions, and the set of random access channel transmission occasions 29 includes 4 random access channel transmission occasions. Herein, a reference point for the first-type time domain resource is denoted as reference point 30, and a reference point for the second-type time domain resource is denoted as reference point 31, where the reference point 30 is a lowest PRB in the frequency domain dimension of an intersection of an uplink subband and an uplink BWP, and the reference point 31 is PRB0 of the uplink BWP.

In summary, for the method provided in the embodiments of the present disclosure, the first-type time domain resource and the second-type time domain resource share one set of configurations, thus saving signaling overhead. The terminal device only needs to maintain one set of configurations, and by applying different interpretation manners to the first-type time domain resource and the second-type time domain resource, it may still ensure that all random access channel transmission occasions are valid, and may also ensure that the random access channel transmission occasions are at both ends of the uplink BWP or the uplink subband, avoiding resource fragmentation.

In some embodiments, the transmission method for the random access channel shown in step 210 and the transmission method for the random access channel shown in step 220 may be implemented in combination. That is, a part of related parameters may be configured by the configuration scheme 1, and another part of related parameters may be configured by the configuration scheme 2; or a first part of parameters among the related parameters may be configured by the configuration scheme 1, a second part of parameters may be configured by the configuration scheme 2, and a third part of parameters may be additionally configured based on a network device or may be agreed upon by a protocol. For example, a power configuration is performed using the configuration scheme 1, and a frequency domain configuration is performed using the configuration scheme 2; or for the frequency domain configuration for the random access channel, the first-type time domain resource corresponds to a first configuration, and the second-type time domain resource corresponds to a second configuration, where the first configuration and the second configuration include a first parameter, and a value of the first parameter corresponding to the first configuration is the same as or different from a value of the first parameter corresponding to the second configuration; and the first-type time domain resource and the second-type time domain resource correspond to a third configuration, where the third configuration includes a second parameter, and the third configuration has different interpretation manners for the first-type time domain resource and the second-type time domain resource. That is, a number of random access channel transmission occasions corresponding to the first-type time domain resource and a number of random access channel transmission occasions corresponding to the second-type time domain resource are determined according to the method shown in step 210, and positions of the random access channel transmission occasions corresponding to the first-type time domain resource and the second-type time domain resource are determined according to the method shown in step 220. Herein, step 210 and step 220 may be implemented as independent embodiments or as a combined embodiment; when step 210 and step 220 are implemented as a combined embodiment, an order for implementing step 210 and step 220 may be swapped or they may be performed simultaneously.

In some embodiments, for a case where the terminal device respectively uses random access preamble transmission counters for the first-type time domain resource and the second-type time domain resource, corresponding random access failure determination method are designed.

In some embodiments, a random access problem is reported based on a first random access preamble transmission counter and a first threshold, or a second random access preamble transmission counter and a second threshold, where the first threshold is related to a first maximum number, the first maximum number is a maximum number of transmissions for a random access preamble corresponding to the first-type time domain resource, the second threshold is related to a second maximum number, the second maximum number is a maximum number of transmissions for a random access preamble corresponding to the second-type time domain resource; or the random access problem is reported based on the first random access preamble transmission counter, the second random access preamble transmission counter and a third threshold, where the third threshold is related to a maximum number of transmissions for a random access preamble corresponding to the first-type time domain resource and the second-type time domain resource; where the random access problem is used to indicate that there is an abnormality in a random access procedure for the terminal device.

**Failure determination method 1: the first-type time domain resource and the second-type time domain resource respectively correspond to maximum numbers of transmissions for a random access preamble.**

A random access problem is reported in a case where a value of the first random access preamble transmission counter is greater than or equal to the first threshold; or the random access problem is reported in a case where a value of the second random access preamble transmission counter is greater than or equal to the second threshold.

In some embodiments, the first threshold is the first maximum number, and the second threshold is the second maximum number; or the first threshold is a sum of the first maximum number and a first initial value, and the second threshold is a sum of the second maximum number and a second initial value.

Exemplarily, the first-type time domain resource is an SBFD symbol, and the second-type time domain resource is a non-SBFD symbol; the first maximum number is denoted as preambleTransMax_SBFD, and the second maximum number is denoted as preambleTransMax_nonSBFD. The first-type time domain resource corresponds to the first random access preamble transmission counter (PREAMBLE_TRANSMISSION_COUNTER_SBFD), and the second-type time domain resource corresponds to the second random access preamble transmission counter (PREAMBLE_TRANSMISSION_COUNTER_nonSBFD); the first threshold is a sum of the first maximum number and the first initial value, and the second threshold is a sum of the second maximum number and the second initial value; the first initial value is an initial value of the first random access preamble transmission counter, which is 1; the second initial value is an initial value of the second random access preamble transmission counter, which is also 1. At this time, if PREAMBLE_TRANSMISSION_COUNTER_SBFD=preambleTransMax_SBFD+1, or PREAMBLE_TRANSMISSION_COUNTER_nonSBFD=preambleTransMax_nonSBFD+1, then the random access problem is reported.

In summary, for the method provided in the embodiments of the present disclosure, by setting a preamble transmission counter to record a number of times the terminal device attempting to perform a random access procedure, the terminal device is capable of determining whether to continue the random access procedure in a case where there are the first-type time domain resource and the second-type time domain resource.

**Failure determination method 2: both the first-type time domain resource and the second-type time domain resource correspond to only one maximum number of transmissions for a random access preamble.**

A random access problem is reported in a case where a number of transmissions is greater than or equal to a third threshold, where the number of transmissions is a sum of a value of the first random access preamble transmission counter and a value of the second random access preamble transmission counter.

In some embodiments, the third threshold is the maximum number of transmissions for the random access preamble; or the third threshold is a sum of the maximum number of transmissions for the random access preamble, the first initial value, and the second initial value.

Exemplarily, the first-type time domain resource is an SBFD symbol, and the second-type time domain resource is a non-SBFD symbol; the maximum number of transmissions for the random access preamble is denoted as preambleTransMax. The first-type time domain resource corresponds to the first random access preamble transmission counter (PREAMBLE_TRANSMISSION_COUNTER_SBFD), and the second-type time domain resource corresponds to the second random access preamble transmission counter (PREAMBLE_TRANSMISSION_COUNTER_nonSBFD); the third threshold is a sum of the maximum number of transmissions for the random access preamble, the first initial value, and the second initial value; the first initial value is an initial value of the first random access preamble transmission counter, which is 1; the second initial value is an initial value of the second random access preamble transmission counter, which is also 1. At this time, if PREAMBLE_TRANSMISSION_COUNTER_SBFD+PREAMBLE_TRANSMISSION_COUN TER_nonSBFD=preambleTransMax+2, then the random access problem is reported.

In summary, for the method provided in the embodiments of the present disclosure, by setting a preamble transmission counter to record a number of times the terminal device attempting to perform a random access procedure, the terminal device is capable of determining whether to continue the random access procedure in a case where there are the first-type time domain resource and the second-type time domain resource.

FIG. 17 shows a flowchart of a transmission method for a random access channel provided in an exemplary embodiment of the present disclosure. The method is performed by a network device, and the method includes the following step.

**In step 330**, the random access channel is received, where the random access channel is transmitted by a terminal device according to a related parameter for the random access channel upon the random access channel being transmitted in a first-type time domain resource and/or a related parameter for the random access channel upon the random access channel being transmitted in a second-type time domain resource.

In some embodiments, a time domain resource includes at least one of: a symbol, a symbol group, a slot, a sub slot, a frame, and a subframe. In the embodiments of the present disclosure, a specific type of a time domain resource is not limited.

In some embodiments, the first-type time domain resource and the second-type time domain resource may be understood as two different duplex modes, slots, or symbols, etc. Number, positions, sizes, and frequency domain bandwidths of available uplink resources in the first-type time domain resource and the second-type time domain resource are different; or the number, positions, sizes, and frequency domain bandwidths of random access channels in the first-type time domain resource and the second-type time domain resource are different. For example, the first-type time domain resource is an SBFD symbol, and the second-type time domain resource is a non-SBFD symbol. Herein, the SBFD symbol is a symbol including at least one of an uplink subband, a downlink subband, and a guard band, and the non-SBFD symbol is a symbol not including the above subbands.

In some embodiments, a related parameter includes at least one of: a transmitting power; a target power level; a value of a power ramping counter; a value of a random access preamble transmission counter; a maximum number of transmissions for a random access preamble; a power ramping step for the random access channel; a first parameter, where the first parameter is used to indicate a number of random access channel transmission occasions that are frequency division multiplexed in a time unit, for example, a time unit is a time instance; a second parameter, where the second parameter is used to indicate an offset value between a lowest random access channel transmission occasion in frequency domain and a reference point, and the reference point is PRB0 of an uplink BWP. Herein, the transmitting power is used to indicate how much energy the terminal device may use to transmit the random access channel; the target power level is used to indicate a target power of the random access channel expected by a receiver of the network device; the value of the power ramping counter is used to indicate a number of power ramping times, generally, each time a random access failure occurs, the value of the power ramping counter may be incremented by 1. The random access preamble transmission counter is used to indicate a number of preamble transmissions in a random access procedure, i.e., a number of transmissions of the random access channel; the maximum number of transmissions for a random access preamble is used to indicate a maximum number of transmissions for a preamble in the entire random access procedure, i.e., a maximum number of transmissions for the random access channel; the power ramping step for the random access channel is used to indicate an amount of power increase at each power ramping.

Exemplarily, as shown in FIG. 6, a square 10 with slanted lines represents a random access channel transmission occasion, the first parameter is 2 and is used to indicate that a number of random access channel transmission occasions that are frequency division multiplexed in a time unit is 2; if the reference point is PRB0 of an active UL BWP (active uplink BWP), i.e., a starting PRB of the active UL BWP, then in FIG. 6, the offset value between the lowest random access channel transmission occasion in a frequency domain dimension and PRB0 is the second parameter.

In some embodiments, a related parameter for the random access channel upon the random access channel being transmitted includes a power related parameter and/or a frequency domain related parameter.

In some embodiments, the power-related parameter includes a transmitting power and a power ramping counter.

Herein, a specific calculation process for the transmitting power is a calculation process for the transmitting power of the terminal device, which is not repeated herein.

In some embodiments, the target power level includes a first target power level and a second target power level, the first-type time domain resource corresponds to the first target power level, and the second-type time domain resource corresponds to the second target power level; the random access channel is received, a random access channel transmission occasion corresponds to the first-type time domain resource, and a first transmitting power of the random access channel is determined by the terminal device based on the first target power level; and/or the random access channel is received, a random access channel transmission occasion corresponds to the second-type time domain resource, and a second transmitting power of the random access channel is determined by the terminal device based on the second target power level.

In some embodiments, the first transmitting power is determined by the terminal device based on at least one of the first target power level, the power ramping step, the power ramping counter, and a preamble delta; the second transmitting power is determined by the terminal device based on at least one of the second target power level, the power ramping step, the power ramping counter, and the preamble delta; where the preamble delta is determined based on at least one of a random access preamble format and a subcarrier spacing.

In some embodiments, the first-type time domain resource corresponds to at least one of a first power ramping counter, a first random access preamble transmission counter, and a first power ramping step; the second-type time domain resource corresponds to at least one of a second power ramping counter, a second random access preamble transmission counter, and a second power ramping step.

In some embodiments, the random access channel is received, a random access channel transmission occasion corresponds to the first-type time domain resource, and the first transmitting power of the random access channel is determined by the terminal device based on at least one of the first target power level and a value of the first power ramping counter; and/or the random access channel is received, a random access channel transmission occasion corresponds to the second-type time domain resource, and the second transmitting power of the random access channel is determined by the terminal device based on at least one of the second target power level and a value of the second power ramping counter. For example, the first-type time domain resource corresponds to the first power ramping counter, the second-type time domain resource corresponds to the second power ramping counter, but the first-type time domain resource and the second-type time domain resource share the same target power level; and for another example, the first-type time domain resource corresponds to the first target power level, the second-type time domain resource corresponds to the second target power level, but the first-type time domain resource and the second-type time domain resource share the same power ramping counter. For yet another example, the first-type time domain resource corresponds to the first target power level and the first power ramping counter, and the second-type time domain resource corresponds to the second target power level and the second power ramping counter.

In some embodiments, the first transmitting power is determined by the terminal device based on at least one of the first target power level, the first power ramping step, the first power ramping counter, and a preamble delta; the second transmitting power is determined by the terminal device based on at least one of the second target power level, the second power ramping step, the second power ramping counter, and the preamble delta; where the preamble delta is determined based on at least one of a random access preamble format and a subcarrier spacing.

Different ramping manners of a power ramping counter in the terminal device are shown below.

In some embodiments, for a random access channel transmission, if a corresponding type of a time domain resource changes compared to a type of a time domain resource for a previous transmission, the terminal device keeps the power ramping counter unchanged.

In some embodiments, for a random access channel transmission, if a corresponding type of a time domain resource changes compared to a type of a time domain resource for a previous transmission, the terminal device resets or initializes the power ramping counter.

In some embodiments, upon initiating a random access procedure, the terminal device initializes at least one of the first power ramping counter, the first random access preamble transmission counter, the second power ramping counter and the second random access preamble transmission counter; in a case that a random access channel transmission fails and the random access channel corresponds to the first-type time domain resource, the first random access preamble transmission counter in the terminal device is increased by 1; in a case that the random access channel transmission fails and the random access channel corresponds to the second-type time domain resource, the second random access preamble transmission counter in the terminal device is increased by 1; in a case where the random access channel corresponds to the first-type time domain resource and a value of the first random access preamble transmission counter is greater than a first initial value, the first power ramping counter in the terminal device is increased by 1; in a case where the random access channel corresponds to the second-type time domain resource and a value of the second random access preamble transmission counter is greater than a second initial value, the second power ramping counter in the terminal device is increased by 1. Herein, random access channel transmission failing indicates that: if a RAR window expires, but a random access response containing a first random access preamble identifier is not received or contention resolution is not successful, then the random access channel transmission is considered to have failed. The first random access preamble identifier matches a random access channel preamble index (e.g., a PRACH preamble index) transmitted from the terminal.

In some embodiments, an initial transmission and a retransmission for the random access channel correspond to a same type of a time domain resource; or the terminal device does not expect that a type of a time domain resource corresponding to a retransmission for the random access channel changes with respect to an initial transmission or with respect to a previous transmission; or the terminal device does not expect that a type of a time domain resource corresponding to a retransmission for the random access channel is different from a time domain resource type corresponding to an initial transmission for the random access channel or a previous transmission for the random access channel.

In some embodiments, a random access problem reported by the terminal device is received, where the random access problem is reported based on the first random access preamble transmission counter and a first threshold, or based on the second random access preamble transmission counter and a second threshold, the first threshold is related to a first maximum number, the first maximum number is a maximum number of transmissions for a random access preamble corresponding to the first-type time domain resource, the second threshold is related to a second maximum number, the second maximum number is a maximum number of transmissions for a random access preamble corresponding to the second-type time domain resource; or the random access problem reported by the terminal device is received, where the random access problem is reported based on the first random access preamble transmission counter, the second random access preamble transmission counter, and a third threshold, the third threshold is related to a maximum number of transmissions for a random access preamble corresponding to the first-type time domain resource and the second-type time domain resource; where the random access problem is used to indicate that there is an abnormality in a random access procedure for the terminal device.

In some embodiments, a random access channel transmission occasion is valid in the following situations: the random access channel transmission occasion is within an uplink symbol; or the random access channel transmission occasion is within the first-type time domain resource and the random access channel transmission occasion is located within a first frequency domain bandwidth, for example, the random access channel transmission occasion is within the first-type time domain resource and the random access channel transmission occasion is located within an intersection of an uplink subband and an uplink BWP. Herein, the first-type time domain resource is an SBFD symbol; a random access channel transmission occasion being within an uplink symbol indicates that symbols where the random access channel transmission occasions is located are all uplink symbols; a random access channel transmission occasion being within the first-type time domain resource indicates that symbols where the random access channel transmission occasion is located are all SBFD symbols; that is to say, if symbols where a a random access channel transmission occasion is located include both an uplink symbols and an SBFD symbols, then the random access channel transmission occasion is invalid.

In some embodiments, the first frequency domain bandwidth is a subset of an available uplink bandwidth configured by a network device for a terminal device; the first frequency domain bandwidth is an actual available uplink bandwidth determined in an uplink BWP of the terminal device based on a first duplex mode or the first-type time domain resource. The first duplex mode or the first-type time domain resource may be SBFD.

In some embodiments, an uplink BWP is an uplink BWP activated for an uplink transmission of the terminal device. The first frequency domain bandwidth is a full bandwidth or a part of the bandwidth of an uplink BWP. Since available uplink subbands within different duplex modes or different types of time domain resources are different, even for the same terminal device, the first frequency domain bandwidth may dynamically change.

In some embodiments, the first frequency domain bandwidth may be understood as an available subband, an available uplink subband, an actual available subband or an actual available uplink subband in an uplink BWP.

In summary, in the method provided in the embodiments of the present disclosure, the network device receives the random access channel, the random access channel is transmitted from the terminal device according to the related parameters upon the random access channel being transmitted in the first-type time domain resource and/or related parameters upon the random access channel being transmitted in the second-type time domain resource, that is, the random access channel received by the network device is determined by the terminal device according to different related parameters corresponding to different types of time domain resources.

In an optional embodiment, the first frequency domain bandwidth is an available part of subbands within an uplink BWP. The first frequency domain bandwidth is an actual available uplink bandwidth for the terminal device. The description for the first frequency domain bandwidth is detailed in the above "1. First frequency domain bandwidth", and will not be repeated herein.

In some embodiments, the network device provides differentiated configurations for the terminal device for the first-type time domain resource resources and/or the second-type time domain resources. There are two configuration schemes, and these two configuration schemes are introduced separately below.

### 4.1 Configuration scheme 1

In optional embodiments based on FIG. 17, the method further includes the following step.

**In step 310**, a first configuration and a second configuration are transmitted, where the first configuration and the second configuration are used for configuring related parameters during a random access channel transmission, the first configuration corresponds to a first-type time domain resource, and the second configuration corresponds to a second-type time domain resource.

In some embodiments, a time domain resource includes at least one of: a symbol, a symbol group, a slot, a sub slot, a frame, and a subframe. A specific type of a time domain resource is not limited in the embodiments of the present disclosure, and an example of the first configuration corresponding to a first-type symbol, and the second configuration corresponding to a second-type symbol is generally given for illustration. For example, the first configuration corresponds to an SBFD symbol, and the second configuration corresponds to a non-SBFD symbol. Herein, the SBFD symbol is a symbol including at least one of an uplink subband, a downlink subband, and a guard band, and the non-SBFD symbol is a symbol not including the above subbands.

In some embodiments, a configuration for the random access channel includes at least one of a power configuration and a frequency domain configuration, the power configuration is used to configure a power related parameter for random access channel transmission, and the frequency domain configuration is used to configure a frequency domain related parameter for random access channel transmission. The first configuration includes at least one of a first power configuration and a first frequency domain configuration; the second configuration includes at least one of a second power configuration and a second frequency domain configuration. Configuration items included in the first configuration and the second configuration are the same, i.e., when the first configuration includes the first power configuration, the second configuration should also include the second power configuration; when the first configuration includes the first frequency domain configuration, the second configuration should also include the second frequency domain configuration; when the first configuration includes the first power configuration and the first frequency domain configuration, the second configuration should also include the second power configuration and the second frequency domain configuration.

In some embodiments, the power configuration includes at least one of the following related parameters: a target power level; a maximum number of transmissions for a random access preamble; a power ramping step for a random access channel; i.e., any one of the first configuration and the second configuration includes at least one of the following related parameters: a target power level; a maximum number of transmissions for a random access preamble; a power ramping step for a random access channel.

In some embodiments, the power related parameter includes at least one of the following parameters: a transmitting power; a target power level; a value of a power ramping counter; a value of a random access preamble transmission counter; a maximum number of transmissions for a random access preamble; a power ramping step for a random access channel.

In some embodiments, the first configuration and the second configuration only include parameters with different values, where parameters with the same value in the first configuration and the second configuration may be additionally configured by the network device or agreed upon by a communication protocol; for example, the first configuration includes the first target power level, the second configuration includes the second target power level, and the maximum number of transmissions for a random access preamble and a power ramping step for a random access channel are additionally configured by the network device or agreed upon by the communication protocol; or the first configuration includes the first target power level and the first power ramping step, the second configuration includes the second target power level and the second power ramping step, and the maximum number of transmissions for a random access preamble is additionally configured by the network device or agreed upon by the communication protocol; or the first configuration includes the first target power level and the first maximum number, the second configuration includes the second target power level and the second maximum number, and a power ramping step for a random access channel is additionally configured by the network device or agreed upon by the communication protocol; or the first configuration includes the first target power level, the first maximum number, and the first power ramping step, the second configuration includes the second target power level, the second maximum number, and the second power ramping step.

In some embodiments, the first configuration and the second configuration include all parameters. That is, the first configuration includes the first target power level, the first maximum number, and the first power ramping step, and the second configuration includes the second target power level, the second maximum number, and the second power ramping step. The first maximum number and the second maximum number are the same or different, and the first power ramping step and the second power ramping step are the same or different.

In some embodiments, the frequency domain configuration includes at least one of the following related parameters: a first parameter, where the first parameter is used to indicate a number of random access channel transmission occasions that are frequency division multiplexed in a time unit; a second parameter, where the second parameter is used to indicate an offset value between a lowest random access channel transmission occasion in the frequency domain and a reference point, the reference point is PRB0 of an uplink BWP; i.e., any one of the first configuration and the second configuration includes at least one of the following related parameters: the first parameter, where the first parameter is used to indicate a number of random access channel transmission occasions that are frequency division multiplexed in a time unit; the second parameter, where the second parameter is used to indicate an offset value between a lowest random access channel transmission occasion in the frequency domain and a reference point, the reference point is PRB0 of an uplink BWP.

In some embodiments, the first configuration and the second configuration share a part of related parameters. Exemplarily, as shown in FIG. 14, the terminal device uses one set of a power ramping counter and a preamble transmission counter for the first configuration and the second configuration, where the shared related parameters corresponding to the first configuration and the second configuration are the power ramping counter and the preamble transmission counter. The first configuration includes at least one of: a first target power level, a first maximum number, a first power ramping step, a first parameter 1, a second parameter 1. The second configuration includes at least one of: a second target power level, a second maximum number, a second power ramping step, a first parameter 2, a second parameter 2. Herein, the first target power level and the second target power level are usually different. The first maximum number and the second maximum number may be the same or different, the first power ramping step and the second power ramping step may be the same or different, the first parameter 1 and the first parameter 2 may be the same or different, and the second parameter 1 and the second parameter 2 may be the same or different.

In some embodiments, the first configuration and the second configuration do not share related parameters. Exemplarily, as shown in FIG. 15. The terminal device respectively uses two sets of a power ramping counter and a preamble transmission counter for the first configuration and the second configuration. The first configuration includes at least one of: a first target power level, a first maximum number, a first power ramping step, a first power ramping counter, a first preamble transmission counter, a first parameter 1, a second parameter 1. The second configuration includes at least one of: a second target power level, a second maximum number, a second power ramping step, a second power ramping counter, a second preamble transmission counter, a first parameter 2, a second parameter 2. Herein, the first target power level and the second target power level are usually different. The first maximum number and the second maximum number may be the same or different, the first power ramping step and the second power ramping step may be the same or different, the first power ramping counter and the second power ramping counter are usually different, the first preamble transmission counter and the second preamble transmission counter are usually different, the first parameter 1 and the first parameter 2 may be the same or different, and the second parameter 1 and the second parameter 2 may be the same or different.

In some embodiments, a first configuration parameter is transmitted and a second configuration parameter is transmitted, where the first configuration parameter corresponds to the first configuration, and the second configuration parameter corresponds to the second configuration; or the first configuration parameter and an offset value are transmitted, where the first configuration parameter corresponds to the first configuration, and a configuration parameter obtained by offsetting the first configuration parameter based on the offset value corresponds to the second configuration; or the second configuration parameter and an offset value are transmitted, where the second configuration parameter corresponds to the second configuration, and a configuration parameter obtained by offsetting the second configuration parameter based on the offset value corresponds to the first configuration; or the first configuration parameter is transmitted, where the first configuration parameter corresponds to the first configuration; or a second configuration parameter is transmitted, where the second configuration parameter corresponds to the second configuration. Exemplarily, the first configuration parameter includes the first target power level, and the second configuration parameter includes the second target power level; or the first configuration includes the first target power level, and the offset value includes a target power level offset, then the second target power level corresponding to the second configuration is a sum of the first target power level and the target power level offset; or the first configuration includes the first target power level and the first power ramping step, and the offset value includes a target power level offset and a power ramping step offset, then the second target power level corresponding to the second configuration is a sum of the first target power level and the target power level offset, and the second power ramping step corresponding to the second configuration is a sum of the first power ramping step and the power ramping step offset.

In some embodiments, a part of related parameters among the related parameters are configured by the first configuration parameter and the second configuration parameter; another part of the related parameters among the related parameters are configured by the first configuration parameter and the offset value; or a first part of parameters among the related parameters are configured by the first configuration parameter and the second configuration parameter, a second part of parameters among the related parameters are configured by the first configuration parameter and the offset value, and a third part of parameters among the related parameters are additionally configured by the network device or agreed upon by a protocol. For example, the related parameters include a target power level, a maximum number of transmissions for a random access preamble, and a power ramping step for a random access channel; for the target power level, it is configured by using the first configuration parameter (i.e., the first target power level) and the second configuration parameter (i.e., the second target power level); or additionally configured based on the network device or agreed upon by a protocol; or configured by using the first configuration parameter (i.e., the first target power level) and an offset value (i.e., the target power level offset); for the maximum number of transmissions for a random access preamble, it is configured by using the first configuration parameter (i.e., the first maximum number) and the second configuration parameter (i.e., the second maximum number); or additionally configured based on the network device or agreed upon by a protocol; or configured by using the first configuration parameter (i.e., the first maximum number) and an offset value (i.e., a maximum number offset); for the power ramping step for a random access channel, it is configured by using the first configuration parameter (i.e., the first power ramping step) and the second configuration parameter (i.e., the second power ramping step); or additionally configured based on the network device or agreed upon by a protocol; or configured by using the first configuration parameter (i.e., the first power ramping step) and an offset value (i.e., the power ramping step offset).

Exemplarily, the first configuration parameter includes the first target power level, and the second configuration parameter includes the second target power level; or the first configuration includes the first target power level, and the offset value includes a target power level offset, then the second target power level corresponding to the second configuration is a sum of the first target power level and the target power level offset; or the first configuration includes the first target power level and the first power ramping step, and the offset value includes a target power level offset and a power ramping step offset, then the second target power level corresponding to the second configuration is a sum of the first target power level and the target power level offset, and the second power ramping step corresponding to the second configuration is a sum of the first power ramping step and the power ramping step offset.

For example, the second configuration parameter is the second target power level, which is denoted as preambleReceivedTargetPower, and the offset value is a target power level offset, which is denoted as delta_SBFD, then the first target power level corresponding to the first configuration is preambleReceivedTargetPower+delta_SBFD. At this time, calculation formulas for the first transmitting power and the second transmitting power are as follows. $\begin{matrix}First transmitting power = \\ preambleReceivedTargetPower + delta _ SBFD + DELTA _ PREAMBLE + \\ \left(PREAMBLE_POWER_RAMPING_COUNTER-1\right) \\ \times PREAMBLE _ POWER _ RAMPING _ STEP .\end{matrix}$ $\begin{matrix}Second transmitting power = preambleReceivedTargetPower + DELTA _ PREAMBLE + \\ \left(PREAMBLE_POWER_RAMPING_COUNTER-1\right) \\ \times PREAMBLE _ POWER _ RAMPING _ STEP .\end{matrix}$

In an optional embodiment, a power configuration for the random access channel may also adopt the following manners: in a case where a type of a time domain resource used in a current transmission is different from a type of a time domain resource used in a previous transmission, the power ramping counter is increased by 1; offset times are set and denoted as counter_SBFD, when a type of a time domain resource used for an initial transmission is the first-type time domain resource, the offset times are initialized to 1; when the type of the time domain resource used for the initial transmission is the second-type time domain resource, the offset times are initialized to 0; when a type of a time domain resource used for retransmission is the first-type time domain resource, the offset times are increased by 1, i.e., counter_SBFD+1. At this time, calculation formulas for the first transmitting power and the second transmitting power are as follows. $\begin{matrix}First transmitting power = preambleReceivedTargetPower + DELTA _ PREAMBLE + \\ \left(PREAMBLE_POWER_RAMPING_COUNTER-1\right) \\ \times PREAMBLE _ POWER _ RAMPING _ STEP + counter _ SBFD \times delta _ SBFD .\end{matrix}$ $\begin{matrix}Second transmitting power = preambleReceivedTargetPower + DELTA _ PREAMBLE + \\ \left(PREAMBLE_POWER_RAMPING_COUNTER-1\right) \\ \times PREAMBLE _ POWER _ RAMPING _ STEP .\end{matrix}$

In summary, in the method provided in the embodiments of the present disclosure, the network device performs random access by transmitting the first configuration and the second configuration of the random access channel to the terminal device, since the first configuration corresponds to the first-type time domain resource and the second configuration corresponds to the second-type time domain resource, the terminal device is capable of selecting different configurations for different types of time domain resources during the random access procedure.

### 4.2 Configuration scheme 2

In optional embodiments based on FIG. 17, the method further includes the following step.

**In step 320**, a third configuration is transmitted, where the third configuration is used to configure a related parameter upon transmitting the random access channel, and the third configuration corresponds to the first-type time domain resource and the first-type time domain resource.

In some embodiments, upon configuring a frequency domain related parameter for a random access channel, a set of configuration (i.e., the third configuration) may be commonly used for the first-type time domain resource and the second-type time domain resource.

In some embodiments, the third configuration includes a second parameter; the second parameter is used to indicate an offset value between a lowest random access channel transmission occasion in the frequency domain dimension and a reference point. Herein, for the first-type time domain resource, the reference point is a lowest PRB of a first frequency domain bandwidth in the frequency domain, and for the second-type time domain resource, the reference point is PRB0 of an uplink BWP.

In some embodiments, the third configuration further includes a first parameter, the first parameter is used to indicate a number of random access channel transmission occasions that are frequency division multiplexed in a time unit, for example, a time unit is a time instance.

Exemplarily, as shown in FIG. 16, the third configuration includes a first parameter and a second parameter, where the first parameter may be denoted as msg1-FDM, and the second parameter may be denoted as msg1-FrequencyStart. In FIG. 16, based on parameters msg1-FDM=2 and msg1-FrequencyStart=0 configured by the third configuration, a set of random access channel transmission occasions 28 for the first-type time domain resource and a set of random access channel transmission occasions 29 for the second-type time domain resource are obtained by selection, where the set of random access channel transmission occasions 28 includes 4 random access channel transmission occasions, and the set of random access channel transmission occasions 29 includes 4 random access channel transmission occasions. Herein, a reference point for the first-type time domain resource is denoted as reference point 30, and a reference point for the second-type time domain resource is denoted as reference point 31, where the reference point 30 is a lowest PRB in the frequency domain dimension of an intersection of an uplink subband and an uplink BWP, and the reference point 31 is PRB0 of the uplink BWP.

In summary, in the method provided in the embodiments of the present disclosure, the network device sets only one set of configurations for the first-type time domain resource and the second-type time domain resource, thus saving signaling overhead. The terminal device only needs to maintain one set of configurations, and by applying different interpretation manners to the first-type time domain resource and the second-type time domain resource, it may still ensure that all random access channel transmission occasions are valid, and may also ensure that the random access channel transmission occasions are at both ends of the uplink BWP or the uplink subband, avoiding resource fragmentation.

In some embodiments, the transmission method for the random access channel shown in step 310 and the transmission method for the random access channel shown in step 320 may be implemented in combination. That is, a part of related parameters may be configured by the configuration scheme 1, and another part of related parameters may be configured by the configuration scheme 2; or a first part of parameters among the related parameters may be configured by the configuration scheme 1, a second part of parameters may be configured by the configuration scheme 2, and a third part of parameters may be additionally configured based on a network device or may be agreed upon by a protocol. For example, for the frequency domain configuration for the random access channel, the first-type time domain resource corresponds to a first configuration, and the second-type time domain resource corresponds to a second configuration, where the first configuration and the second configuration include a first parameter, and a value of the first parameter corresponding to the first configuration is the same as or different from a value of the first parameter corresponding to the second configuration; and the first-type time domain resource and the second-type time domain resource correspond to a third configuration, where the third configuration includes a second parameter, and the third configuration has different interpretation manners for the first-type time domain resource and the second-type time domain resource. That is, terminal device is enabled to configure a number of random access channel transmission occasions corresponding to the first-type time domain resource and a number of random access channel transmission occasions corresponding to the second-type time domain resource according to the method shown in step 310, and configure positions of the random access channel transmission occasions corresponding to the first-type time domain resource and the second-type time domain resource according to the method shown in step 320. Herein, step 310 and step 320 may be implemented as independent embodiments or as a combined embodiment; when step 310 and step 320 are implemented as a combined embodiment, an order for implementing step 310 and step 320 may be swapped or they may be performed simultaneously.

FIG. 18 shows a flowchart of a transmission method for a random access channel provided in an exemplary embodiment of the present disclosure. The method is performed by the above-mentioned terminal device, and the method includes the following step.

**In step 410**, at least one of a first configuration, a second configuration and a third configuration is received, where the first configuration, the second configuration, and the third configuration are used to configure related parameters for transmitting the random access channel, the first configuration corresponds to a first-type time domain resource, the second configuration corresponds to a second-type time domain resource, and the third configuration corresponds to the first-type time domain resource and the second-type time domain resource.

In some embodiments, a time domain resource includes at least one of: a symbol, a symbol group, a slot, a sub slot, a frame, and a subframe. In the embodiments of the present disclosure, a specific type of a time domain resource is not limited.

In some embodiments, the first-type time domain resource and the second-type time domain resource may be understood as two different duplex modes, slots, or symbols, etc. Number, positions, sizes, and frequency domain bandwidths of available uplink resources in the first-type time domain resource and the second-type time domain resource are different; or the number, positions, sizes, and frequency domain bandwidths of random access channels in the first-type time domain resource and the second-type time domain resource are different. For example, the first-type time domain resource is an SBFD symbol, and the second-type time domain resource is a non-SBFD symbol. Herein, the SBFD symbol is a symbol including at least one of an uplink subband, a downlink subband, and a guard band, and the non-SBFD symbol is a symbol not including the above subbands.

In some embodiments, the terminal device receives the first configuration and the second configuration; or the terminal device receives the third configuration; or the terminal device receives the first configuration, the second configuration, and the third configuration.

Herein, descriptions for the first configuration, the second configuration, and the third configuration received by the terminal device may refer to the above "3.1 configuration scheme 1" and "3.2 configuration scheme 2", which are not repeated herein.

In summary, in the method provided in the embodiments of the present disclosure, the terminal device receives at least one of the first configuration, the second configuration, and the third configuration before transmitting the random access channel, where the first configuration, the second configuration, and the third configuration are used to configure related parameters for transmitting the random access channel, the first configuration corresponds to the first-type time domain resource, the second configuration corresponds to the second-type time domain resource, and the third configuration corresponds to the first-type time domain resource and the second-type time domain resource. The first configuration and the second configuration correspond to a case of separate configurations, and the third configuration corresponds to a case of a common configuration; whether it is separate configurations or a common configuration, both may enable the terminal device to select different configurations for different types of time domain resources in a random access procedure.

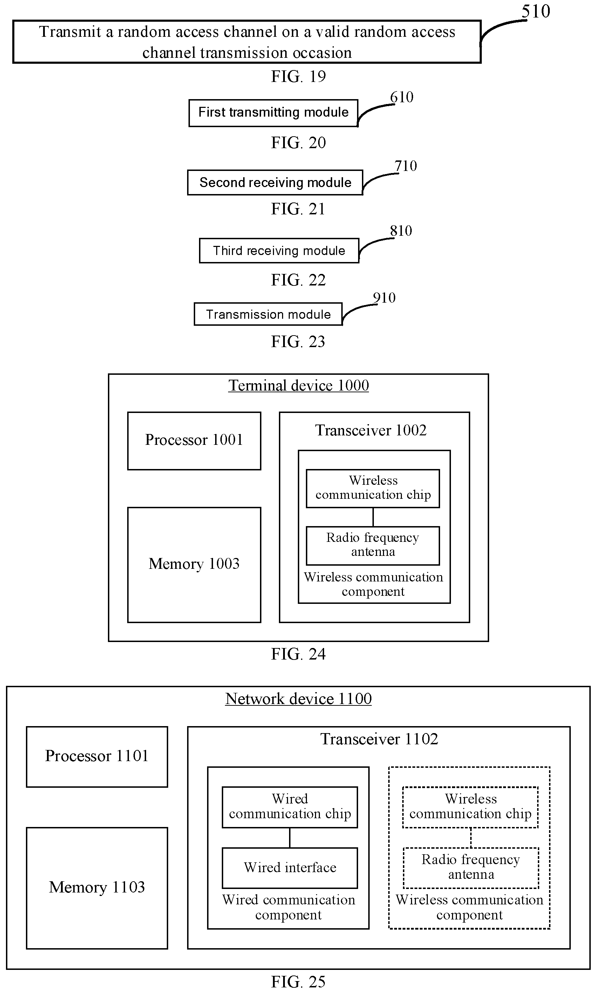

FIG. 19 shows a flowchart of a transmission method for a random access channel provided in an exemplary embodiment of the present disclosure. The method is performed by the above-mentioned terminal device, and the method includes the following step.

**In step 510**, a random access channel is transmitted on a valid random access channel transmission occasion.

Herein, a random access channel transmission occasion is valid in the following situations: the random access channel transmission occasion is within an uplink symbol; or the random access channel transmission occasion is within the first-type time domain resource, and the random access channel transmission occasion is located within a first frequency domain bandwidth.

For example, the random access channel transmission occasion is within the first-type time domain resource, and the random access channel transmission occasion is located within an intersection of an uplink subband and an uplink BWP. Herein, the first-type time domain resource is an SBFD symbol; a random access channel transmission occasion being within an uplink symbol indicates that symbols where the random access channel transmission occasions is located are all uplink symbols; a random access channel transmission occasion being within the first-type time domain resource indicates that symbols where the random access channel transmission occasion is located are all SBFD symbols; that is to say, if symbols where a a random access channel transmission occasion is located include both an uplink symbols and an SBFD symbols, then the random access channel transmission occasion is invalid.

In some embodiments, the first frequency domain bandwidth is a subset of an available uplink bandwidth configured by the network device for the terminal device; the first frequency domain bandwidth is an actual available uplink bandwidth determined in an uplink BWP of the terminal device based on a first duplex mode or the first-type time domain resource. The first duplex mode or the first-type time domain resource may be SBFD.

In some embodiments, an uplink BWP is an uplink BWP activated for an uplink transmission of the terminal device. The first frequency domain bandwidth is a full bandwidth or a part of the bandwidth of an uplink BWP. Since available uplink subbands within different duplex modes or different types of time domain resources are different, even for the same terminal device, the first frequency domain bandwidth may dynamically change.

In some embodiments, the first frequency domain bandwidth may be understood as an available subband, an available uplink subband, an actual available subband or an actual available uplink subband in an uplink BWP.

In some embodiments, the first frequency domain bandwidth is a part of available subbands within an uplink BWP. The first frequency domain bandwidth is an actual available uplink bandwidth for the terminal device. The description for the first frequency domain bandwidth is detailed in the above "1. First frequency domain bandwidth", and will not be repeated herein.

In summary, in the method provided in the embodiments of the present disclosure, a transmission condition of the random access channel is shown, which is to transmit the random access channel on a valid random access channel transmission occasion, and a transmission condition of the valid random access channel transmission occasion is provided, so that the terminal devicemay successfully perform transmission during the random access channel transmission.

FIG. 20 shows a structural block diagram of a transmission apparatus for a random access channel provided in an exemplary embodiment of the present disclosure, where the apparatus may be implemented as a terminal device through software or hardware or a combination of both, or implemented as a part of a terminal device, and the apparatus includes:
**a first transmitting module 610, configured to** transmit the random access channel according to a related parameter for the random access channel upon the random access channel being transmitted in a first-type time domain resource and/or a related parameter for the random access channel upon the random access channel being transmitted in a second-type time domain resource.

In some embodiments, a time domain resource includes at least one of: a symbol, a symbol group, a slot, a sub slot, a frame, and a subframe. In the embodiments of the present disclosure, a specific type of a time domain resource is not limited.

In some embodiments, the first-type time domain resource and the second-type time domain resource may be understood as two different duplex modes, slots, or symbols, etc. Number, positions, sizes, and frequency domain bandwidths of available uplink resources in the first-type time domain resource and the second-type time domain resource are different; or the number, positions, sizes, and frequency domain bandwidths of random access channels in the first-type time domain resource and the second-type time domain resource are different. For example, the first-type time domain resource is an SBFD symbol, and the second-type time domain resource is a non-SBFD symbol. Herein, the SBFD symbol is a symbol including at least one of an uplink subband, a downlink subband, and a guard band, and the non-SBFD symbol is a symbol not including the above subbands.

In some embodiments, a related parameter includes at least one of: a transmitting power; a target power level; a value of a power ramping counter; a value of a random access preamble transmission counter; a maximum number of transmissions for a random access preamble; a power ramping step for the random access channel; a first parameter, where the first parameter is used to indicate a number of random access channel transmission occasions that are frequency division multiplexed in a time unit; a second parameter, where the second parameter is used to indicate an offset value between a lowest random access channel transmission occasion in frequency domain and a reference point, and the reference point is PRB0 of an uplink BWP, i.e., a starting PRB of the uplink BWP. Herein, the transmitting power is used to indicate how much energy the terminal device may use to transmit the random access channel; the target power level is used to indicate a target power of the random access channel expected by a receiver of the network device; the value of the power ramping counter is used to indicate a number of power ramping times, generally, each time a random access failure occurs, the value of the power ramping counter may be incremented by 1. The random access preamble transmission counter is used to indicate a number of preamble transmissions in a random access procedure, i.e., a number of transmissions of the random access channel; the maximum number of transmissions for a random access preamble is used to indicate a maximum number of transmissions for a preamble in the entire random access procedure, i.e., a maximum number of transmissions for the random access channel; the power ramping step for the random access channel is used to indicate an amount of power increase at each power ramping.

Exemplarily, as shown in FIG. 6, a square 10 with slanted lines represents a random access channel transmission occasion, the first parameter is 2 and is used to indicate that a number of random access channel transmission occasions that are frequency division multiplexed in a time instance is 2; if the reference point is PRB0 of an active UL BWP (active uplink BWP), i.e., a starting PRB of the active UL BWP, then in FIG. 6, the offset value between the lowest random access channel transmission occasion in a frequency domain dimension and PRB0 is the second parameter.

In some embodiments, a related parameter for the random access channel upon the random access channel being transmitted includes a power related parameter and/or a frequency domain related parameter.

In some embodiments, a random access channel transmission occasion is valid in the following situations: the random access channel transmission occasion is within an uplink symbol; or the random access channel transmission occasion is within the first-type time domain resource and the random access channel transmission occasion is located within a first frequency domain bandwidth, for example, the random access channel transmission occasion is within an SBFD symbol and the random access channel transmission occasion is located within an intersection of an uplink subband and an uplink BWP. Herein, the first-type time domain resource is the SBFD symbol; a random access channel transmission occasion being within an uplink symbol indicates that symbols where the random access channel transmission occasions is located are all uplink symbols; a random access channel transmission occasion being within the first-type time domain resource indicates that symbols where the random access channel transmission occasion is located are all SBFD symbols; that is to say, if symbols where a a random access channel transmission occasion is located include both an uplink symbols and an SBFD symbols, then the random access channel transmission occasion is invalid.

In some embodiments, the first frequency domain bandwidth is a subset of an available uplink bandwidth configured by the network device for the terminal device; the first frequency domain bandwidth is an actual available uplink bandwidth determined in an uplink BWP of the terminal device based on a first duplex mode or the first-type time domain resource. The first duplex mode or the first-type time domain resource may be SBFD.

In some embodiments, an uplink BWP is an uplink BWP activated for an uplink transmission of the terminal device. The first frequency domain bandwidth is a full bandwidth or a part of the bandwidth of an uplink BWP. Since available uplink subbands within different duplex modes or different types of time domain resources are different, even for the same terminal device, the first frequency domain bandwidth may dynamically change.

In some embodiments, the first frequency domain bandwidth may be understood as an available subband, an available uplink subband, an actual available subband or an actual available uplink subband in an uplink BWP.

In summary, in the apparatus provided in the embodiments of the present disclosure, the terminal device transmits the random access channel according to the related parameter for the random access channel upon the random access channel being transmitted in the first-type time domain resource and/or the related parameter for the random access channel upon the random access channel being transmitted in the second-type time domain resource. That is, the terminal device may determine, for different types of time domain resources, the related parameters used for transmission under respective types of time domain resources, and transmit the random access channel according to a corresponding related parameter.

In an optional embodiment, the first frequency domain bandwidth is an available part of subbands within an uplink BWP. The first frequency domain bandwidth is an actual available uplink bandwidth for the terminal device. The description for the first frequency domain bandwidth is detailed in the above "1. First frequency domain bandwidth", and will not be repeated herein.

In some embodiments, a related parameter for the random access channel upon the random access channel being transmitted includes a power related parameter and/or a frequency domain related parameter. Specific descriptions for the power related parameter and the frequency domain related parameter may refer to "2.1 power related parameter" and "2.2 frequency domain related parameter" on the method side, which are not repeated herein.

In some embodiments, the network device provides differentiated configurations for the terminal device for the first-type time domain resource resources and/or the second-type time domain resources. There are two configuration schemes, and these two configuration schemes are introduced separately below.

### 3.1 Configuration scheme 1

In an optional embodiment based on FIG. 20, the apparatus further includes:
**a first receiving module, configured to** receive a first configuration and a second configuration, where the first configuration and the second configuration are used for configuring related parameters during a random access channel transmission, the first configuration corresponds to a first-type time domain resource, and the second configuration corresponds to a second-type time domain resource.

In some embodiments, a time domain resource includes at least one of: a symbol, a symbol group, a slot, a sub slot, a frame, and a subframe. A specific type of a time domain resource is not limited in the embodiments of the present disclosure, and an example of the first configuration corresponding to a first-type symbol, and the second configuration corresponding to a second-type symbol is generally given for illustration. For example, the first configuration corresponds to an SBFD symbol, and the second configuration corresponds to a non-SBFD symbol. Herein, the SBFD symbol is a symbol including at least one of an uplink subband, a downlink subband, and a guard band, and the non-SBFD symbol is a symbol not including the above subbands.

In some embodiments, a configuration for the random access channel includes at least one of a power configuration and a frequency domain configuration, the power configuration is used to configure a power related parameter for random access channel transmission, and the frequency domain configuration is used to configure a frequency domain related parameter for random access channel transmission. The first configuration includes at least one of a first power configuration and a first frequency domain configuration; the second configuration includes at least one of a second power configuration and a second frequency domain configuration. Configuration items included in the first configuration and the second configuration are the same, i.e., when the first configuration includes the first power configuration, the second configuration should also include the second power configuration; when the first configuration includes the first frequency domain configuration, the second configuration should also include the second frequency domain configuration; when the first configuration includes the first power configuration and the first frequency domain configuration, the second configuration should also include the second power configuration and the second frequency domain configuration.

In some embodiments, the power configuration includes at least one of the following related parameters: a target power level; a maximum number of transmissions for a random access preamble; a power ramping step for a random access channel; i.e., any one of the first configuration and the second configuration includes at least one of the following related parameters: a target power level; a maximum number of transmissions for a random access preamble; a power ramping step for a random access channel.

In some embodiments, the power related parameter includes at least one of the following parameters: a transmitting power; a target power level; a value of a power ramping counter; a value of a random access preamble transmission counter; a maximum number of transmissions for a random access preamble; a power ramping step for a random access channel. Herein, a first part of related parameters are additionally configured by the network device or are agreed upon by a protocol, and a second part of parameters are selected, calculated, or determined by the terminal device based on the first part of parameters. Exemplarily, configuration for the power related parameter is performed through the configuration scheme 1, any one of the first configuration and the second configuration includes at least one of the following parameters: a target power level, a maximum number of transmissions for a random access preamble, a power ramping step for a random access channel.

In some embodiments, the first configuration includes a first target power level, and the second configuration includes a second target power level.

In some embodiments, the first configuration further includes a first power ramping step, and the second configuration further includes a second power ramping step. Herein, the first power ramping step and the second power ramping step are the same or different.

In some embodiments, the first configuration further includes a first maximum number, where the first maximum number is a maximum number of transmissions for a random access preamble corresponding to the first-type time domain resource; the second configuration further includes a second maximum number, where the second maximum number is a maximum number of transmissions for a random access preamble corresponding to the second-type time domain resource. Herein, the first maximum number and the second maximum number are the same or different.

In some embodiments, the first configuration and the second configuration only include parameters with different values, where parameters with the same value in the first configuration and the second configuration may be additionally configured by the network device or agreed upon by a communication protocol; for example, the first configuration includes the first target power level, the second configuration includes the second target power level, and the maximum number of transmissions for a random access preamble and a power ramping step for a random access channel are additionally configured by the network device or agreed upon by the communication protocol; or the first configuration includes the first target power level and the first power ramping step, the second configuration includes the second target power level and the second power ramping step, and the maximum number of transmissions for a random access preamble is additionally configured by the network device or agreed upon by the communication protocol; or the first configuration includes the first target power level and the first maximum number, the second configuration includes the second target power level and the second maximum number, and a power ramping step for a random access channel is additionally configured by the network device or agreed upon by the communication protocol; or the first configuration includes the first target power level, the first maximum number, and the first power ramping step, the second configuration includes the second target power level, the second maximum number, and the second power ramping step.

In some embodiments, the first configuration and the second configuration include all parameters. That is, the first configuration includes the first target power level, the first maximum number, and the first power ramping step, and the second configuration includes the second target power level, the second maximum number, and the second power ramping step. The first maximum number and the second maximum number are the same or different, and the first power ramping step and the second power ramping step are the same or different.

In some embodiments, the frequency domain configuration includes at least one of the following related parameters: a first parameter, where the first parameter is used to indicate a number of random access channel transmission occasions that are frequency division multiplexed in a time unit; a second parameter, where the second parameter is used to indicate an offset value between a lowest random access channel transmission occasion in a frequency domain dimension and a reference point, the reference point is PRB0 of an uplink BWP, i.e., the starting PRB of the uplink BWP; i.e., any one of the first configuration and the second configuration includes at least one of the following related parameters: the first parameter, where the first parameter is used to indicate a number of random access channel transmission occasions that are frequency division multiplexed in a time unit; the second parameter, where the second parameter is used to indicate an offset value between a lowest random access channel transmission occasion in the frequency domain and a reference point, the reference point is PRB0 of an uplink BWP.

In some embodiments, the first configuration and the second configuration share a part of related parameters. Exemplarily, as shown in FIG. 14, the terminal device uses one set of a power ramping counter and a preamble transmission counter for the first configuration and the second configuration, where the shared related parameters corresponding to the first configuration and the second configuration are the power ramping counter and the preamble transmission counter. The first configuration includes at least one of: a first target power level, a first maximum number, a first power ramping step, a first parameter 1, a second parameter 1. The second configuration includes at least one of: a second target power level, a second maximum number, a second power ramping step, a first parameter 2, a second parameter 2. Herein, the first target power level and the second target power level are usually different. The first maximum number and the second maximum number may be the same or different, the first power ramping step and the second power ramping step may be the same or different, the first parameter 1 and the first parameter 2 may be the same or different, and the second parameter 1 and the second parameter 2 may be the same or different.

In some embodiments, the first configuration and the second configuration do not share related parameters. Exemplarily, as shown in FIG. 15. The terminal device respectively uses two sets of a power ramping counter and a preamble transmission counter for the first configuration and the second configuration. The first configuration includes at least one of: a first target power level, a first maximum number, a first power ramping step, a first power ramping counter, a first preamble transmission counter, a first parameter 1, a second parameter 1. The second configuration includes at least one of: a second target power level, a second maximum number, a second power ramping step, a second power ramping counter, a second preamble transmission counter, a first parameter 2, a second parameter 2. Herein, the first target power level and the second target power level are usually different. The first maximum number and the second maximum number may be the same or different, the first power ramping step and the second power ramping step may be the same or different, the first power ramping counter and the second power ramping counter are usually different, the first preamble transmission counter and the second preamble transmission counter are usually different, the first parameter 1 and the first parameter 2 may be the same or different, and the second parameter 1 and the second parameter 2 may be the same or different.

In some embodiments, **the first receiving module is configured to** receive a first configuration parameter and receive a second configuration parameter, where the first configuration parameter corresponds to the first configuration, and the second configuration parameter corresponds to the second configuration; or configured to receive the first configuration parameter and an offset value, where the first configuration parameter corresponds to the first configuration, and a configuration parameter obtained by offsetting the first configuration parameter based on the offset value corresponds to the second configuration; or configured to receive the second configuration parameter and an offset value, where the second configuration parameter corresponds to the second configuration, and a configuration parameter obtained by offsetting the second configuration parameter based on the offset value corresponds to the first configuration; or configured to receive the first configuration parameter, where the first configuration parameter corresponds to the first configuration; or configured to receive a second configuration parameter, where the second configuration parameter corresponds to the second configuration. Exemplarily, the first configuration parameter includes the first target power level, and the second configuration parameter includes the second target power level; or the first configuration includes the first target power level, and the offset value includes a target power level offset, then the second target power level corresponding to the second configuration is a sum of the first target power level and the target power level offset; or the first configuration includes the first target power level and the first power ramping step, and the offset value includes a target power level offset and a power ramping step offset, then the second target power level corresponding to the second configuration is a sum of the first target power level and the target power level offset, and the second power ramping step corresponding to the second configuration is a sum of the first power ramping step and the power ramping step offset.

In some embodiments, a part of related parameters among the related parameters are configured by the first configuration parameter and the second configuration parameter; another part of the related parameters among the related parameters are configured by the first configuration parameter and the offset value; or a first part of parameters among the related parameters are configured by the first configuration parameter and the second configuration parameter, a second part of parameters among the related parameters are configured by the first configuration parameter and the offset value, and a third part of parameters among the related parameters are additionally configured by the network device or agreed upon by a protocol. For example, the related parameters include a target power level, a maximum number of transmissions for a random access preamble, and a power ramping step for a random access channel; for the target power level, it is configured by using the first configuration parameter (i.e., the first target power level) and the second configuration parameter (i.e., the second target power level); or additionally configured based on the network device or agreed upon by a protocol; or configured by using the first configuration parameter (i.e., the first target power level) and an offset value (i.e., the target power level offset); for the maximum number of transmissions for a random access preamble, it is configured by using the first configuration parameter (i.e., the first maximum number) and the second configuration parameter (i.e., the second maximum number); or additionally configured based on the network device or agreed upon by a protocol; or configured by using the first configuration parameter (i.e., the first maximum number) and an offset value (i.e., a maximum number offset); for the power ramping step for a random access channel, it is configured by using the first configuration parameter (i.e., the first power ramping step) and the second configuration parameter (i.e., the second power ramping step); or additionally configured based on the network device or agreed upon by a protocol; or configured by using the first configuration parameter (i.e., the first power ramping step) and an offset value (i.e., the power ramping step offset).

Exemplarily, the first configuration parameter includes the first target power level, and the second configuration parameter includes the second target power level; or the first configuration includes the first target power level, and the offset value includes a target power level offset, then the second target power level corresponding to the second configuration is a sum of the first target power level and the target power level offset; or the first configuration includes the first target power level and the first power ramping step, and the offset value includes a target power level offset and a power ramping step offset, then the second target power level corresponding to the second configuration is a sum of the first target power level and the target power level offset, and the second power ramping step corresponding to the second configuration is a sum of the first power ramping step and the power ramping step offset.

For example, the second configuration parameter is the second target power level, which is denoted as preambleReceivedTargetPower, and the offset value is a target power level offset, which is denoted as delta_SBFD, then the first target power level corresponding to the first configuration is preambleReceivedTargetPower+delta_SBFD. At this time, calculation formulas for the first transmitting power and the second transmitting power are as follows. $\begin{matrix}First transmitting power = \\ preambleReceivedTargetPower + delta _ SBFD + DELTA _ PREAMBLE + \\ \left(PREAMBLE_POWER_RAMPING_COUNTER-1\right) \\ \times PREAMBLE _ POWER _ RAMPING _ STEP .\end{matrix}$ $\begin{matrix}Second transmitting power = preambleReceivedTargetPower + DELTA _ PREAMBLE + \\ \left(PREAMBLE_POWER_RAMPING_COUNTER-1\right) \\ \times PREAMBLE _ POWER _ RAMPING _ STEP .\end{matrix}$

In an optional embodiment, a power configuration for the random access channel may also adopt the following manners: in a case where a type of a time domain resource used in a current transmission is different from a type of a time domain resource used in a previous transmission, the power ramping counter is increased by 1; offset times are set and denoted as counter_SBFD, when a type of a time domain resource used for an initial transmission is the first-type time domain resource, the offset times are initialized to 1; when the type of the time domain resource used for the initial transmission is the second-type time domain resource, the offset times are initialized to 0; when a type of a time domain resource used for retransmission is the first-type time domain resource, the offset times are increased by 1, i.e., counter_SBFD+1. At this time, calculation formulas for the first transmitting power and the second transmitting power are as follows. $\begin{matrix}First transmitting power = preambleReceivedTargetPower + DELTA _ PREAMBLE + \\ \left(PREAMBLE_POWER_RAMPING_COUNTER-1\right) \\ \times PREAMBLE _ POWER _ RAMPING _ STEP + counter _ SBFD \times delta _ SBFD .\end{matrix}$ $\begin{matrix}Second transmitting power = preambleReceivedTargetPower + DELTA _ PREAMBLE + \\ \left(PREAMBLE_POWER_RAMPING_COUNTER-1\right) \\ \times PREAMBLE _ POWER _ RAMPING _ STEP .\end{matrix}$

In summary, the apparatus provided in the embodiments of the present disclosure provides the terminal device with the first configuration and the second configuration for the random access channel, so that the terminal device may use the first configuration or the second configuration to perform random access, since the first configuration corresponds to the first-type time domain resource and the second configuration corresponds to the second-type time domain resource, the terminal device is capable of selecting different configurations for different types of time domain resources during the random access procedure.

### 3.2 Configuration scheme 2

In optional embodiments based on FIG. 20, **the first receiving module is further configured to** receive a third configuration, where the third configuration is used to configure a related parameter upon transmitting the random access channel, and the third configuration corresponds to the first-type time domain resource and the first-type time domain resource.

In some embodiments, upon configuring a frequency domain related parameter for a random access channel, a set of configuration (i.e., the third configuration) may be commonly used for the first-type time domain resource and the second-type time domain resource.

In some embodiments, the third configuration includes a second parameter; the second parameter is used to indicate an offset value between a lowest random access channel transmission occasion in the frequency domain dimension and a reference point. Herein, for the first-type time domain resource, the reference point is a lowest PRB of an intersection of an uplink subband and an uplink BWP in a frequency domain dimension, and for the second-type time domain resource, the reference point is PRB0 of an uplink BWP.

In some embodiments, the third configuration further includes a first parameter, the first parameter is used to indicate a number of random access channel transmission occasions that are frequency division multiplexed in a time unit, for example, a time unit is a time instance.

Exemplarily, as shown in FIG. 16, the third configuration includes a first parameter and a second parameter, where the first parameter may be denoted as msg1-FDM, and the second parameter may be denoted as msg1-FrequencyStart. In FIG. 16, based on parameters msg1-FDM=2 and msg1-FrequencyStart=0 configured by the third configuration, a set of random access channel transmission occasions 28 for the first-type time domain resource and a set of random access channel transmission occasions 29 for the second-type time domain resource are obtained by selection, where the set of random access channel transmission occasions 28 includes 4 random access channel transmission occasions, and the set of random access channel transmission occasions 29 includes 4 random access channel transmission occasions. Herein, a reference point for the first-type time domain resource is denoted as reference point 30, and a reference point for the second-type time domain resource is denoted as reference point 31, where the reference point 30 is a lowest PRB in the frequency domain dimension of an intersection of an uplink subband and an uplink BWP, and the reference point 31 is PRB0 of the uplink BWP.

In summary, for the method provided in the embodiments of the present disclosure, the first-type time domain resource and the second-type time domain resource share one set of configurations, thus saving signaling overhead. The terminal device only needs to maintain one set of configurations, and by applying different interpretation manners to the first-type time domain resource and the second-type time domain resource, it may still ensure that all random access channel transmission occasions are valid, and may also ensure that the random access channel transmission occasions are at both ends of the uplink BWP or the uplink subband, avoiding resource fragmentation.

In some embodiments, the first receiving module in the above configuration scheme 1 and configuration scheme 2 may be implemented as the same apparatus or may be implemented as different apparatuses. That is, a part of related parameters may be configured by the configuration scheme 1, and another part of related parameters may be configured by the configuration scheme 2; or a first part of parameters among the related parameters may be configured by the configuration scheme 1, a second part of parameters may be configured by the configuration scheme 2, and a third part of parameters may be additionally configured based on a network device or may be agreed upon by a protocol. For example, a power configuration is performed using the configuration scheme 1, and a frequency domain configuration is performed using the configuration scheme 2; or for the frequency domain configuration for the random access channel, the first-type time domain resource corresponds to a first configuration, and the second-type time domain resource corresponds to a second configuration, where the first configuration and the second configuration include a first parameter, and a value of the first parameter corresponding to the first configuration is the same as or different from a value of the first parameter corresponding to the second configuration; and the first-type time domain resource and the second-type time domain resource correspond to a third configuration, where the third configuration includes a second parameter, and the third configuration has different interpretation manners for the first-type time domain resource and the second-type time domain resource. That is, the terminal device determines the number of random access channel transmission occasions corresponding to the first-type time domain resource and the number of random access channel transmission occasions corresponding to the second-type time domain resource according to the configuration scheme 1, and determines the positions of the random access channel transmission occasions corresponding to the first-type time domain resource and the second-type time domain resource according to the configuration scheme 2.

In some embodiments, for a case where the terminal device respectively uses random access preamble transmission counters for the first-type time domain resource and the second-type time domain resource, corresponding random access failure determination method are designed.

In an optional embodiment, the apparatus further includes: a problem reporting module. The problem reporting module is configured to report a random access problem based on the first random access preamble transmission counter and a first threshold, or based on the second random access preamble transmission counter and a second threshold, where the first threshold is related to a first maximum number, the first maximum number is a maximum number of transmissions for a random access preamble corresponding to the first-type time domain resource, the second threshold is related to a second maximum number, the second maximum number is a maximum number of transmissions for a random access preamble corresponding to the second-type time domain resource; or configured to report the random access problem based on the first random access preamble transmission counter, the second random access preamble transmission counter, and a third threshold, where the third threshold is related to a maximum number of transmissions for a random access preamble corresponding to the first-type time domain resource and the second-type time domain resource; where the random access problem is used to indicate that there is an abnormality in a random access procedure for a terminal device.

Herein, a specific process of the random access failure determination method may refer to the above "failure determination method 1" and "failure determination method 2" on the method side, which will not be repeated herein.

FIG. 21 shows a structural block diagram of a transmission apparatus for a random access channel provided in an exemplary embodiment of the present disclosure, where the apparatus may be implemented as a network device through software or hardware or a combination of both, or implemented as a part of the network device, and the apparatus includes:
**a second receiving module 710, configured to** receive the random access channel, where the random access channel is transmitted by a terminal device according to a related parameter for the random access channel upon the random access channel being transmitted in a first-type time domain resource and/or a related parameter for the random access channel upon the random access channel being transmitted in a second-type time domain resource.

In some embodiments, a time domain resource includes at least one of: a symbol, a symbol group, a slot, a sub slot, a frame, and a subframe. In the embodiments of the present disclosure, a specific type of a time domain resource is not limited.

In some embodiments, the first-type time domain resource and the second-type time domain resource may be understood as two different duplex modes, slots, or symbols, etc. Number, positions, sizes, and frequency domain bandwidths of available uplink resources in the first-type time domain resource and the second-type time domain resource are different; or the number, positions, sizes, and frequency domain bandwidths of random access channels in the first-type time domain resource and the second-type time domain resource are different. For example, the first-type time domain resource is an SBFD symbol, and the second-type time domain resource is a non-SBFD symbol. Herein, the SBFD symbol is a symbol including at least one of an uplink subband, a downlink subband, and a guard band, and the non-SBFD symbol is a symbol not including the above subbands.

In some embodiments, a related parameter includes at least one of: a transmitting power; a target power level; a value of a power ramping counter; a value of a random access preamble transmission counter; a maximum number of transmissions for a random access preamble; a power ramping step for the random access channel; a first parameter, where the first parameter is used to indicate a number of random access channel transmission occasions that are frequency division multiplexed in a time unit, for example, a time unit is a time instance; a second parameter, where the second parameter is used to indicate an offset value between a lowest random access channel transmission occasion in a frequency domain dimension and a reference point, and the reference point is PRB0 of an uplink BWP. Herein, the transmitting power is used to indicate how much energy the terminal device may use to transmit the random access channel; the target power level is used to indicate a target power of the random access channel expected by a receiver of the network device; the value of the power ramping counter is used to indicate a number of power ramping times, generally, each time a random access failure occurs, the value of the power ramping counter may be incremented by 1. The random access preamble transmission counter is used to indicate a number of preamble transmissions in a random access procedure, i.e., a number of transmissions of the random access channel; the maximum number of transmissions for a random access preamble is used to indicate a maximum number of transmissions for a preamble in the entire random access procedure, i.e., a maximum number of transmissions for the random access channel; the power ramping step for the random access channel is used to indicate an amount of power increase at each power ramping.

Exemplarily, as shown in FIG. 6, a square 10 with slanted lines represents a random access channel transmission occasion, the first parameter is 2 and is used to indicate that a number of random access channel transmission occasions that are frequency division multiplexed in a time unit is 2; if the reference point is PRB0 of an active UL BWP (active uplink BWP), i.e., a starting PRB of the active UL BWP, then in FIG. 6, the offset value between the lowest random access channel transmission occasion in a frequency domain dimension and PRB0 is the second parameter.

In some embodiments, a related parameter for the random access channel upon the random access channel being transmitted includes a power related parameter and/or a frequency domain related parameter.

In some embodiments, the power-related parameter includes a transmitting power and a power ramping counter.

Herein, a specific calculation process for the transmitting power is a calculation process for the transmitting power of the terminal device, which is not repeated herein.

In some embodiments, the target power level includes a first target power level and a second target power level, the first-type time domain resource corresponds to the first target power level, and the second-type time domain resource corresponds to the second target power level.

In some embodiments, **the second receiving module 710 is configured to** receive the random access channel, where a random access channel transmission occasion corresponds to the first-type time domain resource, and a first transmitting power of the random access channel is determined by the terminal device based on the first target power level; and/or configured to receive the random access channel, where a random access channel transmission occasion corresponds to the second-type time domain resource, and a second transmitting power of the random access channel is determined by the terminal device based on the second target power level.

In some embodiments, the first transmitting power is determined by the terminal device based on at least one of the first target power level, the power ramping step, the power ramping counter, and a preamble delta; the second transmitting power is determined by the terminal device based on at least one of the second target power level, the power ramping step, the power ramping counter, and the preamble delta; where the preamble delta is determined based on at least one of a random access preamble format and a subcarrier spacing.

In some embodiments, the first-type time domain resource corresponds to at least one of a first power ramping counter, a first random access preamble transmission counter, and a first power ramping step; the second-type time domain resource corresponds to at least one of a second power ramping counter, a second random access preamble transmission counter, and a second power ramping step.

In some embodiments, **the second receiving module 710 is configured to** receive the random access channel, where a random access channel transmission occasion corresponds to the first-type time domain resource, and the first transmitting power of the random access channel is determined by the terminal device based on at least one of the first target power level and the first power ramping counter; and/o configured to receive the random access channel, where a random access channel transmission occasion corresponds to the second-type time domain resource, and the second transmitting power of the random access channel is determined by the terminal device based on at least one of the second target power level and the second power ramping counter. For example, the first-type time domain resource corresponds to the first power ramping counter, the second-type time domain resource corresponds to the second power ramping counter, but the first-type time domain resource and the second-type time domain resource share the same target power level; and for another example, the first-type time domain resource corresponds to the first target power level, the second-type time domain resource corresponds to the second target power level, but the first-type time domain resource and the second-type time domain resource share the same power ramping counter. For yet another example, the first-type time domain resource corresponds to the first target power level and the first power ramping counter, and the second-type time domain resource corresponds to the second target power level and the second power ramping counter.

In some embodiments, the first transmitting power is determined by the terminal device based on at least one of the first target power level, the first power ramping step, the first power ramping counter, and a preamble delta; the second transmitting power is determined by the terminal device based on at least one of the second target power level, the second power ramping step, the second power ramping counter, and the preamble delta; where the preamble delta is determined based on at least one of a random access preamble format and a subcarrier spacing.

Different ramping manners of a power ramping counter in the terminal device are shown below.

In some embodiments, for a random access channel transmission, if a corresponding type of a time domain resource changes compared to a type of a time domain resource for a previous transmission, the terminal device keeps the power ramping counter unchanged.

In some embodiments, for a random access channel transmission, if a corresponding type of a time domain resource changes compared to a type of a time domain resource for a previous transmission, the terminal device resets or initializes the power ramping counter.

In some embodiments, upon initiating a random access procedure, the terminal device initializes at least one of the first power ramping counter, the first random access preamble transmission counter, the second power ramping counter and the second random access preamble transmission counter; in a case that a random access channel transmission fails and the random access channel corresponds to the first-type time domain resource, the first random access preamble transmission counter in the terminal device is increased by 1; in a case that the random access channel transmission fails and the random access channel corresponds to the second-type time domain resource, the second random access preamble transmission counter in the terminal device is increased by 1; in a case where the random access channel corresponds to the first-type time domain resource and the first random access preamble transmission counter is greater than a first initial value, the first power ramping counter in the terminal device is increased by 1; in a case where the random access channel corresponds to the second-type time domain resource and the second random access preamble transmission counter is greater than a second initial value, the second power ramping counter in the terminal device is increased by 1. Herein, random access channel transmission failing indicates that: if a RAR window expires, but a random access response containing a first random access preamble identifier is not received or contention resolution is not successful, then the random access channel transmission is considered to have failed. The first random access preamble identifier matches a random access channel preamble index (e.g., a PRACH preamble index) transmitted from the terminal.

In some embodiments, an initial transmission and a retransmission for the random access channel correspond to a same type of a time domain resource; or the terminal device does not expect that a type of a time domain resource corresponding to a retransmission for the random access channel changes with respect to an initial transmission or with respect to a previous transmission; or the terminal device does not expect that a type of a time domain resource corresponding to a retransmission for the random access channel is different from a time domain resource type corresponding to an initial transmission for the random access channel or a previous transmission for the random access channel.

In some embodiments, the apparatus further includes a problem receiving module. **The problem receiving module is configured to** receive a random access problem reported by the terminal device, where the random access problem is reported based on the first random access preamble transmission counter and a first threshold, or based on the second random access preamble transmission counter and a second threshold, the first threshold is related to a first maximum number, the first maximum number is a maximum number of transmissions for a random access preamble corresponding to the first-type time domain resource, the second threshold is related to a second maximum number, the second maximum number is a maximum number of transmissions for a random access preamble corresponding to the second-type time domain resource; or configured to receive the random access problem reported by the terminal device, where the random access problem is reported based on the first random access preamble transmission counter, the second random access preamble transmission counter, and a third threshold, the third threshold is related to a maximum number of transmissions for a random access preamble corresponding to the first-type time domain resource and the second-type time domain resource; where the random access problem is used to indicate that there is an abnormality in a random access procedure for the terminal device.

In some embodiments, a random access channel transmission occasion is valid in the following situations: the random access channel transmission occasion is within an uplink symbol; or the random access channel transmission occasion is within the first-type time domain resource and the random access channel transmission occasion is located within a first frequency domain bandwidth, for example, the random access channel transmission occasion is within an SBFD symbol and the random access channel transmission occasion is located within an intersection of an uplink subband and an uplink BWP. Herein, the first-type time domain resource is the SBFD symbol; a random access channel transmission occasion being within an uplink symbol indicates that symbols where the random access channel transmission occasions is located are all uplink symbols; a random access channel transmission occasion being within the first-type time domain resource indicates that symbols where the random access channel transmission occasion is located are all SBFD symbols; that is to say, if symbols where a a random access channel transmission occasion is located include both an uplink symbols and an SBFD symbols, then the random access channel transmission occasion is invalid.

In some embodiments, the first frequency domain bandwidth is a subset of an available uplink bandwidth configured by the network device for the terminal device; the first frequency domain bandwidth is an actual available uplink bandwidth determined in an uplink BWP of the terminal device based on a first duplex mode or the first-type time domain resource. The first duplex mode or the first-type time domain resource may be SBFD.

In some embodiments, an uplink BWP is an uplink BWP activated for an uplink transmission of the terminal device. The first frequency domain bandwidth is a full bandwidth or a part of the bandwidth of an uplink BWP. Since available uplink subbands within different duplex modes or different types of time domain resources are different, even for the same terminal device, the first frequency domain bandwidth may dynamically change.

In some embodiments, the first frequency domain bandwidth may be understood as an available subband, an available uplink subband, an actual available subband or an actual available uplink subband in an uplink BWP.

In summary, for the apparatus provided in the embodiments of the present disclosure, the network device receives the random access channel, the random access channel is transmitted from the terminal device according to the related parameters upon the random access channel being transmitted in the first-type time domain resource and/or related parameters upon the random access channel being transmitted in the second-type time domain resource, that is, the random access channel received by the network device is determined by the terminal device according to different related parameters corresponding to different types of time domain resources.

In an optional embodiment, the first frequency domain bandwidth is an available part of subbands within an uplink BWP. The first frequency domain bandwidth is an actual available uplink bandwidth for the terminal device. The description for the first frequency domain bandwidth is detailed in the above "1. First frequency domain bandwidth", and will not be repeated herein.

In some embodiments, the network device provides differentiated configurations for the terminal device for the first-type time domain resource resources and/or the second-type time domain resources. There are two configuration schemes, and these two configuration schemes are introduced separately below.

### 4.1 Configuration scheme 1

In optional embodiments based on FIG. 21, the apparatus further includes a second transmitting module.

**The second transmitting module is configured to** transmit a first configuration and a second configuration, where the first configuration and the second configuration are used for configuring related parameters during a random access channel transmission, the first configuration corresponds to a first-type time domain resource, and the second configuration corresponds to a second-type time domain resource.

In some embodiments, a time domain resource includes at least one of: a symbol, a symbol group, a slot, a sub slot, a frame, and a subframe. A specific type of a time domain resource is not limited in the embodiments of the present disclosure, and an example of the first configuration corresponding to a first-type symbol, and the second configuration corresponding to a second-type symbol is generally given for illustration. For example, the first configuration corresponds to an SBFD symbol, and the second configuration corresponds to a non-SBFD symbol. Herein, the SBFD symbol is a symbol including at least one of an uplink subband, a downlink subband, and a guard band, and the non-SBFD symbol is a symbol not including the above subbands.

In some embodiments, a configuration for the random access channel includes at least one of a power configuration and a frequency domain configuration, the power configuration is used to configure a power related parameter for random access channel transmission, and the frequency domain configuration is used to configure a frequency domain related parameter for random access channel transmission. The first configuration includes at least one of a first power configuration and a first frequency domain configuration; the second configuration includes at least one of a second power configuration and a second frequency domain configuration. Configuration items included in the first configuration and the second configuration are the same, i.e., when the first configuration includes the first power configuration, the second configuration should also include the second power configuration; when the first configuration includes the first frequency domain configuration, the second configuration should also include the second frequency domain configuration; when the first configuration includes the first power configuration and the first frequency domain configuration, the second configuration should also include the second power configuration and the second frequency domain configuration.

In some embodiments, the power configuration includes at least one of the following related parameters: a target power level; a maximum number of transmissions for a random access preamble; a power ramping step for a random access channel; i.e., any one of the first configuration and the second configuration includes at least one of the following related parameters: a target power level; a maximum number of transmissions for a random access preamble; a power ramping step for a random access channel.

In some embodiments, the power related parameter includes at least one of the following parameters: a transmitting power; a target power level; a value of a power ramping counter; a value of a random access preamble transmission counter; a maximum number of transmissions for a random access preamble; a power ramping step for a random access channel.

In some embodiments, the first configuration and the second configuration only include parameters with different values, where parameters with the same value in the first configuration and the second configuration may be additionally configured by the network device or agreed upon by a communication protocol; for example, the first configuration includes the first target power level, the second configuration includes the second target power level, and the maximum number of transmissions for a random access preamble and a power ramping step for a random access channel are additionally configured by the network device or agreed upon by the communication protocol; or the first configuration includes the first target power level and the first power ramping step, the second configuration includes the second target power level and the second power ramping step, and the maximum number of transmissions for a random access preamble is additionally configured by the network device or agreed upon by the communication protocol; or the first configuration includes the first target power level and the first maximum number, the second configuration includes the second target power level and the second maximum number, and a power ramping step for a random access channel is additionally configured by the network device or agreed upon by the communication protocol; or the first configuration includes the first target power level, the first maximum number, and the first power ramping step, the second configuration includes the second target power level, the second maximum number, and the second power ramping step.

In some embodiments, the first configuration and the second configuration include all parameters. That is, the first configuration includes the first target power level, the first maximum number, and the first power ramping step, and the second configuration includes the second target power level, the second maximum number, and the second power ramping step. The first maximum number and the second maximum number are the same or different, and the first power ramping step and the second power ramping step are the same or different.

In some embodiments, the first configuration and the second configuration share a part of related parameters. Exemplarily, as shown in FIG. 14, the terminal device uses one set of a power ramping counter and a preamble transmission counter for the first configuration and the second configuration, where the shared related parameters corresponding to the first configuration and the second configuration are the power ramping counter and the preamble transmission counter. The first configuration includes at least one of: a first target power level, a first maximum number, a first power ramping step, a first parameter 1, a second parameter 1. The second configuration includes at least one of: a second target power level, a second maximum number, a second power ramping step, a first parameter 2, a second parameter 2. Herein, the first target power level and the second target power level are usually different. The first maximum number and the second maximum number may be the same or different, the first power ramping step and the second power ramping step may be the same or different, the first parameter 1 and the first parameter 2 may be the same or different, and the second parameter 1 and the second parameter 2 may be the same or different.

In some embodiments, the first configuration and the second configuration do not share related parameters. Exemplarily, as shown in FIG. 15. The terminal device respectively uses two sets of a power ramping counter and a preamble transmission counter for the first configuration and the second configuration. The first configuration includes at least one of: a first target power level, a first maximum number, a first power ramping step, a first power ramping counter, a first preamble transmission counter, a first parameter 1, a second parameter 1. The second configuration includes at least one of: a second target power level, a second maximum number, a second power ramping step, a second power ramping counter, a second preamble transmission counter, a first parameter 2, a second parameter 2. Herein, the first target power level and the second target power level are usually different. The first maximum number and the second maximum number may be the same or different, the first power ramping step and the second power ramping step may be the same or different, the first power ramping counter and the second power ramping counter are usually different, the first preamble transmission counter and the second preamble transmission counter are usually different, the first parameter 1 and the first parameter 2 may be the same or different, and the second parameter 1 and the second parameter 2 may be the same or different.

In some embodiments, the frequency domain configuration includes at least one of the following related parameters: a first parameter, where the first parameter is used to indicate a number of random access channel transmission occasions that are frequency division multiplexed in a time unit, for example, a time unit is a time instance; a second parameter, where the second parameter is used to indicate an offset value between a lowest random access channel transmission occasion in a frequency domain dimension and a reference point; that is, any configuration of the first configuration and the second configuration includes at least one of the following related parameters: a first parameter, where the first parameter is used to indicate the number of random access channel transmission occasions that are frequency division multiplexed in a time unit, for example, one time unit is a time instance; a second parameter, where the second parameter is used to indicate an offset value between a lowest random access channel transmission occasion in a frequency domain dimension and a reference point.

In some embodiments, **the second transmitting module is configured to** transmit a first configuration parameter and transmit a second configuration parameter, where the first configuration parameter corresponds to the first configuration, and the second configuration parameter corresponds to the second configuration; or configured to transmit the first configuration parameter and an offset value, where the first configuration parameter corresponds to the first configuration, and a configuration parameter obtained by offsetting the first configuration parameter based on the offset value corresponds to the second configuration; or configured to transmit the second configuration parameter and an offset value, where the second configuration parameter corresponds to the second configuration, and a configuration parameter obtained by offsetting the second configuration parameter based on the offset value corresponds to the first configuration; or configured to transmit the first configuration parameter, where the first configuration parameter corresponds to the first configuration; or configured to transmit a second configuration parameter, where the second configuration parameter corresponds to the second configuration. Exemplarily, the first configuration parameter includes the first target power level, and the second configuration parameter includes the second target power level; or the first configuration includes the first target power level, and the offset value includes a target power level offset, then the second target power level corresponding to the second configuration is a sum of the first target power level and the target power level offset; or the first configuration includes the first target power level and the first power ramping step, and the offset value includes a target power level offset and a power ramping step offset, then the second target power level corresponding to the second configuration is a sum of the first target power level and the target power level offset, and the second power ramping step corresponding to the second configuration is a sum of the first power ramping step and the power ramping step offset.

In some embodiments, a part of related parameters among the related parameters are configured by the first configuration parameter and the second configuration parameter; another part of the related parameters among the related parameters are configured by the first configuration parameter and the offset value; or a first part of parameters among the related parameters are configured by the first configuration parameter and the second configuration parameter, a second part of parameters among the related parameters are configured by the first configuration parameter and the offset value, and a third part of parameters among the related parameters are additionally configured by the network device or agreed upon by a protocol. For example, the related parameters include a target power level, a maximum number of transmissions for a random access preamble, and a power ramping step for a random access channel; for the target power level, it is configured by using the first configuration parameter (i.e., the first target power level) and the second configuration parameter (i.e., the second target power level); or additionally configured based on the network device or agreed upon by a protocol; or configured by using the first configuration parameter (i.e., the first target power level) and an offset value (i.e., the target power level offset); for the maximum number of transmissions for a random access preamble, it is configured by using the first configuration parameter (i.e., the first maximum number) and the second configuration parameter (i.e., the second maximum number); or additionally configured based on the network device or agreed upon by a protocol; or configured by using the first configuration parameter (i.e., the first maximum number) and an offset value (i.e., a maximum number offset); for the power ramping step for a random access channel, it is configured by using the first configuration parameter (i.e., the first power ramping step) and the second configuration parameter (i.e., the second power ramping step); or additionally configured based on the network device or agreed upon by a protocol; or configured by using the first configuration parameter (i.e., the first power ramping step) and an offset value (i.e., the power ramping step offset).

Exemplarily, the first configuration parameter includes the first target power level, and the second configuration parameter includes the second target power level; or the first configuration includes the first target power level, and the offset value includes a target power level offset, then the second target power level corresponding to the second configuration is a sum of the first target power level and the target power level offset; or the first configuration includes the first target power level and the first power ramping step, and the offset value includes a target power level offset and a power ramping step offset, then the second target power level corresponding to the second configuration is a sum of the first target power level and the target power level offset, and the second power ramping step corresponding to the second configuration is a sum of the first power ramping step and the power ramping step offset.

For example, the second configuration parameter is the second target power level, which is denoted as preambleReceivedTargetPower, and the offset value is a target power level offset, which is denoted as delta_SBFD, then the first target power level corresponding to the first configuration is preambleReceivedTargetPower+delta_SBFD. At this time, calculation formulas for the first transmitting power and the second transmitting power are as follows. $\begin{matrix}First transmitting power = \\ preambleReceivedTargetPower + delta _ SBFD + DELTA _ PREAMBLE + \\ \left(PREAMBLE_POWER_RAMPING_COUNTER-1\right) \\ \times PREAMBLE _ POWER _ RAMPING _ STEP .\end{matrix}$ $\begin{matrix}Second transmitting power = preambleReceivedTargetPower + DELTA _ PREAMBLE + \\ \left(PREAMBLE_POWER_RAMPING_COUNTER-1\right) \\ \times PREAMBLE _ POWER _ RAMPING _ STEP .\end{matrix}$

In an optional embodiment, a power configuration for the random access channel may also adopt the following manners: in a case where a type of a time domain resource used in a current transmission is different from a type of a time domain resource used in a previous transmission, the power ramping counter is increased by 1; offset times are set and denoted as counter_SBFD, when a type of a time domain resource used for an initial transmission is the first-type time domain resource, the offset times are initialized to 1; when the type of the time domain resource used for the initial transmission is the second-type time domain resource, the offset times are initialized to 0; when a type of a time domain resource used for retransmission is the first-type time domain resource, the offset times are increased by 1, i.e., counter_SBFD+1. At this time, calculation formulas for the first transmitting power and the second transmitting power are as follows. $\begin{matrix}First transmitting power = preambleReceivedTargetPower + DELTA _ PREAMBLE + \\ \left(PREAMBLE_POWER_RAMPING_COUNTER-1\right) \\ \times PREAMBLE _ POWER _ RAMPING _ STEP + counter _ SBFD \times delta _ SBFD .\end{matrix}$ $\begin{matrix}Second transmitting power = preambleReceivedTargetPower + DELTA _ PREAMBLE + \\ \left(PREAMBLE_POWER_RAMPING_COUNTER-1\right) \\ \times PREAMBLE _ POWER _ RAMPING _ STEP .\end{matrix}$

In summary, for the apparatus provided in the embodiments of the present disclosure, the network device performs random access by transmitting the first configuration and the second configuration of the random access channel to the terminal device, since the first configuration corresponds to the first-type time domain resource and the second configuration corresponds to the second-type time domain resource, the terminal device is capable of selecting different configurations for different types of time domain resources during the random access procedure.

### 4.2 Configuration scheme 2

In an optional embodiment based on FIG. 21, **the second transmitting module is further configured to** transmit a third configuration, where the third configuration is used to configure a related parameter upon transmitting the random access channel, and the third configuration corresponds to the first-type time domain resource and the first-type time domain resource.

In some embodiments, upon configuring a frequency domain related parameter for a random access channel, a set of configuration (i.e., the third configuration) may be commonly used for the first-type time domain resource and the second-type time domain resource.

In some embodiments, the third configuration includes a second parameter; the second parameter is used to indicate an offset value between a lowest random access channel transmission occasion in the frequency domain dimension and a reference point. Herein, for the first-type time domain resource, the reference point is a lowest PRB of an intersection of an uplink subband and an uplink BWP in a frequency domain dimension, and for the second-type time domain resource, the reference point is PRB0 of an uplink BWP.

In some embodiments, the third configuration further includes a first parameter, the first parameter is used to indicate a number of random access channel transmission occasions that are frequency division multiplexed in a time unit, for example, a time unit is a time instance.

Exemplarily, as shown in FIG. 16, the third configuration includes a first parameter and a second parameter, where the first parameter may be denoted as msg1-FDM, and the second parameter may be denoted as msg1-FrequencyStart. In FIG. 16, based on parameters msg1-FDM=2 and msg1-FrequencyStart=0 configured by the third configuration, a set of random access channel transmission occasions 28 for the first-type time domain resource and a set of random access channel transmission occasions 29 for the second-type time domain resource are obtained by selection, where the set of random access channel transmission occasions 28 includes 4 random access channel transmission occasions, and the set of random access channel transmission occasions 29 includes 4 random access channel transmission occasions. Herein, a reference point for the first-type time domain resource is denoted as reference point 30, and a reference point for the second-type time domain resource is denoted as reference point 31, where the reference point 30 is a lowest PRB in the frequency domain dimension of an intersection of an uplink subband and an uplink BWP, and the reference point 31 is PRB0 of the uplink BWP.

In summary, for the apparatus provided in the embodiments of the present disclosure, the network device sets only one set of configurations for the first-type time domain resource and the second-type time domain resource, thus saving signaling overhead. The terminal device only needs to maintain one set of configurations, and by applying different interpretation manners to the first-type time domain resource and the second-type time domain resource, it may still ensure that all random access channel transmission occasions are valid, and may also ensure that the random access channel transmission occasions are at both ends of the uplink BWP or the uplink subband, avoiding resource fragmentation.

In some embodiments, the second transmitting module in the above configuration scheme 1 and configuration scheme 2 may be implemented as the same apparatus or as different apparatuses. That is, a part of related parameters may be configured by the configuration scheme 1, and another part of related parameters may be configured by the configuration scheme 2; or a first part of parameters among the related parameters may be configured by the configuration scheme 1, a second part of parameters may be configured by the configuration scheme 2, and a third part of parameters may be additionally configured based on a network device or may be agreed upon by a protocol. For example, for the frequency domain configuration for the random access channel, the first-type time domain resource corresponds to a first configuration, and the second-type time domain resource corresponds to a second configuration, where the first configuration and the second configuration include a first parameter, and a value of the first parameter corresponding to the first configuration is the same as or different from a value of the first parameter corresponding to the second configuration; and the first-type time domain resource and the second-type time domain resource correspond to a third configuration, where the third configuration includes a second parameter, and the third configuration has different interpretation manners for the first-type time domain resource and the second-type time domain resource. That is, the terminal device is enabled to configure the number of random access channel transmission occasions corresponding to the first-type time domain resource and the number of random access channel transmission occasions corresponding to the second-type time domain resource according to an indication of the second transmitting module in the configuration scheme 1, and configure positions of the random access channel transmission occasions corresponding to the first-type time domain resource and the second-type time domain resource according to the indication of the second transmitting module in the configuration scheme 1.

FIG. 22 shows a structural block diagram of a transmission apparatus for a random access channel provided in an exemplary embodiment of the present disclosure, where the apparatus may be implemented as a terminal device through software or hardware or a combination of both, or implemented as a part of a terminal device, and the apparatus includes:
**a third receiving module 810, configured to** receive at least one of a first configuration, a second configuration and a third configuration, where the first configuration, the second configuration, and the third configuration are used to configure related parameters for transmitting the random access channel, the first configuration corresponds to a first-type time domain resource, the second configuration corresponds to a second-type time domain resource, and the third configuration corresponds to the first-type time domain resource and the second-type time domain resource.

In some embodiments, a time domain resource includes at least one of: a symbol, a symbol group, a slot, a sub slot, a frame, and a subframe. In the embodiments of the present disclosure, a specific type of a time domain resource is not limited.

In some embodiments, the first-type time domain resource and the second-type time domain resource may be understood as two different duplex modes, slots, or symbols, etc. Number, positions, sizes, and frequency domain bandwidths of available uplink resources in the first-type time domain resource and the second-type time domain resource are different; or the number, positions, sizes, and frequency domain bandwidths of random access channels in the first-type time domain resource and the second-type time domain resource are different. For example, the first-type time domain resource is an SBFD symbol, and the second-type time domain resource is a non-SBFD symbol. Herein, the SBFD symbol is a symbol including at least one of an uplink subband, a downlink subband, and a guard band, and the non-SBFD symbol is a symbol not including the above subbands.

In some embodiments, the terminal device receives the first configuration and the second configuration; or the terminal device receives the third configuration; or the terminal device receives the first configuration, the second configuration, and the third configuration.

Herein, descriptions for the first configuration, the second configuration, and the third configuration received by the terminal device may refer to the above "3.1 configuration scheme 1" and "3.2 configuration scheme 2", which are not repeated herein.

In summary, for the apparatus provided in the embodiments of the present disclosure, the terminal device receives at least one of the first configuration, the second configuration, and the third configuration before transmitting the random access channel, where the first configuration, the second configuration, and the third configuration are used to configure related parameters for transmitting the random access channel, the first configuration corresponds to the first-type time domain resource, the second configuration corresponds to the second-type time domain resource, and the third configuration corresponds to the first-type time domain resource and the second-type time domain resource. The first configuration and the second configuration correspond to a case of separate configurations, and the third configuration corresponds to a case of a common configuration; whether it is separate configurations or a common configuration, both may enable the terminal device to select different configurations for different types of time domain resources in a random access procedure.

FIG. 23 shows a structural block diagram of a transmission apparatus for a random access channel provided in an exemplary embodiment of the present disclosure, where the apparatus may be implemented as a terminal device through software or hardware or a combination of both, or implemented as a part of a terminal device, and the apparatus includes:
**a transmission module 910, configured to** transmit a random access channel on a valid random access channel transmission occasion.

Herein, a random access channel transmission occasion is valid in the following situations: the random access channel transmission occasion is within an uplink symbol; or the random access channel transmission occasion is within the first-type time domain resource, and the random access channel transmission occasion is located within a first frequency domain bandwidth.

For example, the random access channel transmission occasion is within the first-type time domain resource, and the random access channel transmission occasion is located within an intersection of an uplink subband and an uplink BWP. Herein, the first-type time domain resource is an SBFD symbol; a random access channel transmission occasion being within an uplink symbol indicates that symbols where the random access channel transmission occasions is located are all uplink symbols; a random access channel transmission occasion being within the first-type time domain resource indicates that symbols where the random access channel transmission occasion is located are all SBFD symbols; that is to say, if symbols where a a random access channel transmission occasion is located include both an uplink symbols and an SBFD symbols, then the random access channel transmission occasion is invalid.

In some embodiments, the first frequency domain bandwidth is a subset of an available uplink bandwidth configured by the network device for the terminal device; the first frequency domain bandwidth is an actual available uplink bandwidth determined in an uplink BWP of the terminal device based on a first duplex mode or the first-type time domain resource. The first duplex mode or the first-type time domain resource may be SBFD.

In some embodiments, an uplink BWP is an uplink BWP activated for an uplink transmission of the terminal device. The first frequency domain bandwidth is a full bandwidth or a part of the bandwidth of an uplink BWP. Since available uplink subbands within different duplex modes or different types of time domain resources are different, even for the same terminal device, the first frequency domain bandwidth may dynamically change.

In some embodiments, the first frequency domain bandwidth may be understood as an available subband, an available uplink subband, an actual available subband or an actual available uplink subband in an uplink BWP.

In some embodiments, the first frequency domain bandwidth is a part of available subbands within an uplink BWP. The first frequency domain bandwidth is an actual available uplink bandwidth for the terminal device. The description for the first frequency domain bandwidth is detailed in the above "1. First frequency domain bandwidth", and will not be repeated herein.

In summary, for the apparatus provided in the embodiments of the present disclosure, a transmission condition of the random access channel is shown, which is to transmit the random access channel on a valid random access channel transmission occasion, and a transmission condition of the valid random access channel transmission occasion is provided, so that the terminal device may successfully perform transmission during the random access channel transmission.

It should be noted that: the apparatus provided in the above embodiments is described only by way of example with the division of the above functional modules. In practical applications, the above functions may be allocated to different functional modules as needed, that is, internal structure of a device is divided into different functional modules to complete all or part of the functions described above.

Regarding the apparatus in this embodiment, a specific manner in which each module performs operations has been described in detail in the embodiments about the method, and will not be described in detail herein.

FIG. 24 shows a structural schematic diagram of a terminal device provided in an exemplary embodiment of the present disclosure. The terminal device 1000 may be configured to perform method steps performed by the terminal device in the above embodiments. The terminal device 1000 may include: a processor 1001, a transceiver 1002, and a memory 1003. Herein, the processor 1001 may be configured to control transmission and/or reception. The transceiver 1002 may be configured to implement functions of transmitting and/or receiving, for example, configured to implement functions of at least one of the above-mentioned first transmitting module 610, first receiving module, problem reporting module, third receiving module 810, and transmission module 910.

The processor 1001 includes one or more processing cores, and processor 1001 performs various functional applications and information processing by running software programs and modules.

The transceiver 1002 may include a receiver and a transmitter. For example, the receiver and the transmitter may be implemented as a same wireless communication component, and the wireless communication component may include a wireless communication chip and a radio frequency antenna.

The memory 1003 may be connected to the processor 1001 and the transceiver 1002.

The memory 1003 may be configured to store computer programs executed by the processor, and the processor 1001 is configured to execute the computer programs, so as to implement various steps in the above method embodiments.

Furthermore, the memory 1003 may be implemented by any type of volatile or non-volatile storage device or a combination thereof, and the volatile or non-volatile storage device includes but is not limited to: a magnetic disk or an optical disc, an electrically erasable programmable read-only memory, an erasable programmable read-only memory, a static random access memory, a read-only memory, a magnetic storage, a flash memory, a programmable read-only memory.

In some embodiments, the processor 1001 is configured to transmit the random access channel according to a related parameter for the random access channel upon the random access channel being transmitted in a first-type time domain resource and/or a related parameter for the random access channel upon the random access channel being transmitted in a second-type time domain resource.

In some embodiments, the processor 1001 is configured to receive at least one of a first configuration, a second configuration and a third configuration, where the first configuration, the second configuration, and the third configuration are used to configure related parameters for transmitting the random access channel, the first configuration corresponds to a first-type time domain resource, the second configuration corresponds to a second-type time domain resource, and the third configuration corresponds to the first-type time domain resource and the second-type time domain resource.

In some embodiments, the processor 1001 is configured to transmit a random access channel on a valid random access channel transmission occasion.

For details not described in detail in this embodiment, reference may be made to the above embodiments, which will not be repeated herein.

FIG. 25 shows a structural schematic diagram of a network device provided in an exemplary embodiment of the present disclosure. The network device 1100 may be configured to perform the method steps performed by the network device in the above embodiments. The network device 1100 may include: a processor 1101, a transceiver 1102, and a memory 1103. Herein, the processor 1101 may be configured to control transmission and/or reception. The transceiver 1102 may be configured to implement the functions of transmitting and/or receiving, for example, configured to implement functions of at least one of the above-mentioned second receiving module 710, the problem receiving module and the second transmitting module.

The processor 1101 includes one or more processing cores, and processor 1101 performs various functional applications and information processing by running software programs and modules.

The transceiver 1102 may include a receiver and a transmitter. For example, the transceiver 1102 may include a wired communication component, and the wired communication component may include a wired communication chip and a wired interface (such as an optical fiber interface). Optionally, the transceiver 1102 may further include a wireless communication component, and the wireless communication component may include a wireless communication chip and a radio frequency antenna.

The memory 1103 may be connected to the processor 1101 and the transceiver 1102.

The memory 1103 may be configured to store computer programs executed by the processor, and the processor 1101 is configured to execute the computer programs, so as to implement various steps performed by the network device in the above method embodiments.

Furthermore, the memory 1103 may be implemented by any type of volatile or non-volatile storage device or a combination thereof, and the volatile or non-volatile storage device includes but is not limited to: a magnetic disk or an optical disc, an electrically erasable programmable read-only memory, an erasable programmable read-only memory, a static random access memory, a read-only memory, a magnetic storage, a flash memory, a programmable read-only memory.

In some embodiments, the processor 1101 is configured to receive the random access channel, where the random access channel is transmitted by a terminal device according to a related parameter for the random access channel upon the random access channel being transmitted in a first-type time domain resource and/or a related parameter for the random access channel upon the random access channel being transmitted in a second-type time domain resource.

For details not described in detail in this embodiment, reference may be made to the above embodiments, which will not be repeated herein.

Embodiments of the present disclosure further provide a computer-readable storage medium, where the storage medium stores computer programs, and the computer programs is used to be executed by a processor, so as to implement the above-mentioned transmission method for the random access channel. In some embodiments, the computer-readable storage medium may include: an ROM (read-only memory), an RAM (random-access memory), SSD (solid state drives), or an optical disc. Herein, the random access memory may include an ReRAM (resistance random access memory) and a DRAM (dynamic random access memory).

Embodiments of the present disclosure further provide a chip, where the chip includes a programmable logic circuit and/or a program instruction, and upon the chip is running, the chip is configured to implement the transmission method for the random access channel as described above.

Embodiments of the present disclosure further provide a computer program product, where the computer program product includes computer programs, the computer programs are stored in a computer-readable storage medium, and a processor reads and executes the computer programs from the computer-readable storage medium, so as to implement the transmission method for the random access channel as described above.

It should be understood that the "indicate/indication/indicating/indicated" mentioned in the embodiments of the present disclosure may be a direct indication, may also be an indirect indication, or may also represent having an association relationship. For example, A indicating B, may mean that A directly indicates B, for example, B may be obtained via A; may also mean that A indirectly indicates B, for example, A indicates C, and B may be obtained via C; may also mean that there is an association relationship between A and B.

In the description of the embodiments of the present disclosure, the terms "correspond/corresponding" may mean that there is a direct correspondence or indirect correspondence between two objects, may also mean that there is an association relationship between the two objects, or may mean relationships such as "indicating" and "being indicated", "configuring" and "being configured".

"Multiple" mentioned herein refers to a number of two or more. "And/or" is an association relationship that describes relevant objects, indicating that three relationships can exist. For example, A and/or B may mean these three situations: A exists alone; A and B exist simultaneously; or B exist alone. A character "/" generally means that there is an "or" relationship between related objects before and after the character "/".

"Greater than or equal to" mentioned herein may represent that an object is greater than, or equal to or greater than another object, and "less than or equal to" may represent that an object is less than or equal to, or less than another object.

In addition, the step numbers described herein only exemplarily show a possible execution order between steps, and in some other embodiments, the above steps may also be performed not according to the order of the numbers, such as performing two differently numbered steps simultaneously, or performing two differently numbered steps in an order opposite to that shown in the figure, and the embodiments of the present disclosure are not limited thereto.

Those skilled in the art should be aware that, in one or more of the above examples, the functions described in the embodiments of the present disclosure may be implemented by hardware, software, firmware, or any combination thereof. When implemented using software, the functions may be stored in a computer-readable storage medium or may be transmitted as one or more instructions or codes on the computer-readable medium. The computer-readable medium includes a computer storage medium and a communication medium, where the communication medium includes any medium that facilitates transfer of a computer program from one place to another place. The storage medium may be any available medium that can be accessed by a general purpose or special purpose computer.

The above are only exemplary embodiments of the present disclosure and are not intended to limit the present disclosure, and any modifications, equivalent replacements, improvements, etc., made within the spirit and principles of the present disclosure shall be included within the protection scope of the present disclosure.

## Claims

1. A transmission method for a random access channel, wherein the method comprises:
transmitting the random access channel according to a related parameter for the random access channel upon the random access channel being transmitted in a first-type time domain resource and/or a related parameter for the random access channel upon the random access channel being transmitted in a second-type time domain resource.

2. The method according to claim 1, wherein a related parameter comprises at least one of: a transmitting power; a target power level; a value of a power ramping counter; a value of a random access preamble transmission counter; a maximum number of transmissions for a random access preamble; a power ramping step for the random access channel; a first parameter, wherein the first parameter is used to indicate a number of random access channel transmission occasions that are frequency division multiplexed in a time unit; or a second parameter, wherein the second parameter is used to indicate an offset value between a lowest random access channel transmission occasion in frequency domain and a reference point.

3. The method according to claim 2, wherein the target power level comprises a first target power level and a second target power level, the first-type time domain resource corresponds to the first target power level, and the second-type time domain resource corresponds to the second target power level;
transmitting the random access channel according to the related parameter for the random access channel upon the random access channel being transmitted in the first-type time domain resource and/or the related parameter for the random access channel upon the random access channel being transmitted in the second-type time domain resource comprises:
in response to that a random access channel transmission occasion corresponds to the first-type time domain resource, transmitting the random access channel, wherein a first transmitting power for the random access channel is determined based on the first target power level; and/or in response to that the random access channel transmission occasion corresponds to the second-type time domain resource, transmitting the random access channel, wherein a second transmitting power for the random access channel is determined based on the second target power level.

4. The method according to claim 3, wherein the first transmitting power is determined based on at least one of the first target power level, the power ramping step, the value of the power ramping counter, and a preamble delta; the second transmitting power is determined based on at least one of the second target power level, the power ramping step, the value of the power ramping counter, and the preamble delta; wherein the preamble delta is determined based on at least one of a random access preamble format and a subcarrier spacing.

5. The method according to claim 2 or 3, wherein the first-type time domain resource corresponds to at least one of a first power ramping counter, a first random access preamble transmission counter, and a first power ramping step; the second-type time domain resource corresponds to at least one of a second power ramping counter, a second random access preamble transmission counter, and a second power ramping step.

6. The method according to claim 5, wherein transmitting the random access channel according to the related parameter for the random access channel upon the random access channel being transmitted in the first-type time domain resource and/or the related parameter for the random access channel upon the random access channel being transmitted in the second-type time domain resource comprises:
in response to that a random access channel transmission occasion corresponds to the first-type time domain resource, transmitting the random access channel, wherein a first transmitting power for the random access channel is determined based on at least one of the first target power level and a value of the first power ramping counter; and/or in response to that the random access channel transmission occasion corresponds to the second-type time domain resource, transmitting the random access channel, wherein a second transmitting power for the random access channel is determined based on at least one of the second target power level and a value of the second power ramping counter.

7. The method according to claim 6, wherein the first transmitting power is determined based on at least one of the first target power level, the first power ramping step, the value of the first power ramping counter, and a preamble delta; the second transmitting power is determined based on at least one of the second target power level, the second power ramping step, the value of the second power ramping counter, and the preamble delta; wherein the preamble delta is determined based on at least one of a random access preamble format and a subcarrier spacing.

8. The method according to any one of claims 2 to 4, wherein the related parameter is determined based on the following steps: for a random access channel transmission, in response to that a corresponding type of a time domain resource changes compared to a type of a time domain resource for a previous transmission, maintaining the power ramping counter unchanged; or in response to that a type of a time domain resource used for a current transmission for the random access channel changes compared to a type of a time domain resource used for the previous transmission, maintaining the power ramping counter unchanged.

9. The method according to any one of claims 2 to 4, wherein the related parameter is determined based on the following steps:
for a random access channel transmission, in response to that a corresponding type of a time domain resource changes compared to a type of a time domain resource for a previous transmission, resetting or initializing the power ramping counter; or in response to that a type of a time domain resource used for a current transmission for the random access channel changes compared to a type of a time domain resource used for the previous transmission, resetting or initializing the power ramping counter.

10. The method according to claim 2, 5, 6, or 7, wherein the related parameter is determined based on at least one of the following steps:
upon initiating a random access procedure, initializing at least one of the first power ramping counter, the first random access preamble transmission counter, the second power ramping counter, or the second random access preamble transmission counter;
in response to that transmitting the random access channel fails and the random access channel corresponds to the first-type time domain resource, incrementing the first random access preamble transmission counter by 1;
in response to that transmitting the random access channel fails and the random access channel corresponds to the second-type time domain resource, incrementing the second random access preamble transmission counter by 1;
in response to that the random access channel corresponds to the first-type time domain resource and a value of the first random access preamble transmission counter is greater than a first initial value, incrementing the first power ramping counter by 1; or
in response that the random access channel corresponds to the second-type time domain resource and a value of the second random access preamble transmission counter is greater than a second initial value, incrementing the second power ramping counter by 1.

11. The method according to any one of claims 2 to 4, wherein the related parameter is determined based on the following steps:
an initial transmission and a retransmission for the random access channel corresponding to a same type of a time domain resource; or a terminal device not expecting that a type of a time domain resource corresponding to a retransmission for the random access channel changes with respect to an initial transmission or with respect to a previous transmission; or the terminal device not expecting that a type of a time domain resource corresponding to a retransmission for the random access channel is different from a type of a time domain resource corresponding to an initial transmission for the random access channel or a previous transmission for the random access channel.

12. The method according to any one of claims 1 to 11, wherein the method further comprises:
receiving a first configuration and/or a second configuration, wherein the first configuration and the second configuration are used to configure a related parameter upon transmitting the random access channel, the first configuration corresponds to the first-type time domain resource, and the second configuration corresponds to the second-type time domain resource.

13. The method according to claim 12, wherein any configuration of the first configuration and the second configuration comprises at least one of the following related parameters: a target power level; a maximum number of transmissions for a random access preamble; a power ramping step for the random access channel.

14. The method according to claim 12 or 13, wherein any configuration of the first configuration and the second configuration comprises at least one of the following related parameters: a first parameter, wherein the first parameter is used to indicate a number of random access channel transmission occasions that are frequency division multiplexed in a time unit; a second parameter, wherein the second parameter is used to indicate an offset value between a lowest random access channel transmission occasion in frequency domain and a reference point, wherein the reference point is a starting physical resource block (PRB0) of an uplink bandwidth part (BWP).

15. The method according to any one of claims 12 to 14, wherein receiving the first configuration and the second configuration comprises:
receiving a first configuration parameter and receiving a second configuration parameter, wherein the first configuration parameter corresponds to the first configuration, and the second configuration parameter corresponds to the second configuration; or receiving the first configuration parameter and an offset value, wherein the first configuration parameter corresponds to the first configuration, and a configuration parameter obtained by offsetting the first configuration parameter based on the offset value corresponds to the second configuration; or receiving the first configuration parameter, wherein the first configuration parameter corresponds to the first configuration; or receiving the second configuration parameter, wherein the second configuration parameter corresponds to the second configuration.

16. The method according to any one of claims 1 to 15, wherein the method further comprises:
receiving a third configuration, wherein the third configuration is used to configure a related parameter upon transmitting the random access channel, and the third configuration corresponds to the first-type time domain resource and the first-type time domain resource.

17. The method according to claim 16, wherein the third configuration comprises a second parameter, the second parameter is configured to indicate an offset value between a lowest random access channel transmission occasion in frequency domain and a reference point; wherein for the first-type time domain resource, the reference point is a lowest physical resource block (PRB) of a first frequency domain bandwidth in the frequency domain; for the second-type time domain resource, the reference point is PRB0 of an uplink BWP.

18. The method according to claim 5, 6, 7, or 10, wherein the method further comprises:
reporting a random access problem based on the first random access preamble transmission counter and a first threshold, or based on the second random access preamble transmission counter and a second threshold, wherein the first threshold is related to a first maximum number, the first maximum number is a maximum number of transmissions for a random access preamble corresponding to the first-type time domain resource, the second threshold is related to a second maximum number, the second maximum number is a maximum number of transmissions for a random access preamble corresponding to the second-type time domain resource; or reporting the random access problem based on the first random access preamble transmission counter, the second random access preamble transmission counter, and a third threshold, wherein the third threshold is related to a maximum number of transmissions for a random access preamble corresponding to the first-type time domain resource and the second-type time domain resource; wherein the random access problem is used to indicate that there is an abnormality in a random access procedure for a terminal device.

19. The method according to any one of claims 1 to 18, wherein a random access channel transmission occasion is valid in the following situations: the random access channel transmission occasion is within an uplink symbol; or the random access channel transmission occasion is within the first-type time domain resource, and the random access channel transmission occasion is located within a first frequency domain bandwidth.

20. The method according to claim 17 or 19, wherein the first frequency domain bandwidth comprises at least one of: an uplink subband; an intersection of the uplink subband and an uplink BWP; an actual uplink subband, the actual uplink subband being an intersection of the uplink subband and the uplink BWP; an actual uplink BWP, the actual uplink BWP being an intersection of the uplink subband and the uplink BWP; an uplink subband part in the uplink BWP; an available uplink subband part in the uplink BWP; an uplink subband part in the uplink BWP within the first-type time domain resource; an available uplink subband part in the uplink BWP within the first-type time domain resource.

21. A transmission method for a random access channel, wherein the method comprises:
receiving the random access channel, wherein the random access channel is transmitted according to a related parameter for the random access channel upon the random access channel being transmitted in a first-type time domain resource and/or in a second-type time domain resource.

22. The method according to claim 21, wherein a related parameter comprises at least one of: a transmitting power; a target power level; a value of a power ramping counter; a value of a random access preamble transmission counter; a maximum number of transmissions for a random access preamble; a power ramping step for the random access channel; a first parameter, wherein the first parameter is used to indicate a number of random access channel transmission occasions that are frequency division multiplexed in a time unit; a second parameter, wherein the second parameter is used to indicate an offset value between a lowest random access channel transmission occasion in frequency domain and a reference point.

23. The method according to claim 21 or 22, wherein the method further comprises:
transmitting a first configuration and/or a second configuration for the random access channel, wherein the first configuration and the second configuration are used to configure a related parameter upon transmitting the random access channel, the first configuration corresponds to the first-type time domain resource, and the second configuration corresponds to the second-type time domain resource.

24. The method according to claim 23, wherein any configuration of the first configuration and the second configuration comprises at least one of the following related parameters: a target power level; a maximum number of transmissions for a random access preamble; a power ramping step for the random access channel.

25. The method according to claim 23 or 24, wherein any configuration of the first configuration and the second configuration comprises at least one of the following related parameters: a first parameter, wherein the first parameter is used to indicate a number of random access channel transmission occasions that are frequency division multiplexed in a time unit; a second parameter, wherein the second parameter is used to indicate an offset value between a lowest random access channel transmission occasion in frequency domain and a reference point, wherein the reference point is a starting physical resource block (PRB0) of an uplink bandwidth part (BWP).

26. The method according to any one of claims 23 to 25, wherein receiving the first configuration and the second configuration comprises:
transmitting a first configuration parameter and transmitting a second configuration parameter, wherein the first configuration parameter corresponds to the first configuration, and the second configuration parameter corresponds to the second configuration; or transmitting the first configuration parameter and an offset value, wherein the first configuration parameter corresponds to the first configuration, and a configuration parameter obtained by offsetting the first configuration parameter based on the offset value corresponds to the second configuration; or transmitting the first configuration parameter, wherein the first configuration parameter corresponds to the first configuration; or transmitting the second configuration parameter, wherein the second configuration parameter corresponds to the second configuration.

27. The method according to any one of claims 21 to 26, wherein the method further comprises:
transmitting a third configuration for the random access channel, wherein the third configuration is used to configure a related parameter upon transmitting the random access channel, and the third configuration corresponds to the first-type time domain resource and the first-type time domain resource.

28. The method according to claim 27, wherein the third configuration comprises a second parameter, the second parameter is configured to indicate an offset value between a lowest random access channel transmission occasion in frequency domain and a reference point; wherein for the first-type time domain resource, the reference point is a lowest physical resource block (PRB) of a first frequency domain bandwidth in the frequency domain; for the second-type time domain resource, the reference point is PRB0 of an uplink BWP.

29. The method according to any one of claims 21 to 28, wherein the method further comprises:
receiving a random access problem reported by a terminal device, wherein the random access problem is reported based on a first random access preamble transmission counter and a first threshold, or based on a second random access preamble transmission counter and a second threshold, the first threshold is related to a first maximum number, the first maximum number is a maximum number of transmissions for a random access preamble corresponding to the first-type time domain resource, the second threshold is related to a second maximum number, the second maximum number is a maximum number of transmissions for a random access preamble corresponding to the second-type time domain resource; or receiving the random access problem reported by the terminal device, wherein the random access problem is reported based on the first random access preamble transmission counter, the second random access preamble transmission counter, and a third threshold, the third threshold is related to a maximum number of transmissions for a random access preamble corresponding to the first-type time domain resource and the second-type time domain resource; wherein the random access problem is used to indicate that there is an abnormality in a random access procedure for the terminal device.

30. The method according to any one of claims 21 to 29, wherein a random access channel transmission occasion is valid in the following situations: the random access channel transmission occasion is within an uplink symbol; or the random access channel transmission occasion is within the first-type time domain resource, and the random access channel transmission occasion is located within a first frequency domain bandwidth.

31. The method according to claim 28 or 30, wherein the first frequency domain bandwidth comprises at least one of: an uplink subband; an intersection of the uplink subband and an uplink BWP; an actual uplink subband, the actual uplink subband being an intersection of the uplink subband and the uplink BWP; an actual uplink BWP, the actual uplink BWP being an intersection of the uplink subband and the uplink BWP; an uplink subband part in the uplink BWP; an available uplink subband part in the uplink BWP; an uplink subband part in the uplink BWP within the first-type time domain resource; an available uplink subband part in the uplink BWP within the first-type time domain resource.

32. A transmission method for a random access channel, wherein the method is performed by a terminal device, and the method comprises:
receiving at least one of a first configuration, a second configuration, and a third configuration, wherein the first configuration, the second configuration, and the third configuration are used to configure related parameters for transmitting the random access channel, the first configuration corresponds to a first-type time domain resource, the second configuration corresponds to a second-type time domain resource, and the third configuration corresponds to the first-type time domain resource and the second-type time domain resource.

33. A transmission method for a random access channel, wherein the method is performed by a terminal device, and the method comprises:
transmitting a random access channel on a valid random access channel transmission occasion; wherein a random access channel transmission occasion is valid in the following situations: the random access channel transmission occasion is within an uplink symbol; or the random access channel transmission occasion is within the first-type time domain resource, and the random access channel transmission occasion is located within a first frequency domain bandwidth.

34. A transmission apparatus for a random access channel, wherein the apparatus comprises:
a first transmitting module, configured to transmit the random access channel according to a related parameter for the random access channel upon the random access channel being transmitted in a first-type time domain resource and/or a related parameter for the random access channel upon the random access channel being transmitted in a second-type time domain resource.

35. A transmission apparatus for a random access channel, wherein the apparatus comprises:
a second receiving module, configured to receive the random access channel, wherein the random access channel is transmitted by a terminal device according to a related parameter for the random access channel upon the random access channel being transmitted in a first-type time domain resource and/or a related parameter for the random access channel upon the random access channel being transmitted in a second-type time domain resource.

36. A transmission apparatus for a random access channel, wherein the apparatus comprises:
a third receiving module, configured to receive at least one of a first configuration, a second configuration, and a third configuration, wherein the first configuration, the second configuration, and the third configuration are used to configure related parameters for transmitting the random access channel, the first configuration corresponds to a first-type time domain resource, the second configuration corresponds to a second-type time domain resource, and the third configuration corresponds to the first-type time domain resource and the second-type time domain resource.

37. A transmission apparatus for a random access channel, wherein the apparatus comprises:
a transmission module, configured to transmit a random access channel on a valid random access channel transmission occasion; wherein a random access channel transmission occasion is valid in the following situations: the random access channel transmission occasion is within an uplink symbol; or the random access channel transmission occasion is within the first-type time domain resource, and the random access channel transmission occasion is located within a first frequency domain bandwidth.

38. A terminal device, wherein the terminal device comprises:
a processor; a transceiver connected to the processor; a memory configured to store executable instructions for the processor;
wherein the processor is configured to load and execute the executable instructions to implement the transmission method for the random access channel according to any one of claims 1 to 21, or the transmission method for the random access channel according to claim 32, or the transmission method for the random access channel according to claim 33.

39. A network device, wherein the network device comprises:
a processor; a transceiver connected to the processor; a memory configured to store executable instructions for the processor;
wherein the processor is configured to load and execute the executable instructions to implement the transmission method for the random access channel according to any one of claims 21 to 31.

40. A computer-readable storage medium, wherein the computer-readable storage medium stores at least one piece of program, and the at least one piece of program is loaded and executed by a processor to implement the transmission method for the random access channel according to any one of claims 1 to 33.

41. A chip, wherein the chip comprises a programmable logic circuit and/or program instructions, and in response to that the chip runs on a terminal device or a network device, the chip is configured to implement the transmission method for the random access channel according to any one of claims 1 to 33.

42. A computer program product, wherein the computer program product comprises computer instructions, and the computer instructions are stored in a computer-readable storage medium, and a processor acquires the computer instructions from the computer-readable storage medium, and the processor executes the computer instructions to implement the transmission method for the random access channel according to any one of claims 1 to 33.
